# EUROPÄISCHE PATENTANMELDUNG

(11) **EP 4 696 528 A1**
(43) Veröffentlichungstag der Anmeldung: **18.02.2026**
(21) Anmeldenummer: 25191208.5
(22) Anmeldetag: 23.07.2025
(51) Int. Cl.: B60D 1/06, B60D 1/24, B60D 1/26, B60D 1/54

(54) **ANHÄNGEKUPPLUNG**

(30) Priorität: 15.08.2024 DE 102024123337
(71) Anmelder: ACPS Automotive GmbH, 74379 Ingersheim (DE)
(72) Erfinder: Gentner, Wolfgang, 71711 Steinheim (DE)
(74) Vertreter: Hoeger, Stellrecht & Partner Patentanwälte mbB

(57) **Zusammenfassung**

Um bei eine Anhängekupplung umfassend einen zwischen einer Arbeitsstellung und einer Ruhestellung bewegbaren Kugelhals der an einem ersten Ende mit einer Schwenklagereinheit verbunden ist und einer an einem zweiten Ende eine Kupplungskugel trägt, wobei mittels der Schwenklagereinheit, der Kugelhals bei Ausführung einer Schwenkbewegung um eine Schwenkachse zwischen der Arbeitsstellung und der Ruhestellung verschwenkbar ist, und eine zwischen einem Führungskörper und einem Schwenklagerkörper der Schwenklagereinheit wirkende Drehblockiereinrichtung mit einerseits mindestens zwei Drehblockiereinheiten, von denen jede einen eine möglichst einfache konstruktive und sichere Lösung zu schaffen, wird vorgeschlagen, dass eine Mehrfachblockiereinrichtung vorgesehen ist, welche einen Blockierkörper umfasst, der in eine den Schwenklagerkörper und den Führungskörper in der Ruhestellung relativ zueinander blockierende Ruhestellungsblockierstellung, in eine den Betätigungskörper in der Drehblockierstellung sichernde Sicherungsstellung und in eine zwischen der Ruhestellungsblockierstellung und der Sicherungsstellung liegende Zwischenstellung bewegbar ist.

## Beschreibung

Die Erfindung betrifft eine Anhängekupplung, umfassend einen zwischen einer Arbeitsstellung und einer Ruhestellung bewegbaren Kugelhals, der an einem ersten Ende mit einer Schwenklagereinheit verbunden ist und an einem zweiten Ende eine Kupplungskugel trägt, wobei mittels der Schwenklagereinheit der Kugelhals bei Ausführung einer Schwenkbewegung um eine Schwenkachse zwischen der Arbeitsstellung und der Ruhestellung verschwenkbar ist, und eine zwischen einem Führungskörper und einem Schwenklagerkörper der Schwenklagereinheit wirkende Drehblockiereinrichtung mit einerseits mindestens zwei Drehblockiereinheiten, von denen jede einen Drehblockierkörper aufweist, der mittels einer Führungsaufnahme des Führungskörpers in einer Führungsrichtung bewegbar geführt ist und der in der Führungsrichtung durch eine quer zur Führungsrichtung verlaufende, an einem Betätigungskörper vorgesehene Druckfläche bewegbar ist, und mit andererseits mindestens zwei Aufnahmen, wobei durch eine Bewegung des Betätigungskörpers in einer Betätigungsrichtung die Drehblockierkörper aller Drehblockiereinheiten in der Führungsrichtung bewegbar und beaufschlagbar sind und wobei die Drehblockierkörper aller Drehblockiereinheiten in der Arbeitsstellung durch eine Bewegung in der Führungsrichtung in eine Drehblockierstellung bringbar sind und in dieser mittels jeweils einer der Aufnahmen in Eingriff kommen, um eine Schwenkbewegung des Schwenklagerkörpers und des Führungskörpers relativ zueinander um die Schwenkachse zu blockieren, und in eine Lösestellung bringbar sind, und in dieser mit der jeweiligen Aufnahme außer Eingriff stehen und die Relativbewegung zwischen dem Schwenklagerkörper und dem Führungskörper freigeben, wobei in allen vorgesehenen relativen Schwenkstellungen zwischen Schwenklagerkörper und Führungskörper einschließlich der Ruhestellung sowie ausgenommen der Arbeitsstellung eine Bewegung des Betätigungskörpers in der Betätigungsrichtung und folglich auch ein kraftbeaufschlagtes Eingreifen der Drehblockierkörper jeder der Drehblockiereinheiten in jeweils eine der Aufnahmen blockiert ist.

Eine derartige Anhängekupplung ist aus dem Stand der Technik, beispielsweise der DE 10 2020 111 469 bekannt.

Der Erfindung liegt daher die Aufgabe zugrunde, eine möglichst einfache konstruktive Lösung zu schaffen.

Diese Aufgabe wird bei einer Anhängekupplung der vorstehend beschriebenen Art erfindungsgemäß dadurch gelöst, dass eine Mehrfachblockiereinrichtung vorgesehen ist, welche einen Blockierkörper umfasst, der in eine den Schwenklagerkörper und den Führungskörper in der Ruhestellung relativ zueinander blockierende Ruhestellungsblockierstellung, in eine den Betätigungskörper in der Drehblockierstellung sichernde Sicherungsstellung und in eine zwischen der Ruhestellungsblockierstellung und der Sicherungsstellung liegende Zwischenstellung bewegbar ist.

Der Vorteil der erfindungsgemäßen Lösung ist somit darin zu sehen, dass mit dieser eine einfach zu realisierende Blockierung der Schwenklagereinheit in der Ruhestellung und außerdem eine Sicherung der Drehblockierstellung der Schwenklagereinheit in einer Sicherungsstellung erlaubt.

Dabei ist es besonders vorteilhaft, wenn der Blockierkörper an dem Führungskörper der Schwenklagereinheit geführt ist.

Eine Möglichkeit zur Führung des Blockierkörpers an dem Führungskörper sieht vor, dass der Blockierkörper in einer am Führungskörper angeordneten Führung geführt ist.

Insbesondere ist hierzu vorgesehen, dass die Führung für den Blockierkörper in einem an den Betätigungskörper angrenzenden Wandbereich des Führungskörpers angeordnet ist.

Besonders günstig ist es, wenn dieser Wandbereich zwischen dem Betätigungskörper und dem Schwenklagerkörper, insbesondere einem Flansch desselben, liegt, so dass der Blockierkörper sowohl mit dem Betätigungskörper als auch mit dem Schwenklagerkörper zusammenwirken kann, um sowohl die Sicherungsstellung als auch die Ruhestellungsblockierstellung zu realisieren.

Prinzipiell wäre es denkbar, den Blockierkörper radial zur Schwenkachse zu bewegen.

Für die konstruktive Lösung ist es jedoch hinsichtlich der Einfachheit derselben von besonderem Vorteil, wenn der Blockierkörper in der Führung in Richtung ungefähr parallel zur Schwenkachse bewegbar ist.

Ferner sieht eine vorteilhafte Lösung vor, dass der Blockierkörper in der Ruhestellung in eine Aufnahme im Schwenklagerkörper eingreift.

Darüber hinaus ist es vorteilhaft, wenn der Blockierkörper in der Sicherungsstellung in eine Aufnahme in dem Betätigungskörper eingreift.

Um den Blockierkörper in der Zwischenstellung einfach positionieren zu können, ist vorzugsweise vorgesehen, dass der Blockierkörper in der Zwischenstellung zwischen der Aufnahme in dem Betätigungskörper und der Aufnahme in der Schwenklagereinheit angeordnet ist.

Um sowohl die Sicherungsstellung als auch die Ruhestellungsblockierstellung in einfacher Weise fixieren zu können, ist vorzugsweise vorgesehen, dass der Blockierkörper sowohl in der Sicherungsstellung als auch in der Ruhestellungsblockierstellung ausgehend und geführt durch die Führung jeweils mit einem Ende in die jeweilige Aufnahme eingreift.

Im Zusammenhang mit der bisherigen Erläuterung der einzelnen Lösungen wurde nicht näher darauf eingegangen, wie eine Betätigung des Blockierkörpers und eine Festlegung desselben in der Sicherungsstellung, der Zwischenstellung und der Ruhestellungsblockierstellung erfolgen soll.

Dies lässt sich vorteilhafterweise dadurch realisieren, dass der Blockierkörper durch eine Blockierbetätigungseinrichtung in der Sicherungsstellung, der Zwischenstellung und der Ruhestellungsblockierstellung festlegbar ist.

Die Blockierbetätigungseinrichtung könnte in unterschiedlichster Art und Weise ausgebildet sein.

So sieht eine vorteilhafte Lösung vor, dass die Blockierbetätigungseinrichtung eine Kulissenführung und einen durch diese bewegbaren Kulissenfolger umfasst, der mit dem Blockierkörper gekoppelt ist.

Des Weiteren ist vorzugsweise vorgesehen, dass der Kulissenfolger durch die Kulissenführung ungefähr parallel zur Schwenkachse bewegbar ist, um dadurch in einfacher Weise den Blockierkörper zu betätigen.

Ferner ist hierzu vorgesehen, dass die Kulissenführung quer zur Schwenkachse bewegbar ist.

Vorzugsweise ist dabei vorgesehen, dass die Kulissenführung durch die Blockierbetätigungseinrichtung bewegbar ist.

Beispielsweise ist hierzu vorgesehen, dass die Blockierbetätigungseinrichtung einen die Kulissenführung tragenden und relativ zum Kulissenfolger drehend bewegbaren Körper umfasst.

Ferner ist die Kulissenführung vorzugsweise so ausgebildet, dass diese mindestens eine auf den Kulissenfolger einwirkende Kulissenbahn aufweist.

Noch vorteilhafter ist es, wenn die Kulissenführung zwei auf den Kulissenfolger einwirkende und diesen zwischen sich führende Kulissenbahnen aufweist.

Dabei ist zweckmäßigerweise vorgesehen, dass beide Kulissenbahnen zusammen den Kulissenfolger in einer die Sicherungsstellung vorgebenden Stellung festlegen.

Des Weiteren ist vorzugsweise vorgesehen, dass beide Kulissenbahnen zusammen den Kulissenfolger in eine die Ruhestellungsblockierstellung vorgebenden Stellung festlegen.

Die vorstehenden Funktionen lassen sich vorzugsweise dadurch realisieren, dass eine erste Kulissenbahn einen den Kulissenfolger von der die Sicherungsstellung festlegenden Stellung in eine die Zwischenstellung festlegende Stellung bewegbaren Bahnabschnitt aufweist.

Ferner ist vorzugsweise vorgesehen, dass die erste Kulissenbahn einen den Kulissenfolger von der die Zwischenstellung festlegenden Stellung in eine diesem in Richtung einer der Ruhestellungsblockierstellung entsprechenden Stellung beaufschlagenden Bahnabschnitt umfasst.

Insbesondere hat es sich dabei als vorteilhaft erwiesen, wenn der in Richtung der der Ruhestellungsblockierstellung entsprechenden Stellung wirkende Bahnabschnitt den Kulissenfolger federelastisch in dieser Richtung beaufschlagt.

Insbesondere ist hierbei vorgesehen, dass der in Richtung der der Ruhestellungsblockierstellung entsprechenden Stellung wirkende Bahnabschnitt durch einen federelastisch bewegbaren Abschnitt der ersten Kulissenbahn gebildet ist.

Eine derartige Ausbildung der ersten Kulissenbahn hat den Vorteil, dass dadurch der Kulissenfolger federelastisch beaufschlagt werden kann und somit bei der Beaufschlagung in Richtung der der Ruhestellungsblockierstellung entsprechenden Stellung nicht zwingend in die Ruhestellungsblockierstellung eintreten muss, sondern erst dann in die Ruhestellungsblockierstellung eintreten kann, wenn die Aufnahme im Schwenklagerkörper mit dem Blockierkörper in der Zwischenstellung fluchtet.

Wenn der Blockierkörper in der Ruhestellungsblockierstellung steht, wird dieser in der Ruhestellungsblockierstellung dadurch festgelegt, dass der Kulissenfolger zwischen dem federelastisch bewegbaren Abschnitt der ersten Kulissenbahn im Zusammenwirken mit der zweiten Kulissenbahn festgelegt ist, wobei der federelastisch bewegbare Abschnitt der ersten Kulissenbahn sich durch Erreichen der Ruhestellungsblockierstellung durch den Blockierkörper sich in Richtung der zweiten Kulissenbahn bewegt hat, um somit die Ruhestellungsblockierstellung zwischen den federelastisch bewegbaren Abschnitt der ersten Kulissenbahn und der zweiten Kulissenbahn festzulegen.

Um wiederum die Ruhestellungsblockierstellung zu lösen, ist vorgesehen, dass die zweite Kulissenbahn einen Bahnabschnitt aufweist, welcher den Kulissenfolger von der der Ruhestellungsblockierstellung entsprechenden Stellung in eine der Zwischenstellung entsprechende Stellung bewegt.

Um außerdem wieder von der Zwischenstellung die Sicherungsstellung erreichen zu können, ist vorgesehen, dass die zweite Kulissenbahn einen Bahnabschnitt aufweist, welcher den Kulissenfolger der der Zwischenstellung entsprechenden Stellung, in die der Sicherungsstellung entsprechende Stellung bewegt.

Insbesondere ist bei diesen Ausführungsbeispielen vorgesehen, dass die erste Kulissenbahn durch eine Bewegung der Kulissenführung in einer ersten Drehrichtung wirksam ist und dass die zweite Kulissenbahn durch eine Bewegung der Kulissenführung in einer der ersten Drehrichtung entgegengesetzten Drehrichtung wirksam ist.

Hinsichtlich der Betätigung der Blockierbetätigungseinrichtung zur Bewegung des Blockierkörpers wurden bislang ebenfalls keine näheren Angaben gemacht.

Prinzipiell wäre es denkbar, die Blockierbetätigungseinrichtung mit einer steuerbaren Antriebseinheit zu koppeln.

Besonders vorteilhaft ist es jedoch, wenn die Blockierbetätigungseinrichtung durch eine Betätigungseinrichtung für die Drehblockiereinrichtung antreibbar ist, da sich dadurch in einfacher Weise, die von der Blockierbetätigungseinrichtung auszulösenden Bewegungen des Blockierkörpers mit der Betätigung der Drehblockiereinrichtung koordinieren lassen.

Insbesondere ist dabei vorgesehen, dass die Blockierbetätigungseinrichtung mit der Betätigungseinrichtung für die Drehblockiereinrichtung gekoppelt ist.

Diese Kopplung lässt sich vorzugsweise dadurch erreichen, dass die Kulissenbahn an einem drehbaren Körper eines Planetengetriebes der Betätigungseinrichtung für die Drehblockiereinrichtung angeordnet ist.

Insbesondere ist dabei vorzugsweise vorgesehen, dass die Kulissenbahn an einem Hohlrad eines Planetengetriebes der Betätigungseinrichtung angeordnet ist.

Um die Mehrfachblockiereinrichtung optimal überwachen zu können, ist vorzugsweise vorgesehen, dass die Mehrfachblockiereinrichtung einen die Stellungen des Blockierkörpers erfassenden Sensoreinheit aufweist.

Dabei ist die Sensoreinheit vorzugsweise so ausgebildet, dass sie die Sicherungsstellung, die Ruhestellungsblockierstellung und die Zwischenstellung erfasst.

Insbesondere umfasst die Sensoreinheit beispielsweise einen oder mehrere Taster als Sensoren, welche Tastflächen erfassen.

Im Falle eines als Taster ausgebildeten Sensors ist die Sensoreinheit durch Erfassen der Positionen des Sensorbetätigungselements beispielsweise in der Lage, die Zwischenstellung von der Sicherungsstellung oder der Ruhestellungsraststellung des Blockierkörpers zu unterscheiden.

Im Falle mehrerer Taster, beispielsweise zwei Tastern, ist die Sensoreinheit durch Erfassen der Positionen des Sensorbetätigungselements in der Lage, mittels einer Auswerteeinheit jede der Stellungen des Blockierkörpers, wie Sicherungsstellung, Zwischenstellung und Ruhestellungsraststellung, von der jeweils anderen Stellung zu unterscheiden.

Eine weitere vorteilhafte Lösung sieht vor, dass die Sensoreinheit als Magnetfeldsensor ausgebildet ist, welcher unterschiedliche Magnetfelder erfasst, je nach dem die Sicherungsstellung, die Ruhestellungsblockierstellung oder die Zwischenstellung vorliegen, und all diese somit unterscheiden kann.

Im Falle eines Magnetfeldrichtungen im Raum erfassenden Sensors ist die Sensoreinheit durch Erfassen eines Verlaufs des Magnetfeldes des Sensorbetätigungselements mittels einer Auswerteeinheit in der Lage, ebenfalls jede der Stellungen des Blockierkörpers, wie Sicherungsstellung, Zwischenstellung und Ruhestellungsraststellung, von der jeweils anderen Stellung zu unterscheiden.

Insbesondere ist zur Kopplung des Kulissenfolgers mit dem Blockierkörper vorgesehen, dass dieser mittels eines Übertragungselements mit dem Blockierkörper gekoppelt ist.

In diesem Fall lässt sich in einfacher Weise das Übertragungselement mit einem Sensorbetätigungselement koppeln, so dass die Sensoreinheit in der Lage ist, die Stellungen des Übertragungselements zu erfassen.

Das Sensorbetätigungselement kann dabei unterschiedliche abtastbare Elemente aufweisen, die die Sensoreinheit erfasst oder im Fall einer Sensoreinheit mit einem Magnetfeldsensor je nach Position desselben unterschiedlich relativ zur Sensoreinheit im Raum ausgerichtete Magnetfelder erfasst.

Hinsichtlich der Blockierung des Betätigungskörpers in der Betätigungsrichtung in allen relativen Schwenkstellungen zwischen dem Schwenklagerkörper und dem Führungskörper einschließlich der Ruhestellung wurden bislang keine näheren Angaben gemacht.

So sieht eine vorteilhafte Lösung vor, dass zwischen den Aufnahmen Blockierflächen verlaufen, gegen welche die Drehblockierkörper anlegbar sind und von welchen ausgehend sich die Aufnahmen erstrecken, dass die Drehblockiereinheiten und die Aufnahmen um die Schwenkachse herum derart in Winkelabständen voneinander angeordnet sind, dass in allen vorgesehenen relativen Schwenkstellungen zwischen Schwenklagerkörper und Führungskörper einschließlich der Ruhestellung sowie ausgenommen die Arbeitsstellung der Drehblockierkörper mindestens einer der Drehblockiereinheiten einer der Blockierflächen gegenüberliegt und somit diese Blockierfläche, insbesondere bei einer Kraftbeaufschlagung des Betätigungskörpers in Richtung von Betätigungsrichtung, eine Bewegung des Betätigungskörpers in der Betätigungsrichtung und folglich auch ein kraftbeaufschlagtes Eingreifen der Drehblockierkörper jeder Drehblockiereinheit in jeweils eine der Aufnahmen blockiert.

Der Vorteil der erfindungsgemäßen Lösung ist somit darin zu sehen, dass die Fixierung des Betätigungskörpers in der Lösestellung in einfacher und zuverlässiger Weise mittels der ohnehin vorhandenen Drehblockierkörper realisiert werden kann und dass außerdem eine signifikante Geräuschminderung beim Übergang dieser Anhängekupplung von der Lösestellung in die Drehblockierstellung der Drehblockierkörper erfolgt, da die Drehblockierkörper in einfacher Weise von den Blockierflächen in die Aufnahmen gleiten können.

Alternativ oder ergänzend dazu ist ferner bei einer Anhängekupplung der eingangs beschriebenen Art vorgesehen, dass die Drehblockiereinheiten zur Bildung einer Drehblockierkonfiguration in Winkelabständen um die Schwenkachse herum angeordnet sind, dass die Aufnahmen zur Bildung einer Aufnahmenkonfiguration in denselben Winkelabständen um die Schwenkachse angeordnet sind wie die Drehblockiereinheiten, dass die Drehblockierkonfiguration und die Aufnahmenkonfiguration in der Arbeitsstellung deckungsgleich zueinander stehen, so dass die Drehblockierkörper in die Aufnahmen eingreifen können, und dass die Winkelabstände zwischen den Drehblockiereinheiten der Drehblockierkonfiguration und die Winkelabstände zwischen den Aufnahmen der Aufnahmenkonfiguration so gewählt sind, dass die Drehblockierkonfiguration und die Aufnahmenkonfiguration nur in der Arbeitsstellung deckungsgleich zueinander stehen und somit nur in dieser einen Übergang des Betätigungskörpers von der Lösestellung in die Drehblockierstellung erlauben, während in den anderen Schwenkstellungen des Schwenklagerkörpers ein Übergang des Betätigungskörpers von der Lösestellung in die Drehblockierstellung nicht möglich ist.

Alternativ oder ergänzend zu den vorstehend beschriebenen Lösungen sieht eine weitere vorteilhafte Lösung vor, dass die Winkelabstände mindestens einer der Drehblockiereinheiten zu den in einer Umlaufrichtung um die Schwenkachse sowie zu den entgegengesetzt zu dieser Umlaufrichtung benachbart angeordneten Drehblockiereinheiten ungleich sind und dass in der Arbeitsstellung die Aufnahmen derart angeordnet sind, dass die Drehblockierkörper jeder der Drehblockiereinheiten mit jeweils einer der Aufnahmen in Eingriff bringbar sind und dass in allen für den Betrieb vorgesehenen relativen Schwenkstellungen zwischen Schwenklagerkörper und Führungskörper einschließlich der Ruhestellung, die außerhalb der Arbeitsstellung liegen, der Drehblockierkörper mindestens einer der Drehblockiereinheiten einer zwischen den Aufnahmen liegenden Blockierfläche gegenüberliegt, und somit diese Blockierfläche, insbesondere bei einer Kraftbeaufschlagung des Betätigungskörpers, eine Bewegung des Betätigungskörpers von der Lösestellung in die Drehblockierstellung blockiert.

Die Ungleichheit der Winkelabstände beträgt, ausgehend von gleichen Winkelabständen, beispielsweise mindestens eine Abweichung von gleichen Winkelabständen in der Größenordnung von der Hälfte des Winkelbereichs über den sich jede der Aufnahmen erstreckt, vorzugsweise bis zu dem Winkelbereich, über den sich jede der Aufnahmen erstreckt.

Der Vorteil aller vorstehend genannten erfindungsgemäßen Lösungen ist darin zu sehen, dass damit eine konstruktiv einfache Lösung zur Verfügung steht, um den Betätigungskörper in der Lösestellung zu halten und nur in der Arbeitsstellung in die Drehblockierstellung übergehen zu lassen, wobei insbesondere vorteilhafterweise die ohnehin für die Drehblockiereinrichtung vorhandenen Drehblockierkörper eingesetzt werden können.

Im Zusammenhang mit der erfindungsgemäßen Lösung hat es sich als besonders günstig erwiesen, wenn die Zahl der Drehblockiereinheiten der Zahl der Aufnahmen entspricht.

Ferner ist es, insbesondere um eine räumlich insbesondere in Richtung der Schwenkachse, kompakt bauende Lösung zu erhalten, von Vorteil, wenn die Drehblockierkörper aller Drehblockiereinheiten symmetrisch zu einer senkrecht zur Schwenkachse verlaufenden und diese schneidenden geometrischen Ebene ausgebildet und angeordnet sind.

Eine besonders vorteilhafte Lösung sieht vor, dass die Blockierflächen den Drehblockierkörpern der Drehblockiereinheiten zugewandt, insbesondere quer, vorzugsweise senkrecht, zur Führungsrichtung verlaufen, so dass die Drehblockierkörper beim Anliegen an diesen mit geringem oder nahezu keinem Bewegungswiderstand über die Blockierflächen bewegbar sind.

Besonders vorteilhaft ist es, wenn die Blockierflächen in einem definierten Radius um die Schwenkachse verlaufen, so dass bei der Schwenkbewegung die an diesen Blockierflächen anliegenden Drehblockierkörper keine zusätzliche radiale Bewegung zur Schwenkachse durchführen.

Ferner ist vorteilhafterweise vorgesehen, dass die Blockierflächen bis zu Öffnungsrändern der Aufnahmen verlaufen und in diese übergehen.

Insbesondere ist vorzugsweise vorgesehen, dass die Öffnungsränder der Aufnahmen in demselben radialen Abstand von der Schwenkachse liegen wie die Blockierflächen, so dass ein Bewegen der an den Blockierflächen anliegenden Drehblockierkörper über die Öffnungsränder hinweg in die Aufnahmen hinein ohne einen zusätzlichen Bewegungswiderstand erfolgen kann, wie er beispielsweise bei unterschiedlichen Abständen der Öffnungsränder von der Schwenkachse in Relation zum Abstand der Blockierflächen von der Schwenkachse auftreten würde.

Insbesondere hat diese Lösung auch noch den Vorteil, dass damit ein einfacher und bewegungswiderstandsfreier Übergang von der Arbeitsstellung in eine Schwenkstellung erfolgt, da auch in diesem Fall die Drehblockierkörper die Aufnahmen im Wesentlichen ohne Bewegungswiderstand über die Öffnungsränder verlassen und sich in Richtung der Blockierflächen bewegen können.

Besonders vorteilhaft ist es, wenn mindestens einer der Drehblockierkörper der Drehblockiereinheiten bei einer Schwenkbewegung in Richtung der Arbeitsstellung, insbesondere während der von der Ruhestellung bis zur Arbeitsstellung verlaufenden Schwenkbewegung, an einer der Blockierflächen anliegt, insbesondere durch den Betätigungskörper kraftbeaufschlagt anliegt, wobei die Kraftbeaufschlagung beispielsweise durch für die Lösestellung der Drehblockierkörper vorgesehene Rückzugsaufnahmen im Betätigungskörper erfolgt, die mit quer zur Führungsrichtung verlaufenden Flächen auf die Drehblockierkörper einwirken.

Insbesondere ist es günstig, wenn die Drehblockierkörper vor Erreichen der Arbeitsstellung an den Blockierflächen kraftbeaufschlagt anliegen und anschließend an Öffnungsrändern der Aufnahmen kraftbeaufschlagt anliegend in die Aufnahmen eintreten, so dass dadurch die Geräuschausprägung beim Übergang der Drehblockierkörper von der Lösestellung in die Drehblockierstellung möglichst gering gehalten werden kann, im Gegensatz zu einem Fall, in dem die Drehblockierkörper zunächst mit Spiel zu den Blockierflächen stehen, dann kraftbeaufschlagt an die Blockierflächen angelegt werden und dann von den Blockierflächen in die Aufnahmen eintreten oder dem Fall, dass die Drehblockierkörper mit Spiel zu den Blockierflächen liegend sich in die Arbeitsstellung bewegen und in der Arbeitsstellung die Kraftbeaufschlagung erfahren, um in die Aufnahmen einzutreten.

Hinsichtlich der Ausbildung der Aufnahmen ist es besonders vorteilhaft, wenn sich die Aufnahmen ausgehend von den Blockierflächen in der Führungsrichtung, insbesondere mit mindestens einer Komponente in radialer Richtung zur Schwenkachse, erstrecken, so dass die Drehblockierkörper bei der Bewegung in der Führungsrichtung keinerlei zusätzliche Umlenkung beim Eintritt in die Aufnahmen erfahren.

Ferner wurden hinsichtlich der Ausrichtung der Aufnahmen und der Blockierflächen relativ zur Führungshülse keine näheren Angaben gemacht.

So sieht eine vorteilhafte Lösung vor, dass die Aufnahmen und die Blockierflächen der Führungshülse zugewandt angeordnet sind, so dass dadurch eine umlenkungsfreie Bewegung der Drehblockierkörper in Richtung der Blockierflächen oder in Richtung der Aufnahmen erfolgen kann.

Prinzipiell könnte der Führungskörper oder der Schwenklagerkörper um die Schwenkachse schwenkbar sein.

Eine konstruktiv besonders günstige Lösung sieht jedoch vor, dass der Führungskörper der fahrzeugfest angeordnete Teil der Schwenklagereinheit ist.

Ferner ist hinsichtlich der Ausbildung des Führungskörpers vorgesehen, dass in dem Führungskörper alle Führungsaufnahmen für die Drehblockierkörper der Drehblockiereinheiten angeordnet sind.

Darüber hinaus ist es zweckmäßig, wenn die Führungsrichtung mit mindestens einer Komponente in radialer Richtung zur Schwenkachse verläuft, so dass dadurch die Drehblockierkörper zumindest mit einer Komponente in radialer Richtung zur Schwenkachse zwischen der Drehblockierstellung und der Lösestellung bewegt werden und somit keine ausschließliche Bewegung der Drehblockierkörper in Richtung der Schwenkachse erfolgt, um diese zwischen der Drehblockierstellung und der Lösestellung zu bewegen.

Eine konstruktiv besonders günstige Lösung sieht vor, dass der Führungskörper eine Führungshülse mit Führungsaufnahmen für die Drehblockierkörper der Drehblockiereinheiten aufweist und dass insbesondere die Drehblockierkörper durch den sich in radialer Richtung an den Schwenklagerkörper anschließenden Führungskörper geführt sind.

Im Zusammenhang mit der Erläuterung der voranstehenden Ausführungsbeispiele wurde nicht näher darauf eingegangen, wie der Schwenklagerkörper der Schwenklagereinheit relativ zum Führungskörper schwenkbar gelagert sein soll.

Hierzu könnte beispielsweise ein dafür vorgesehenes Lager an der Schwenklagereinheit vorgesehen sein, das unabhängig vom Führungskörper ist.

Konstruktiv besonders einfach ist es jedoch, wenn zwischen dem Führungskörper und dem Schwenklagerkörper ein Schwenklager vorgesehen ist.

Hinsichtlich der Bewegung der Betätigungskörper in Bezug auf den Führungskörper wurden ebenfalls keine näheren Angaben gemacht.

So sieht eine vorteilhafte Lösung vor, dass der Betätigungskörper relativ zu dem Führungskörper bewegbar geführt ist.

Dabei könnte der Betätigungskörper relativ zu dem Führungskörper in Richtung der Schwenkachse zwischen der Drehblockierstellung und der Lösestellung bewegbar sein, um die Drehblockierkörper in den entsprechenden Stellungen zu bewegen.

Eine hinsichtlich des Raumbedarfs optimierte Lösung sieht vor, dass der Betätigungskörper um die Schwenkachse drehbar angeordnet ist und insbesondere sich über einen Winkelbereich um die Schwenkachse erstreckende und in Richtung parallel zur Führungsrichtung variierende Keilflächen, vorzugsweise kombiniert mit Rückzugsaufnahmen aufweist.

Darüber hinaus wurden hinsichtlich der Anordnung der Aufnahmen und der Blockierflächen ebenfalls keine näheren Angaben gemacht.

So sieht eine vorteilhafte Lösung vor, dass die Aufnahmen und die Blockierflächen an dem Schwenklagerkörper angeordnet sind.

Des Weiteren ist eine konstruktive Lösung hinsichtlich der Aufnahme der wirkenden Kräfte dann besonders günstig, wenn der Betätigungskörper von dem Führungskörper umschlossen ist und wenn insbesondere der Schwenklagerkörper den Führungskörper umgreift.

Hinsichtlich der Anordnung der Drehblockierkörper relativ zum Betätigungskörper wurden ebenfalls keine näheren Angaben gemacht.

Prinzipiell könnten die Drehblockierkörper so angeordnet sein, dass sie von dem Betätigungskörper umgriffen werden.

Für den räumlichen Aufbau der erfindungsgemäßen Anhängekupplung hat es sich ebenfalls als vorteilhaft erwiesen, wenn die Drehblockierkörper um den Betätigungskörper herum angeordnet sind.

Als konstruktiv besonders vorteilhaft hat es sich erwiesen, wenn der Schwenklagerkörper einen den Führungskörper außenliegend umschließenden Außenkörper bildet, der relativ zu dem Führungskörper in Richtung der Schwenkachse unverschiebbar angeordnet ist, und wenn insbesondere der Schwenklagerkörper ein zumindest einen Teilbereich der Drehblockiereinheit außenliegend umschließenden Außenkörper bildet, der relativ zu dem Führungskörper in Richtung der Schwenkachse unverschiebbar angeordnet ist, so dass dadurch der Schwenklagerkörper beim Übergang der Drehblockierkörper von der Drehblockierstellung in die Lösestellung und umgekehrt keine Bewegung in Richtung der Schwenkachse durchführt, sondern in Richtung der Schwenkachse unverschiebbar angeordnet werden kann.

Eine derartige Anordnung des Schwenklagerkörpers hat einerseits den Vorteil eines günstigen räumlichen Aufbaus der Schwenklagereinheit selbst und den Vorteil einer relativ einfachen Abdichtung der Schwenklagereinheit, da der Schwenklagerkörper keine Bewegungen in axialer Richtung der Schwenkachse durchführt.

Vorzugsweise ist zwischen einem Gehäuse der Schwenklagereinheit und mindestens einer Endseite des Außenkörpers eine um die Schwenkachse umlaufende Dichtung vorgesehen, mit welcher eine Abdichtung gegen eindringenden Schmutz und Feuchtigkeit erfolgt.

Bei einer derartigen Lösung stellt der Schwenklagerkörper gleichzeitig den Führungskörper schützenden und umschließenden Außenkörper dar und dadurch, dass der Außenkörper gegenüber dem Führungskörper in Richtung der Schwenkachse unverschiebbar angeordnet ist, wird insbesondere erreicht, dass eine einfache Abdichtung zwischen dem Außenkörper und der Schwenklagereinheit realisierbar ist.

Konstruktiv besonders günstig ist eine Lösung, bei welcher der Schwenklagerkörper einen einen Teilbereich der Drehblockiereinrichtung außenliegend umschließenden Außenkörper bildet, der gegenüber dem Führungskörper in Richtung der Schwenkachse unverschiebbar angeordnet ist.

Insbesondere ist vorgesehen, dass die Drehblockierkörper durch den Betätigungskörper von der Lösestellung in die Drehblockierstellung bewegbar sind.

Vorzugsweise ist dabei der Betätigungskörper so ausgebildet, dass er in der Lösestellung die Lösestellung der Drehblockierkörper zulässt.

Insbesondere sieht eine weitere Ausbildung des Betätigungskörpers vor, dass dieser in der Drehblockierstellung die Drehblockierkörper in ihrer Drehblockierstellung hält.

Um sicherzustellen, dass die Drehblockierkörper stets in ihre Drehblockierstellung übergehen, insbesondere dann, wenn keine aktive Betätigung des Betätigungskörpers erfolgt, ist vorzugsweise vorgesehen, dass der Betätigungskörper durch einen elastischen Kraftspeicher in Richtung seiner Drehblockierstellung beaufschlagt ist.

Um den Betätigungskörper nun von der Drehblockierstellung in die Lösestellung bewegen zu können, ist vorzugsweise vorgesehen, dass der Betätigungskörper durch eine Betätigungseinrichtung von der Drehblockierstellung in die Lösestellung bewegbar ist.

Insbesondere erfolgt ein derartiges Bewegen des Betätigungskörpers durch die Betätigungseinrichtung entgegen der Beaufschlagung durch den Kraftspeicher, das heißt, dass die Betätigungseinrichtung der Beaufschlagung durch den Kraftspeicher entgegenwirkt und somit die vom elastischen Kraftspeicher aufgebrachten Kräfte überwinden muss.

Insbesondere bei einem drehbaren Betätigungskörper ist vorzugsweise vorgesehen, dass mit der Betätigungseinrichtung der Betätigungskörper entgegengesetzt zur durch den elastischen Kraftspeicher bewirkten Drehrichtung verdreht wird.

Ein derartiger elastischer Kraftspeicher kann grundsätzlich an mehreren Orten angeordnet sein.

Konstruktiv ist es besonders günstig, wenn der elastische Kraftspeicher innerhalb des Führungskörpers angeordnet ist.

Eine weitere konstruktiv günstige Lösung sieht vor, dass der elastische Kraftspeicher auf einer Seite des Betätigungskörpers angeordnet ist.

In diesem Fall lässt sich der elastische Kraftspeicher vorteilhaft mit dem Betätigungselement koppeln.

Hinsichtlich der Einwirkung auf den Betätigungskörper sind die unterschiedlichsten Lösungen denkbar.

So sieht eine vorteilhafte Lösung vor, dass die Betätigungseinrichtung ein Abtriebselement aufweist, welches mit dem Betätigungskörper gekoppelt ist.

Prinzipiell wäre es möglich, das Abtriebselement und den Betätigungskörper starr miteinander zu koppeln.

Besonders günstig ist es jedoch, wenn das Abtriebselement und der Betätigungskörper über eine Mitnahmekopplungseinrichtung miteinander gekoppelt sind, welche abhängig von der Stellung des Abtriebselements und der Stellung des Betätigungskörpers, insbesondere der Drehstellung derselben, eine Relativbewegung um einen begrenzten Bewegungsbereich, insbesondere einen begrenzten Drehwinkel zulässt.

Dabei könnte die Mitnahmekopplungseinrichtung ein elastisches Verbindungsglied sein.

Besonders einfach ist es jedoch, wenn die Mitnahmekopplungseinrichtung einen mitnahmefreien Freigangzustand und einen Mitnahmezustand aufweist, das heißt, dass entweder der Freigangzustand oder der Mitnahmezustand vorliegt.

Im Zusammenhang mit den bisherigen Lösungen wurden lediglich allgemein der Antrieb der Drehblockiereinrichtung erläutert, welcher es erlaubt, einen Übergang der Drehblockiereinrichtung von mindestens einer Drehblockierstellung in eine Lösestellung und umgekehrt zu realisieren.

Ferner ist vorzugsweise vorgesehen, dass die Betätigungseinrichtung für die Drehblockiereinrichtung eine motorische Antriebseinheit umfasst.

Dabei könnte eine ausschließlich der Betätigungseinrichtung für die Drehblockiereinrichtung zugeordnete motorische Antriebseinheit vorgesehen sein.

Besonders günstig ist es jedoch, wenn eine motorische Antriebseinheit als Schwenkantrieb für das Ausführen der Schwenkbewegung des Kugelhalses vorgesehen ist.

Beispielsweise ist es denkbar, zwei motorische Antriebe vorzusehen, wobei ein motorischer Antrieb für die Betätigung der Drehblockiereinrichtung vorgesehen ist und ein motorischer Antrieb zur Durchführung der Schwenkbewegung des Kugelhalses vorgesehen ist.

Insbesondere da ein Antreiben der Drehblockiereinrichtung stets zu Zeiten erfolgt, in denen keine Schwenkbewegung des Kugelhalses erfolgen soll, und außerdem eine Schwenkbewegung des Kugelhalses stets dann erfolgt, wenn kein Antrieb der Drehblockiereinrichtung erforderlich ist, ist es denkbar, eine Umschalteinrichtung vorzusehen, die eine zugeführte Antriebsleistung, beispielsweise von einer Stromquelle, wechselweise von einem Antrieb auf den anderen Antrieb umschaltet, so dass die von einer separaten, beispielsweise kraftfahrzeugseitigen Versorgungseinrichtung zur Verfügung gestellte Antriebsleistung entweder für das Betätigen der Drehblockiereinrichtung oder das Schwenken des Schwenklagerkörpers genutzt werden kann.

In diesem Fall ist allerdings über eine entsprechende Sensorik zu erfassen, wann die Drehblockiereinrichtung in der Drehblockierstellung oder der Lösestellung steht und wann der Kugelhals in der der Arbeitsstellung entsprechenden Stellung oder der der Ruhestellung entsprechenden Stellung steht und entsprechend den von der Sensorik detektierten Stellungen die Antriebsleistung von einem Antrieb auf den anderen umzuschalten.

Im Fall eines Antriebs der Drehblockiereinrichtung unabhängig von dem Antrieb für die Schwenkbewegung des Schwenklagerkörpers besteht das Problem, dass im Fall einer Störung die Schwierigkeit auftritt, eindeutige Ausgangspositionen sowohl für die Schwenkbewegung des Kugelhalses als auch für die Drehblockiereinrichtung aufzufinden.

Besonders zweckmäßig ist es, wenn ein Abtriebselement für ein Antreiben der Drehblockiereinrichtung und ein Abtriebselement für ein Antreiben der Schwenkbewegung des Kugelhalses durch ein mittels eines Antriebselements angetriebenen Umlaufgetriebe gekoppelt sind.

In diesem Fall besteht die Möglichkeit, das Umlaufgetriebe durch eine einzige motorische Antriebseinheit, insbesondere eine einzige elektrische Antriebseinheit anzutreiben.

Das Umlaufgetriebe ist vorzugsweise ein Planetengetriebe.

Besonders günstig ist es, wenn das erste Abtriebselement des Umlaufgetriebes als Schwenkantrieb zum Verschwenken des Kugelhalses zwischen der Arbeitsstellung und der Ruhestellung wirkt und das zweite Abtriebselement des Umlaufgetriebes als Stellantrieb auf den Betätigungskörper wirkt, um diesen von der Drehblockierstellung in die Lösestellung zu bewegen.

Dabei ist das Umlaufgetriebe zweckmäßigerweise so ausgebildet, dass dieses einen Wechsel zwischen dem Abtriebselement für die Betätigung der Drehblockiereinrichtung und dem Abtriebselement für die Ausführung der Schwenkbewegung des Kugelhalses erlaubt.

Insbesondere lässt sich das Umlaufgetriebe so einsetzen, dass je nach Hemmung des Abtriebselements für die Drehblockiereinrichtung oder die Schwenkbewegung des Kugelhalses ein Antreiben der Schwenkbewegung oder der Drehblockiereinrichtung erfolgt.

Der Vorteil der Verwendung eines Umlaufgetriebes ist darin zu sehen, dass ein derartiges Umlaufgetriebe in einfacher Weise einen Wechsel von einem Abtrieb zum anderen Abtrieb zulässt und somit eine Antriebseinheit, beispielsweise umfassend einen elektrischen Antriebsmotor und gegebenenfalls ein Getriebe ausreicht, um wechselseitig über den einen Abtrieb die Bewegungen des Betätigungskörpers anzutreiben und über den anderen Abtrieb die Schwenkbewegung des Kugelhalses zwischen der Arbeitsstellung und der Ruhestellung anzutreiben.

Beispielsweise ist vorgesehen, dass ein Hohlrad des Umlaufgetriebes durch den motorischen Antrieb antreibbar ist.

Ferner ist zweckmäßigerweise vorgesehen, dass ein Hohlrad des Umlaufgetriebes mit dem Abtrieb für die Drehblockiereinrichtung gekoppelt ist.

Ferner ist zweckmäßigerweise vorgesehen, dass ein Planetenradträger des Umlaufgetriebes mit dem Abtrieb für die Schwenkbewegung gekoppelt ist.

Um bei einem Umlaufgetriebe, welches durch einen einzigen motorischen Antrieb angetrieben ist, entweder die Drehblockiereinrichtung anzutreiben oder die Schwenkbewegung anzutreiben ist vorteilhafterweise vorgesehen, dass je nach Hemmung des Antriebs der Drehblockiereinrichtung oder der Schwenkbewegung ein Antreiben der Schwenkbewegung oder der Drehblockiereinrichtung erfolgt.

Eine derartige Hemmung der Schwenkbewegung oder der Drehblockiereinrichtung ist in unterschiedlicher Art und Weise realisierbar.

Die Hemmung der Schwenkbewegung ist in einfacher Weise dadurch realisierbar, dass der Kugelhals relativ zur Schwenklagereinheit verriegelbar ist, so dass beim Verriegeln zwangsläufig eine Hemmung der Schwenkbewegung vorliegt.

Eine Hemmung des Antriebs der Drehblockiereinrichtung kann in unterschiedlichster Art und Weise erfolgen.

Eine besonders günstige Lösung sieht dabei vor, dass in der Lösestellung zur Hemmung des Antriebs der Drehblockiereinrichtung ein Anschlag vorgesehen ist.

Hinsichtlich der Anordnung des Umlaufgetriebes sind die unterschiedlichsten Lösungen denkbar.

Eine besonders kompakte Lösung sieht vor, dass das Umlaufgetriebe koaxial zur Schwenkachse in der Schwenklagereinheit angeordnet ist.

Ferner ist vorzugsweise vorgesehen, dass das Umlaufgetriebe auf einer dem motorischen Antrieb zugewandten Seite des Betätigungselements der Drehblockiereinrichtung angeordnet ist.

Für den kompakten Aufbau ist es besonders förderlich, wenn in Richtung der Schwenkachse gesehen, das Umlaufgetriebe auf einer Seite von der motorischen Antriebseinheit angetrieben ist und auf der gegenüberliegenden Seite einen Abtrieb für das Betätigungselement aufweist.

Somit ist vorzugsweise das Umlaufgetriebe in Richtung der Schwenkachse gesehen zwischen der motorischen Antriebseinheit und dem Betätigungselement angeordnet.

Ferner sind vorzugsweise das Umlaufgetriebe, der elastische Kraftspeicher und das Betätigungselement in Richtung der Schwenkachse aufeinanderfolgend, insbesondere innerhalb der Schwenklagereinheit, angeordnet.

Die vorstehende Beschreibung erfindungsgemäßer Lösungen umfasst somit insbesondere die durch die nachfolgenden durchnummerierten Ausführungsformen definierten verschiedenen Merkmalskombinationen:
1.Anhängekupplung, umfassend einen zwischen einer Arbeitsstellung (A) und einer Ruhestellung (R) bewegbaren Kugelhals (10) der an einem ersten Ende mit einer Schwenklagereinheit (20) verbunden ist und einer an einem zweiten Ende eine Kupplungskugel (18) trägt, wobei mittels der Schwenklagereinheit (20), der Kugelhals (10) bei Ausführung einer Schwenkbewegung um eine Schwenkachse (22) zwischen der Arbeitsstellung (A) und der Ruhestellung (R) verschwenkbar ist, und eine zwischen einem Führungskörper (40) und einem Schwenklagerkörper (14) der Schwenklagereinheit (20) wirkende Drehblockiereinrichtung (50) mit einerseits mindestens zwei Drehblockiereinheiten (80), von denen jede einen Drehblockierkörper (54) aufweist, der mittels einer Führungsaufnahme (56) des Führungskörpers (40) in einer Führungsrichtung (58) bewegbar geführt ist und der in der Führungsrichtung (58) durch eine quer zur Führungsrichtung (58) verlaufende, an einem Betätigungskörper (52) vorgesehene Druckfläche (66) bewegbar ist, und mit andererseits mindestens zwei Aufnahmen (60), wobei durch eine Bewegung des Betätigungskörpers (52) in einer Betätigungsrichtung (72) die Drehblockierkörper (54) aller Drehblockiereinheiten (80) in der Führungsrichtung (58) bewegbar und beaufschlagbar sind und wobei die Drehblockierkörper (54) aller Drehblockiereinheiten (80) in der Arbeitsstellung (A) durch Bewegung in der Führungsrichtung (58) in eine Drehblockierstellung bringbar sind und in dieser jeder Drehblockierkörper (54) mit jeweils einer der Aufnahmen (60) in Eingriff kommen, um eine Schwenkbewegung des Schwenklagerkörpers (14) und des Führungskörpers (40) relativ zueinander um die Schwenkachse (22) zu blockieren, und in eine Lösestellung bringbar sind und in dieser mit der jeweiligen Aufnahme (60) außer Eingriff stehen und die Relativbewegung zwischen Schwenklagerkörper (14) und Führungskörper (40) freigeben, wobei in allen vorgesehenen relativen Schwenkstellungen zwischen Schwenklagerkörper (14) und Führungskörper (40) einschließlich der Ruhestellung (R) sowie ausgenommen der Arbeitsstellung (A) eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in jeweils eine der Aufnahmen (60) blockiert ist, wobei eine Mehrfachblockiereinrichtung (270) vorgesehen ist, welche einen Blockierkörper (272) umfasst, der in eine den Schwenklagerkörper (14) und den Führungskörper (40) in der Ruhestellung (R) relativ zueinander blockierende Ruhestellungsblockierstellung, in eine den Betätigungskörper (52) in der Drehblockierstellung sichernde Sicherungsstellung und in eine zwischen der Ruhestellungsblockierstellung und der Sicherungsstellung liegende Zwischenstellung bewegbar ist.
2. Anhängekupplung nach Ausführungsform 1, wobei der Blockierkörper (272) an dem Führungskörper (40) der Schwenklagereinheit (20) geführt ist.
3. Anhängekupplung nach Ausführungsform 1 oder 2, wobei der Blockierkörper (272) in einer am Führungskörper (40) angeordneten Führung (274) geführt ist.
4. Anhängekupplung nach einer der voranstehenden Ausführungsformen, wobei die Führung (274) für den Blockierkörper (272) in einem an dem Betätigungskörper (52) und dem Schwenklagerkörper (14) angrenzenden Wandbereich (104) des Führungskörpers (40) angeordnet ist.
5. Anhängekupplung nach Ausführungsform 3 oder 4, wobei der Blockierkörper (272) in der Führung (274) in Richtung ungefähr parallel zu der Schwenkachse (22) bewegbar ist.
6. Anhängekupplung nach einer der voranstehenden Ausführungsformen, wobei der Blockierkörper (272) in der Ruhestellungsblockierstellung in eine Aufnahme (284) im Schwenklagerkörper (14) eingreift.
7. Anhängekupplung nach einer der voranstehenden Ausführungsformen, wobei der Blockierkörper (272) in der Sicherungsstellung in eine Aufnahme (282) in dem Betätigungskörper (52) eingreift.
8. Anhängekupplung nach einer der voranstehenden Ausführungsformen, wobei der Blockierkörper (272) in der Zwischenstellung zwischen der Aufnahme (282) in dem Betätigungskörper (52) und der Aufnahme (284) in der Schwenklagereinheit (14) angeordnet ist.
9. Anhängekupplung nach einer der Ausführungsformen 3 bis 8, wobei der Blockierkörper (272) sowohl in der Sicherungsstellung als auch in der Ruhestellungsblockierstellung ausgehend und geführt durch die Führung (274) jeweils mit einem Ende (276, 278) in die jeweilige Aufnahme (282, 284) eingreift.
10. Anhängekupplung nach einer der voranstehenden Ausführungsformen, wobei der Blockierkörper (272) durch eine Blockierbetätigungseinrichtung (280) in der Sicherungsstellung, der Zwischenstellung und der Ruhestellungsblockierstellung festlegbar ist.
11. Anhängekupplung nach Ausführungsform 10, wobei die Blockierbetätigungseinrichtung (280) eine Kulissenführung (290) und einen durch diese bewegbaren Kulissenfolger (292) umfasst, der mit dem Blockierkörper (272) gekoppelt ist.
12. Anhängekupplung nach Ausführungsform 11, wobei der Kulissenfolger (292) durch die Kulissenführung (290) ungefähr parallel zur Schwenkachse (22) bewegbar ist.
13. Anhängekupplung nach Ausführungsform 11 oder 12, wobei die Kulissenführung (290) quer zur Schwenkachse (22) bewegbar ist.
14. Anhängekupplung nach einer der Ausführungsformen 11 bis 13, wobei die Kulissenführung (290) durch die Blockierbetätigungseinrichtung (280) bewegbar ist.
15. Anhängekupplung nach Ausführungsform 14, wobei die Blockierbetätigungseinrichtung (280) einen die Kulissenführung (290) tragenden und relativ zum Kulissenfolger (292) drehend bewegbaren Körper (142) umfasst.
16. Anhängekupplung nach einer der Ausführungsformen 11 bis 15, wobei die Kulissenführung (290) mindestens eine auf den Kulissenfolger (292) einwirkende Kulissenbahn (312, 314) aufweist.
17. Anhängekupplung nach einer der Ausführungsformen 11 bis 16, wobei die Kulissenführung (290) zwei auf den Kulissenfolger (292) einwirkende und diesen zwischen sich führende Kulissenbahnen (312, 314) aufweist.
18. Anhängekupplung nach Ausführungsform 17, wobei beide Kulissenbahnen (312, 314) zusammen den Kulissenfolger (292) in einer die Sicherungsstellung vorgebenden Stellung festlegen.
19. Anhängekupplung nach Ausführungsform 17 oder 18, wobei beide Kulissenbahnen (312, 314) zusammen den Kulissenfolger (292) in einer die Ruhestellungsblockierstellung vorgebenden Stellung festlegen.
20. Anhängekupplung nach einer der Ausführungsformen 17 bis 19, wobei eine erste Kulissenbahn (312) einen den Kulissenfolger (292) von der die Sicherungsstellung festlegenden Stellung in eine die Zwischenstellung festlegende Stellung bewegenden Bahnabschnitt (312b) umfasst.
21. Anhängekupplung nach einer der Ausführungsformen 17 bis 20, wobei die erste Kulissenbahn (312) einen den Kulissenfolger (292) von der die Zwischenstellung festlegenden Stellung in eine diesen in Richtung einer der Ruhestellungsblockierstellung entsprechenden Stellung beaufschlagenden Bahnabschnitt (312d) umfasst.
22. Anhängekupplung nach Ausführungsform 21, wobei der in Richtung der der Ruhestellungsblockierstellung entsprechenden Stellung wirkende Bahnabschnitt (312d) den Kulissenfolger (292) federelastisch in dieser Richtung beaufschlagt.
23. Anhängekupplung nach Ausführungsform 22, wobei der Bahnabschnitt (312d) durch einen federelastisch bewegbaren Abschnitt der ersten Kulissenbahn (312) gebildet ist.
24. Anhängekupplung nach Ausführungsform 23, wobei in der der Ruhestellungsblockierstellung entsprechenden Stellung der Kulissenfolger (292) zwischen dem federelastisch bewegbaren Bahnabschnitt der ersten Kulissenbahn (312) im Zusammenwirken mit der zweiten Kulissenbahn (314) festgelegt ist.
25. Anhängekupplung nach einer der Ausführungsformen 17 bis 24, wobei die zweite Kulissenbahn (314) einen Bahnabschnitt (314b) aufweist, welcher den Kulissenfolger (292) von der der Ruhestellungsblockierstellung entsprechenden Stellung in eine der Zwischenstellung entsprechende Stellung bewegt.
26. Anhängekupplung nach einer der Ausführungsformen 17 bis 25, wobei die zweite Kulissenbahn (314) einen Bahnabschnitt (314d) aufweist, welcher den Kulissenfolger (292) von der der Zwischenstellung entsprechenden Stellung, in die der Sicherungsstellung entsprechende Stellung bewegt.
27. Anhängekupplung nach einer der Ausführungsformen 17 bis 26, wobei die erste Kulissenbahn (312) durch eine Bewegung der Kulissenführung (290) in einer ersten Drehrichtung (322) wirksam ist und dass die zweite Kulissenbahn (314) durch eine Bewegung der Kulissenführung in einer der ersten Drehrichtung (322) entgegengesetzten Drehrichtung (324) wirksam ist.
28. Anhängekupplung nach Ausführungsform 27, wobei die Blockierbetätigungseinrichtung (280) durch eine Betätigungseinrichtung (180) für die Drehblockiereinrichtung (50) antreibbar ist.
29. Anhängekupplung nach Ausführungsform 28, wobei die Blockierbetätigungseinrichtung (280) mit der Betätigungseinrichtung (180) gekoppelt ist.
30. Anhängekupplung nach Ausführungsform 28 oder 29, wobei die Kulissenbahn (290) an einem drehbaren Körper (142) eines Planetengetriebes (130) der Betätigungseinrichtung (180) für die Drehblockiereinrichtung (50) angeordnet ist.
31. Anhängekupplung nach Ausführungsform 30, wobei die Kulissenbahn (290) an einem Hohlrad (142) eines Planetengetriebes (130) der Betätigungseinrichtung (180) angeordnet ist.
32. Anhängekupplung nach einer der voranstehenden Ausführungsformen, wobei die Mehrfachblockiereinrichtung (270) einen die Stellungen des Blockierkörpers (272) erfassende Sensoreinheit (300) aufweist.
33. Anhängekupplung nach Ausführungsform 32, wobei die Sensoreinheit (300) die Sicherungsstellung, die Ruhestellungsblockierstellung und die Zwischenstellung erfasst.
34. Anhängekupplung nach Ausführungsform 32 oder 33, wobei die Sensoreinheit (300) so ausgebildet ist, dass sie mindestens die Zwischenstellung von der Sicherungsstellung und der Ruhestellungsblockierstellung unterscheidet, insbesondere alle diese Stellungen voneinander unterscheidet.
35. Anhängekupplung nach einer der Ausführungsformen 32 bis 34, wobei die Sensoreinheit (300, 300') mindestens einen Taster (301), insbesondere zwei Taster (301a, 301b), umfasst.
36. Anhängekupplung nach einer der Ausführungsformen 32 bis 35, wobei die Sensoreinheit (300") einen Magnetfeldsensor (301"), insbesondere einen einem Verlauf eines Magnetfeldes (298) im Raum erfassenden Magnetfeldsensor (301"), umfasst.
37. Anhängekupplung nach einer der voranstehenden Ausführungsformen 11 bis 36, wobei der Kulissenfolger (292) mittels eines Übertragungselements (294) mit dem Blockierkörper (272) gekoppelt ist.
38. Anhängekupplung nach Ausführungsform 37, wobei das Übertragungselement (294) mit einem Sensorbetätigungselement (296) gekoppelt ist.
39. Anhängekupplung nach einer der voranstehenden Ausführungsformen, wobei zwischen den Aufnahmen (60) Blockierflächen (90) verlaufen, gegen welche die Drehblockierkörper (54) anlegbar sind und von welchen ausgehend sich die Aufnahmen (60) erstrecken, dass die Drehblockiereinheiten (80) und die Aufnahmen (60) um die Schwenkachse (22) herum derart in Winkelabständen (W) voneinander angeordnet sind, dass in allen vorgesehenen relativen Schwenkstellungen zwischen Schwenklagerkörper (14) und Führungskörper (40) einschließlich der Ruhestellung (R) sowie ausgenommen die Arbeitsstellung (A) der Drehblockierkörper (54) mindestens eine der Drehblockiereinheiten (80) einer der Blockierflächen (90) gegenüberliegt und die Blockierfläche (90), insbesondere bei einer Kraftbeaufschlagung des Betätigungskörpers (52), eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in jeweils eine der Aufnahme (60) blockiert.
40. Anhängekupplung nach einer der voranstehenden Ausführungsformen, wobei die Drehblockiereinheiten (80) zur Bildung einer Drehblockierkonfiguration in Winkelabständen (W) um die Schwenkachse (22) herum angeordnet sind, dass die Aufnahmen (60) zur Bildung einer Aufnahmenkonfiguration in denselben Winkelabständen (W) um die Schwenkachse (22) angeordnet sind wie die Drehblockiereinheiten (80), dass die Drehblockierkonfiguration und die Aufnahmenkonfiguration in der Arbeitsstellung (A) deckungsgleich zueinander stehen, so dass die Drehblockierkörper (54) in die Aufnahmen (60) eingreifen können, und dass die Winkelabstände (W) zwischen den Drehblockiereinheiten (80) der Drehblockierkonfiguration und die Winkelabstände zwischen den Aufnahmen (60) der Aufnahmenkonfiguration so gewählt sind, dass die Drehblockierkonfiguration und die Aufnahmenkonfiguration nur in der Arbeitsstellung (A) deckungsgleich zueinander stehen.
41. Anhängekupplung nach einer der voranstehenden Ausführungsformen 39 oder 340 wobei die Winkelabstände (W) mindestens einer der Drehblockiereinheiten (80) zu den in einer Umlaufrichtung um die Schwenkachse (22) sowie zu den entgegengesetzt zu dieser Umlaufrichtung benachbart angeordneten Drehblockiereinheiten (80) ungleich sind und dass in der Arbeitsstellung (A) die Aufnahmen (60) derart angeordnet sind, dass der Drehblockierkörper (54) jeder der Drehblockiereinheiten (80) mit jeweils einer der Aufnahmen (60) in Eingriff bringbar sind und dass in allen für den Betrieb vorgesehenen relativen Schwenkstellungen zwischen Schwenklagenkörpers (14) und Führungskörper (40) einschließlich der Ruhestellung (R), die außerhalb der Arbeitsstellung (A) liegen, der Drehblockierkörper (54) mindestens einer der Drehblockiereinheiten (80) einer zwischen den Aufnahmen (60) verlaufenden Blockierfläche (90) gegenüberliegt und die Blockierfläche (90), insbesondere bei einer Kraftbeaufschlagung des Betätigungskörpers (52), eine Bewegung des Betätigungskörpers (52) von der Lösestellung in die Drehblockierstellung blockiert.
42 Anhängekupplung nach einer der voranstehenden Ausführungsformen 39 bis 41, wobei die Blockierflächen (90) den Drehblockierkörpern (54) der Drehblockiereinheiten (80) zugewandt verlaufen.
43. Anhängekupplung nach einer der voranstehenden Ausführungsformen 39 bis 42, wobei die Blockierflächen (90) in einem definierten Radius um die Schwenkachse (22) verlaufen.
44. Anhängekupplung nach einer der voranstehenden Ausführungsformen 39 bis 43, wobei die Blockierflächen (90) bis zu Öffnungsrändern (92) der Aufnahmen (60) verlaufen und in diese übergehen.
45. Anhängekupplung nach Ausführungsform 44, wobei die Öffnungsränder (92) der Aufnahmen (60) in demselben radialen Abstand von der Schwenkachse (22) liegen wie die Blockierflächen (90).
46. Anhängekupplung nach einer der voranstehenden Ausführungsformen 39 bis 45, wobei mindestens einer der Drehblockierkörper (54) der Drehblockiereinheiten (80) bei einer Schwenkbewegung des Schwenklagerkörpers (14) in Richtung der Arbeitsstellung (A) an einer der Blockierflächen (90) anliegt, insbesondere durch Einwirkung des Betätigungskörpers (52) kraftbeaufschlagt anliegt.
47. Anhängekupplung nach einer der voranstehenden Ausführungsformen 39 bis 46, wobei die Drehblockierkörper (54) vor Erreichen der Arbeitsstellung (A) an den Blockierflächen (90) kraftbeaufschlagt anliegen und anschließend an Öffnungsrändern (92) der Aufnahmen (60) kraftbeaufschlagt anliegend in die Aufnahmen (60) eintreten.
48. Anhängekupplung nach einer der voranstehenden Ausführungsformen 39 bis 47, wobei sich die Aufnahmen (60) ausgehend von den Blockierflächen (90) in der Führungsrichtung (58), insbesondere mit mindestens einer Komponente in radialer Richtung zur Schwenkachse (22), erstrecken.
49. Anhängekupplung nach einer der voranstehenden Ausführungsformen 39 bis 48, wobei die Aufnahmen (60) und die Blockierflächen (90) dem Führungskörper (40) zugewandt angeordnet sind.
50. Anhängekupplung nach einer der voranstehenden Ausführungsformen, wobei der Führungskörper (40) ein Teil der fahrzeugfest angeordneten Schwenklagereinheit (20) ist.
51. Anhängekupplung nach einer der voranstehenden Ausführungsformen, wobei in dem Führungskörper (40) alle Führungsaufnahmen (56) für die Drehblockierkörper (54) der Drehblockiereinheiten (80) angeordnet sind, und/oder dass insbesondere die Führungsrichtung (58) mit mindestens einer Komponente in radialer Richtung zur Schwenkachse (22) verläuft, und/oder dass insbesondere der Führungskörper (40) eine Führungshülse (44) mit Führungsaufnahmen (56) für die Drehblockierkörper (54) der Drehblockiereinheiten (80) aufweist und dass insbesondere die Drehblockierkörper (54) durch den sich in radialer Richtung an den Schwenklagerkörper (14) anschließenden Führungskörper (40) geführt sind.
52. Anhängekupplung nach einer der voranstehenden Ausführungsformen, wobei zwischen dem Führungskörper (40) und dem Schwenklagerkörper (14) ein Schwenklager vorgesehen ist.
53. Anhängekupplung nach einer der voranstehenden Ausführungsformen, wobei der Betätigungskörper (52) relativ zu dem Führungskörper (40) bewegbar geführt ist, dass insbesondere der Betätigungskörper (52) um die Schwenkachse (22) drehbar angeordnet ist und insbesondere sich über einen Winkelbereich um die Schwenkachse (22) erstreckende und parallel zur Führungsrichtung (58) variierende Keilflächen (66) vorzugsweise kombiniert mit Rückzugsaufnahmen (62) aufweist.
54. Anhängekupplung nach einer der voranstehenden Ausführungsformen, wobei die Aufnahmen (60) und die Blockierflächen (90) an dem Schwenklagerkörper (14) angeordnet sind.
55. Anhängekupplung nach einer der voranstehenden Ausführungsformen, wobei der Betätigungskörper (52) von dem Führungskörper (40) umschlossen ist und dass insbesondere der Schwenklagerkörper (14) den Führungskörper (40) umgreift, dass insbesondere die Drehblockierkörper (54) um den Betätigungskörper (52) herum angeordnet sind.
56. Anhängekupplung nach einer der voranstehenden Ausführungsformen, wobei der Schwenklagerkörper (14) einen die Schwenklagereinheit (20) außenliegend umschließenden Außenkörper bildet, der relativ zu der Schwenklagereinheit (20) in Richtung der Schwenkachse (22) unverschiebbar angeordnet ist, und dass insbesondere der Schwenklagerkörper (14) einen zumindest einen Teilbereich der Drehblockiereinheit (50) außenliegend umschließenden Außenkörper bildet, der relativ zu dem Führungskörper (40) in Richtung der Schwenkachse (22) unverschiebbar angeordnet ist.
57. Anhängekupplung nach einer der voranstehenden Ausführungsformen, wobei der Betätigungskörper (52) durch einen elastischen Kraftspeicher (114) in Richtung seiner Drehblockierstellung beaufschlagt ist, dass insbesondere der Betätigungskörper (52) durch eine Betätigungseinrichtung (180) von der Drehblockierstellung in die Lösestellung bewegbar ist, dass insbesondere der Betätigungskörper (52) durch die Betätigungseinrichtung (180) entgegen der Beaufschlagung durch den Kraftspeicher (114) bewegbar ist, dass insbesondere mit der Betätigungseinrichtung (180) der Betätigungskörper (52) entgegengesetzt zur durch den elastischen Kraftspeicher (114) bewirkten Betätigungsrichtung (72) bewegbar ist.
58. Anhängekupplung nach einer der voranstehenden Ausführungsformen, wobei die Betätigungseinrichtung (180) ein Abtriebselement (142) aufweist, welches mit dem Betätigungskörper (52) gekoppelt ist, dass insbesondere das Abtriebselement (142) und der Betätigungskörper (52) über eine Mitnahmekopplungseinrichtung (156, 158) miteinander gekoppelt sind , dass insbesondere die Mitnahmekopplungseinrichtung (156, 158) einen mitnahmefreien Freigangzustand und einen Mitnahmezustand aufweist, dass insbesondere die Betätigungseinrichtung (180) für die Drehblockiereinrichtung (50) eine motorische Antriebseinheit umfasst, dass insbesondere die motorische Antriebseinheit (182) auch als Schwenkantrieb für das Ausführen der Schwenkbewegung des Schwenklagerkörpers (14) vorgesehen ist, dass insbesondere ein Abtriebselement (142) für ein Antreiben der Drehblockiereinrichtung (50) und das Abtriebselement (152) und für ein Antreiben der Schwenkbewegung des Schwenklagerkörpers (14) durch ein Umlaufgetriebe (130) gekoppelt sind.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 3: eine Draufsicht auf die Anhängekupplung in Fig. 2 in Richtung der Schwenkachse;
- Fig. 4: eine Ansicht entsprechend Fig. 2 der in der Ruhestellung stehenden Anhängekupplung;
- Fig. 5: eine Draufsicht auf die Anhängekupplung gemäß die in der Ruhestellung stehende Anhängekupplung gemäß Fig. 4 in Richtung der Schwenkachse;
- Fig. 6: eine Darstellung eines Schnitts längs Linie 6-6 in Fig. 3;
- Fig. 7: einen Schnitt längs Linie 7-7 in Fig. 6 in der Arbeitsstellung;
- Fig. 8: eine Darstellung eines Schnitts ähnlich Fig. 7 in der Lösestellung mit maximal verdrehtem Betätigungskörper;
- Fig. 9: eine Darstellung ähnlich Fig. 8 bei geringfügigem Schwenken des Schwenklagerkörpers aus der Arbeitsstellung heraus, mit maximal verdrehtem Betätigungskörper;
- Fig. 10: eine Darstellung ähnlich Fig. 8 mit unter Einwirkung der Drehfeder stehendem Betätigungskörper;
- Fig. 11: eine Darstellung ähnlich Fig. 8 einer Schwenkstellung des Schwenklagerkörpers mit zunehmender Schwenkbewegung in Richtung der Ruhestellung;
- Fig. 12: eine Darstellung ähnlich Fig. 8 einer Schwenkstellung des Schwenklagerkörpers mit zunehmender Schwenkbewegung in Richtung der Ruhestellung;
- Fig. 13: eine Darstellung ähnlich Fig. 8 einer Schwenkstellung des Schwenklagerkörpers mit zunehmender Schwenkbewegung in Richtung der Ruhestellung;
- Fig. 14: eine Darstellung ähnlich Fig. 7 in der Ruhestellung;
- Fig. 15: einen Schnitt längs Linie 15-15 in Fig. 6 ohne Tragplatte und Haltering;
- Fig. 16: eine perspektivische Darstellung eines Hohlrads und einer mit diesem zusammenwirkenden Antriebshülse;
- Fig. 17: eine perspektivische Explosionsdarstellung des Schwenklagerkörpers mit der Abdeckung;
- Fig. 18: einen vergrößerten Schnitt gemäß Fig. 6 in der Arbeitsstellung bei in der Sicherungsstellung stehendem Blockierkörper;
- Fig. 19: einen vergrößerten Schnitt gemäß Fig. 6 bei in der Zwischenstellung stehendem Blockierkörper;
- Fig. 20: einen vergrößerten Schnitt ähnlich Fig. 18 in der Ruhestellung bei in der Ruhestellungsblockierstellung stehendem Blockierkörper;
- Fig. 21: in der Ausgangsstellung des Hohlrades;
Fig. 21a eine perspektivische Darstellung des Zusammenwirkens des Hohlrades mit der Blockierbetätigungseinrichtung und mit der Drehblockiereinrichtung;
Fig. 21b eine Draufsicht auf das Hohlrad des Planetengetriebes von Seiten der Antriebshülse;
Fig. 21c eine perspektivische Darstellung des Zusammenwirkens des Hohlrades in der Stellung gemäß Fig. 21b mit Erfassung von Stellungen eines Blockierkörpers;
- Fig. 22: in der ersten gegenüber der Ausgangsstellung gedrehten Stellung des Hohlrads nach Lösen der Sicherungsstellung und in der Zwischenstellung stehendem Blockierkörper und ohne Einwirkung auf die Drehblockiereinrichtung;
Fig. 22a eine perspektivische Darstellung des Zusammenwirkens des Hohlrades mit der Blockierbetätigungseinrichtung und mit der Drehblockiereinrichtung;
Fig. 22b eine Draufsicht auf das Hohlrad des Planetengetriebes von Seiten der Antriebshülse;
Fig. 22c eine perspektivische Darstellung des Zusammenwirkens des Hohlrades in der Stellung gemäß Fig. 22b mit Erfassung von Stellungen eines Blockierkörpers;
- Fig. 23: in einer maximal gegenüber der Ausgangsstellung gedrehten Stellung des Hohlrads bei Erreichen der Lösestellung der Drehblockiereinrichtung und in der Zwischenstellung federbeaufschlagten Blockierkörper;
Fig. 23a eine perspektivische Darstellung des Zusammenwirkens des Hohlrades mit der Blockierbetätigungseinrichtung und mit der Drehblockiereinrichtung;
Fig. 23b eine Draufsicht auf das Hohlrad des Planetengetriebes von Seiten der Antriebshülse;
Fig. 23c eine perspektivische Darstellung des Zusammenwirkens des Hohlrades in der Stellung gemäß Fig. 23b mit Erfassung von Stellungen eines Blockierkörpers;
- Fig. 24: in einer gegenüber der Ausgangsstellung gedrehten Stellung des Hohlrades bei Erreichen der Ruhestellung des Schwenklagerkörpers und der Ruhestellungsblockierstellung;
Fig. 24a eine perspektivische Darstellung des Zusammenwirkens des Hohlrades mit der Blockierbetätigungseinrichtung und mit der Drehblockiereinrichtung;
Fig. 24b eine Draufsicht auf das Hohlrad des Planetengetriebes von Seiten der Antriebshülse;
Fig. 24c eine perspektivische Darstellung des Zusammenwirkens des Hohlrades in der Stellung gemäß Fig. 24b mit Erfassung von Stellungen eines Blockierkörpers;
- Fig. 25: in einer gegenüber der Ausgangsstellung der Fig. 24 zurückgedrehten Stellung des Hohlrads und Deaktivieren der Ruhestellungsblockierstellung und Übergang in die Zwischenstellung;
Fig. 25a eine perspektivische Darstellung des Zusammenwirkens des Hohlrades in der Stellung gemäß Fig. 25b mit Erfassung von Stellungen eines Blockierkörpers;
Fig. 25b eine Draufsicht auf das Hohlrad des Planetengetriebes von Seiten der Antriebshülse;
Fig. 25c eine perspektivische Darstellung des Zusammenwirkens des Hohlrades in der Stellung gemäß Fig. 25a mit einer Sicherungseinrichtung und mit der Drehblockiereinrichtung;
- Fig. 26: in der Ausgangsstellung des Hohlrads nach einem Übergang der Drehblockiereinrichtung in die Drehblockierstellung und Erreichen der Sicherungsstellung des Blockierkörpers;
Fig. 26a eine perspektivische Darstellung des Zusammenwirkens des Hohlrades in der Stellung gemäß Fig. 25b mit Erfassung von Stellungen eines Blockierkörpers;
Fig. 26b eine Draufsicht auf das Hohlrad des Planetengetriebes von Seiten der Antriebshülse;
Fig. 26c eine perspektivische Darstellung des Zusammenwirkens des Hohlrades in der Stellung gemäß Fig. 26a mit einer Sicherungseinrichtung und mit der Drehblockiereinrichtung
- Fig. 27: ein zweites Ausführungsbeispiel einer Sensoreinheit mit Positionsanzeigeelement;
Fig. 27a bei Erfassung der Sicherungsstellung;
Fig. 27b bei Erfassung der Zwischenstellung;
Fig. 27c bei Erfassung der Ruhestellungsblockierstellung;
- Fig. 28: ein drittes Ausführungsbeispiel einer Sensoreinheit mit Positionsanzeigeelement;
Fig. 28a bei Erfassung der Sicherungsstellung;
Fig. 28b bei Erfassung der Zwischenstellung
Fig. 28c bei Erfassung der Ruhestellungsblockierstellung.

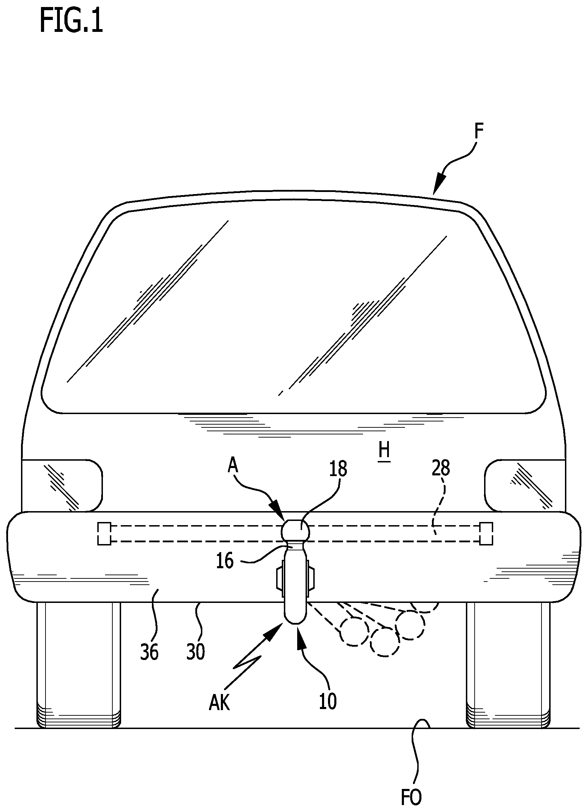

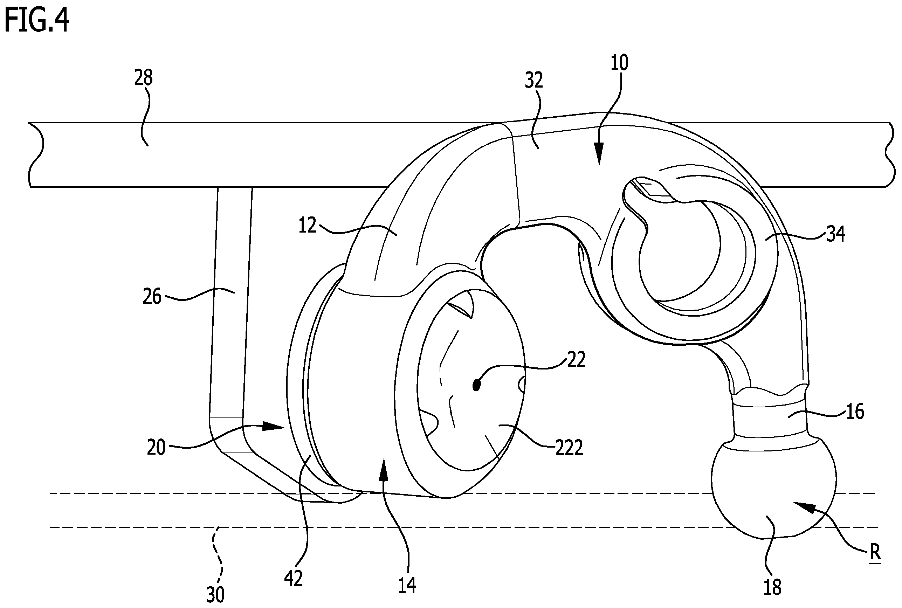

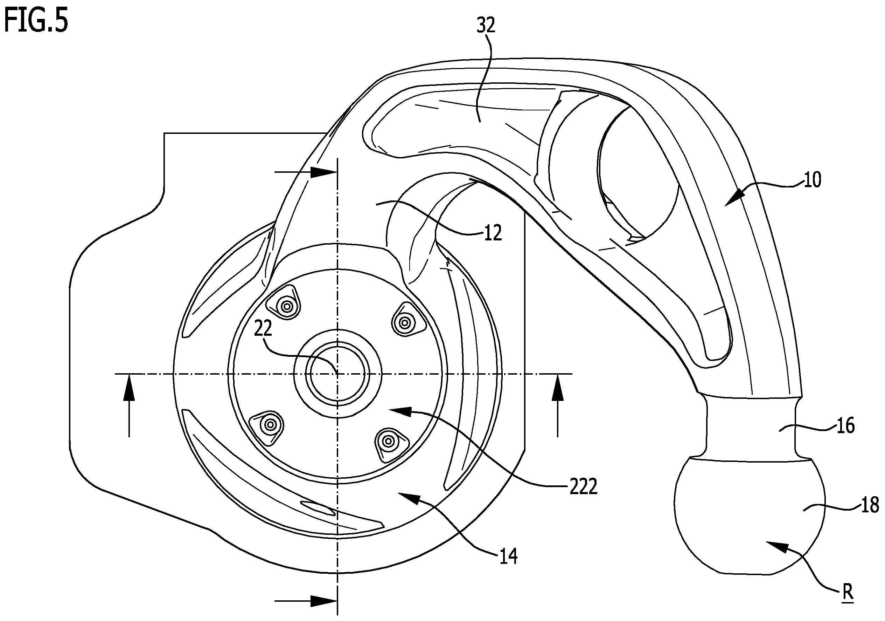

Ein erstes Ausführungsbeispiel einer erfindungsgemäßen Anhängekupplung AK für ein Kraftfahrzeug, dargestellt in Fig. 1, 2 und 3 in einer Arbeitsstellung A und in Fig. 4 und 5 in einer Ruhestellung R, umfasst einen als Ganzes mit 10 bezeichneten Kugelhals, welcher mit einem ersten Ende 12 an einer Schwenklagereinheit 20 gehalten ist und an einem zweiten Ende 16 eine als Ganzes mit 18 bezeichnete Kupplungskugel trägt, an welcher eine Kupplungskugelaufnahme eines Anhängers fixierbar ist.

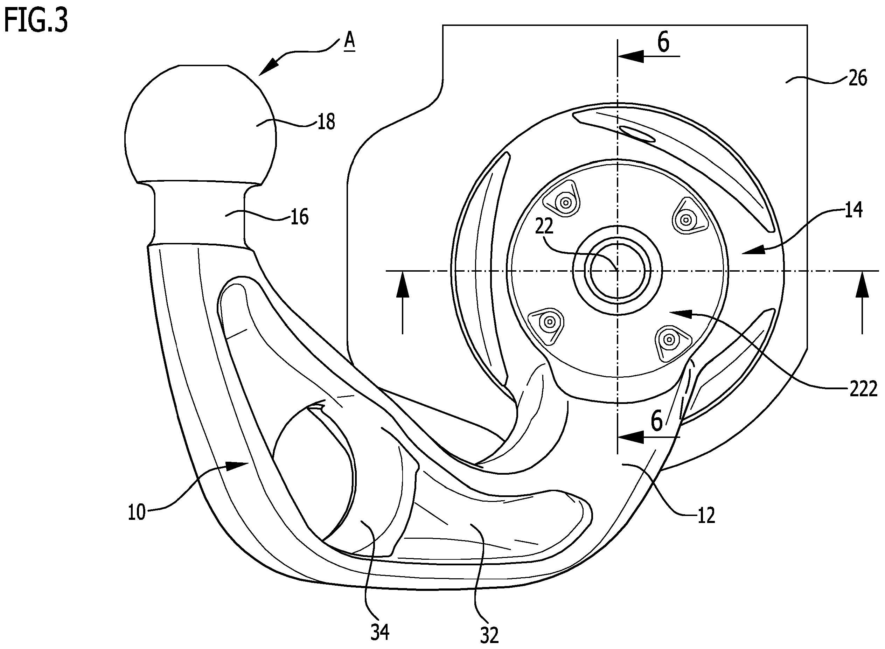

Der Kugelhals 10 ist durch die als Ganzes mit 20 bezeichneten Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt, und einen fahrzeugfesten Querträger 28 aufweist, welcher in bekannter Weise an einem Heckbereich H einer Fahrzeugkarosserie F befestigbar ist, und zwar so, dass die Schwenklagereinheit 20 und der Träger 24 auf einer Fahrbahnoberfläche FO abgewandten Seite einer Unterkante 30 einer Stoßfängereinheit 36 liegen, und durch die Stoßfängereinheit 36 abgedeckt sind (Fig. 3).

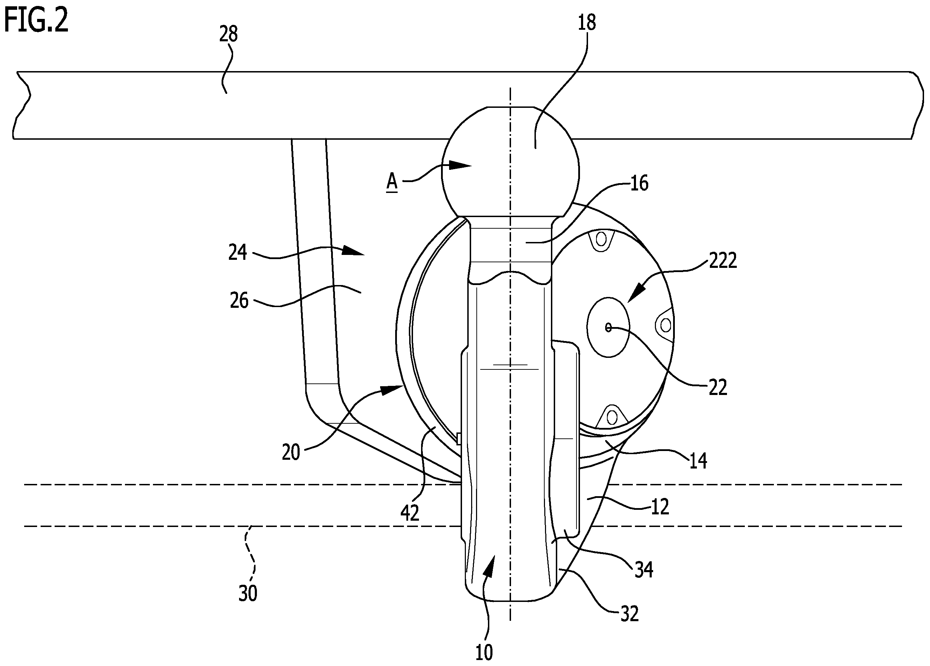

In der in Fig. 1 und 2 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie F abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

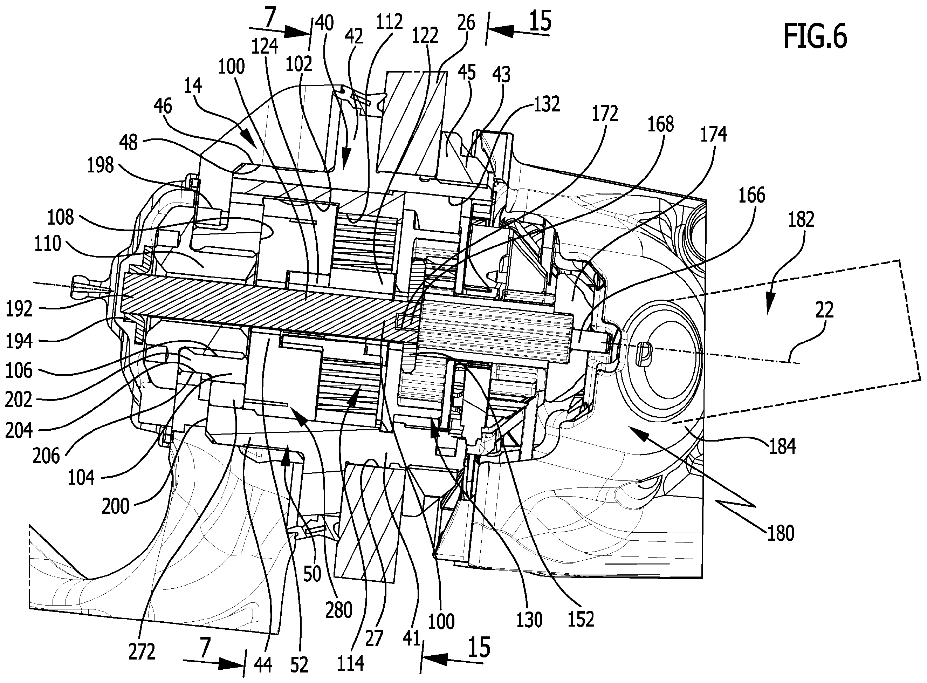

Die Schwenklagereinheit 20 umfasst, wie in Fig. 6 bis 9 dargestellt, einerseits einen Schwenklagerkörper 14 und andererseits einen Führungskörper 40. Beispielsweise ist der Führungskörper 40 mit einem Flansch 42 fest mit der Tragplatte 26 verbunden ist und eine sich ausgehend von dem Flansch 42 von der Tragplatte 26 weg erstreckende Führungshülse 44, an welcher der Schwenklagerkörper 14 um die Schwenkachse 20 drehbar gelagert ist, an welchem der Kugelhals 10 gehalten ist.

Alternativ ist es aber auch denkbar, den Schwenklagerkörper 14 fest mit dem Flansch 42 zu verbinden und an dem Führungskörper 40 den Kugelhals anzuordnen.

Die Führungshülse 44 umfasst eine zylindrische Außenmantelfläche 46, an welcher der Schwenklagerkörper 14 mit einer zylindrischen Innenfläche 48 anliegt um dadurch um die Schwenkachse 22 eine Drehführung um die Achse 22 zu erhalten, so dass der Schwenklagerkörper 14 und der Führungskörper 40 relativ zueinander drehbar sind und somit, der Kugelhals 10 von der Arbeitsstellung A in die Ruhestellung R und umgekehrt verschwenkbar ist.

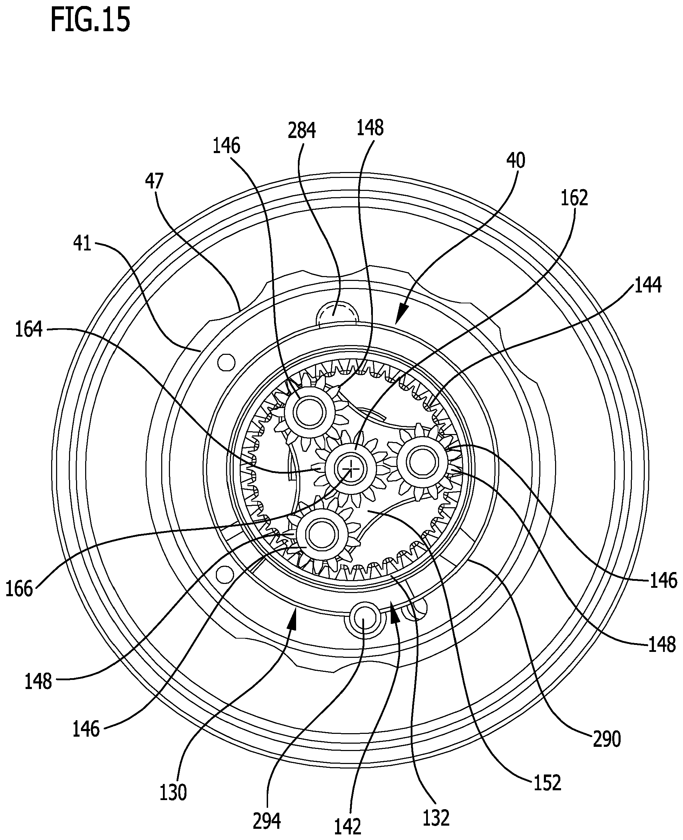

Der Führungskörper 40 umfasst im Falle seiner feststehenden Montage einen sich durch einen Durchbruch 27 in der Tragplatte 26 erstreckenden Fortsatz 41, der eine auf einer dem Flansch 42 gegenüberliegenden Seite auf den Fortsatz 41 folgende Aufnahme 43 für einen an dieser fixierbaren Haltering 45 trägt, so dass der Führungskörper 40 durch den Fortsatz 41 aufgrund seiner nicht rotationssymmetrischen sondern mit einer radial variierenden Außenkontur 47 (Fig. 15) in dem entsprechend geformten Durchbruch 27 durch Formschluss drehfest in der Tragplatte 26 sitzt und durch den Flansch 42 sowie den Haltering 45, die auf gegenüberliegenden Seiten der Tragplatte 26 anliegen, an dieser fixiert ist.

Der Führungskörper 40 bildet somit durch seine feste Verbindung mit der Tragplatte 26 und dem Träger 24 die fahrzeugfeste Drehlagerung für den Schwenklagerkörper 14.

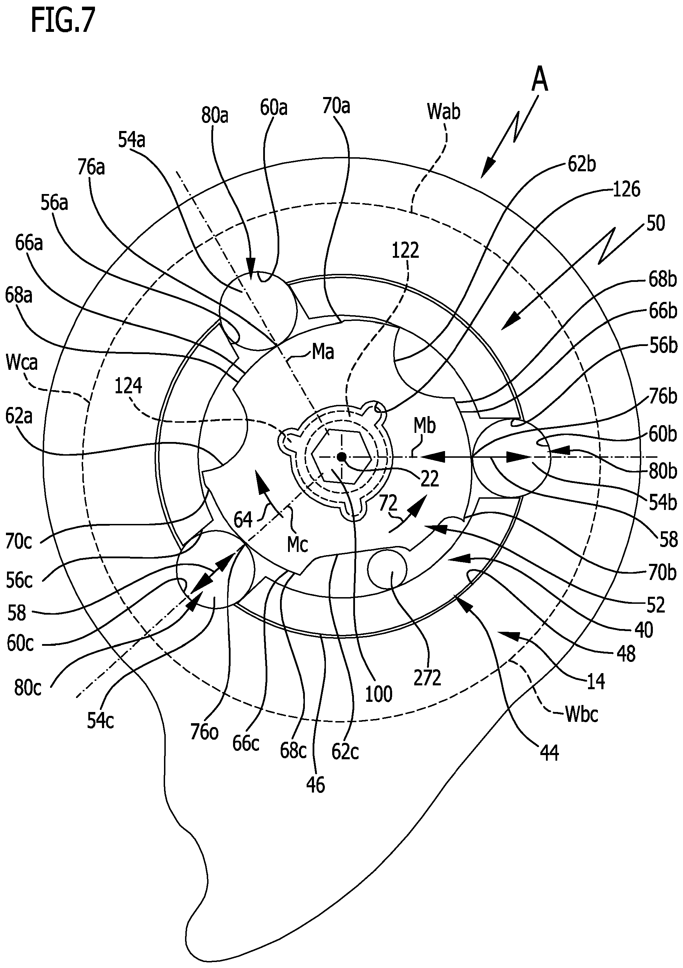

Zur Fixierung des Schwenklagerkörpers 14 und des Führungskörpers 40 relativ zueinander in der Arbeitsstellung A ist die Schwenklagereinheit 20 mit einer als Ganzes mit 50 bezeichneten Drehblockiereinrichtung (Fig. 7 bis Fig. 14) versehen, welche einen Betätigungskörper 52, mehrere durch den Betätigungskörper 52 beaufschlagbare Drehblockierkörper 54, von denen jeder in einer Führungsaufnahme 56 der Führungshülse 44 in einer im Wesentlichen radial zur Schwenkachse 22 verlaufenden Führungsrichtung 58 bewegbar geführt sind, aufweist.

Vorzugsweise sind zumindest die Drehblockierkörper 54 und die Führungsaufnahmen 56 symmetrisch zu einer senkrecht zur Schwenkachse 22 verlaufenden und die Drehblockierkörper 54 schneidenden geometrischen Ebene angeordnet, die in den Fig. 7 bis 14 der Zeichenebene entspricht.

Ferner umfasst die Drehblockiereinrichtung 50 sich ausgehend von der Innenfläche 48 des Schwenklagerkörpers 14 insbesondere in radialer Richtung zur Schwenkachse 22 in diesen hineinerstreckende Aufnahmen 60, mit denen die Drehblockierkörper 54 in der Arbeitsstellung A in Eingriff bringbar sind, wobei die Aufnahmen 60 in radialer Richtung zur Schwenkachse 22 zunehmend einen geringeren Abstand voneinander aufweisende Wandflächen haben.

Umfasst beispielsweise die Drehblockiereinrichtung 50, wie im Zusammenhang mit Fig. 7 bis Fig. 14 beim ersten Ausführungsbeispiel dargestellt, einen Satz von drei Drehblockierkörpern 54a, 54b und 54c, so weist die Führungshülse 44 einen entsprechenden Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 58 verschiebbar geführt sind, und der Schwenklagerkörper 14 ist mit einem Satz von Aufnahmen 60a, 60b und 60c versehen, mit welchen die Drehblockierkörper 54a, 54b und 54c in der Arbeitsstellung A in Eingriff bringbar sind.

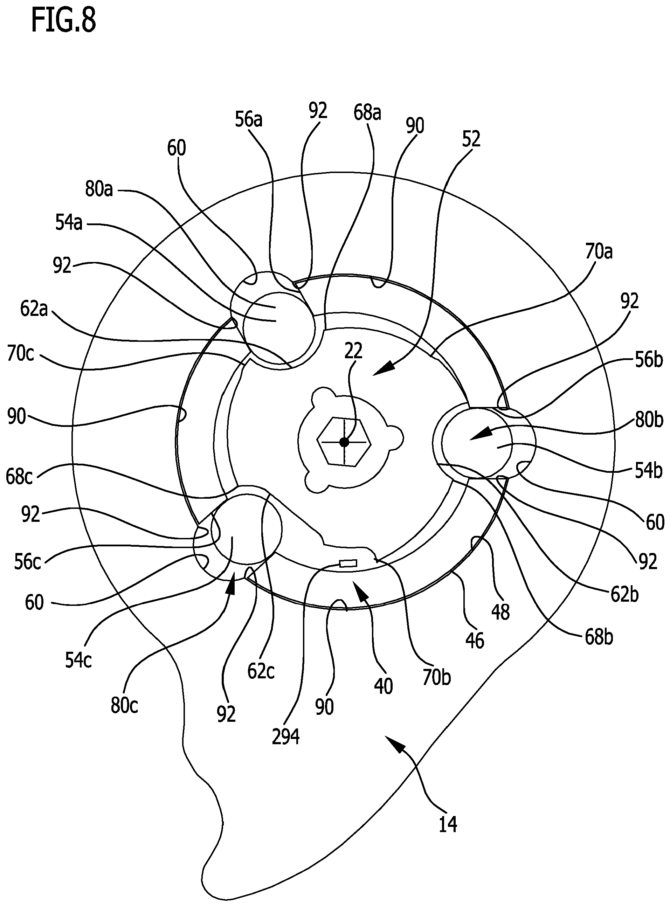

Zum geeigneten Bewegen und Positionieren der Drehblockierkörper 54 in der Führungsrichtung 58 ist der Betätigungskörper 52 mit einem der Zahl der Drehblockierkörper 54 entsprechenden Satz von der Zahl der Drehblockierkörper 54 entsprechenden, beispielsweise insgesamt drei, Rückzugsaufnahmen 62a, 62b und 62c und drei sich in einer Umlaufrichtung 64 an die Rückzugsaufnahmen 62a, 62b, 62c anschließenden Druckflächen 66a, 66b und 66c, die als radial zur Schwenkachse 22 wirkende Keilflächen ausgebildet sind, versehen, wobei die Drehblockierkörper 54 in ihrer Lösestellung in die Rückzugsaufnahmen 62a, 62b, 62c soweit eintauchen können (Fig. 8), dass sie nicht mehr über die Außenmantelfläche 46 der Führungshülse 44 überstehen, und wobei sich die Druckflächen 66a, 66b, 66c jeweils von einem sich unmittelbar an die jeweilige Rückzugsaufnahmen 62 anschließenden radial innenliegenden Anfangsbereich 68a, 68b und 68c mit zunehmender Erstreckung in der Umlaufrichtung 64 zunehmend radial zur Schwenkachse 22 nach außen erstrecken, bis zu jeweils einem radial außenliegenden Endbereich 70a, 70b und 70c und somit als bei einer Drehbewegung des Betätigungskörpers 52 als Keilflächen auf die Drehblockierkörper 54 wirken, um diese in ihre Drehblockierstellung zu bewegen.

Vorzugsweise verlaufen dabei die Druckflächen 66 als Spiral- oder Evolventensegmente relativ zur Schwenkachse 22.

Um die Drehblockierkörper 54 entweder in ihrer Drehblockierstellung durch Beaufschlagen derselben mit den Druckflächen 66 zwischen dem Anfangsbereich 68 und dem Endbereich 70 zu halten oder in der Lösestellung in die Rückzugsaufnahmen 62 eintauchen zu lassen, ist der Betätigungskörper 52 ebenfalls um die Schwenkachse 22, insbesondere koaxial zu dieser, drehbar und zwar so, dass entweder der Satz von Rückzugsaufnahmen 62a, 62b und 62c den Drehblockierkörpern 54 zugewandt ist und diesen, wie in Fig. 8 dargestellt, in seiner inaktiven Stellung oder Lösestellung die Möglichkeit gibt, beim Übergang in die Lösestellung in die Rückzugsaufnahmen 62 in radialer Richtung zur Schwenkachse 22 hin einzutauchen, um den jeweiligen Drehblockierkörpern 54 die Möglichkeit zu eröffnen, die Aufnahmen 60 zu verlassen und mitsamt dem Schwenklagerkörper 14 hinsichtlich einer Drehung um die Schwenkachse 22 relativ zum Führungskörper 40 freizugeben, so dass der Schwenklagerkörper 14 mit dem Kugelhals 10 relativ zur Führungshülse 44 ungehindert und frei drehbar ist, wie in Fig. 8 dargestellt, wobei in diesem Fall die Drehblockierkörper 54 sich nicht über die Außenmantelfläche 46 der Führungshülse 44 hinaus erstrecken.

Eine Drehung des Betätigungskörpers 52 bei in den Rückzugsaufnahmen 62 sitzenden Drehblockierkörpern 54 in einer Drehrichtung 72 entgegengesetzt zur Umlaufrichtung 64 bewirkt, dass die Drehblockierkörper 54 aus den Rückzugsaufnahmen 62 heraus bewegt werden und zunächst in der aktiven Stellung oder Drehblockierstellung des Betätigungskörpers 52 auf den Anfangsbereichen 68 der Druckflächen 66 aufsitzen, dabei jedoch beispielsweise in die Aufnahmen 60 eintauchen und damit in ihrer Drehblockierstellung die freie Drehbarkeit des Schwenklagerkörpers 14 relativ zum Führungskörper 40 unterbinden.

Wird der Betätigungskörper 52 in der Drehrichtung 72 entgegengesetzt zur Umlaufrichtung 64 weitergedreht, so wirken immer weiter radial gegenüber der Schwenkachse 22 außen liegenden Bereiche der Druckflächen 66 auf die Drehblockierkörper 54 und drücken somit die Drehblockierkörper 54 zunehmend in der Arbeitsstellung A des Kugelhalses 10 in die Aufnahmen 60a, 60b und 60c hinein (Fig. 7), um somit eine im Wesentlichen spielfreie Fixierung des Schwenklagerkörpers 14 relativ zum Führungskörper 40, in diesem Fall zur Führungshülse 44, zu erreichen.

In der Drehblockierstellung der Drehblockierkörper 54 steht der Betätigungskörper 52 in seiner aktiven Stellung so, dass die Drehblockierkörper 54, wie in Fig. 7 dargestellt, ungefähr auf Mittelbereichen 76, die zwischen den Anfangsbereichen 68 und den Endbereichen 70 liegen, der Druckflächen 66 aufsitzen und von diesen beaufschlagt werden.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt. Insbesondere ist der Betätigungskörper 52 so in der Führungshülse 44 gelagert, dass sich der Betätigungskörper 52 aufgrund des radialen Spiels relativ entsprechend der durch Fertigungstoleranzen bedingten Lage der Drehblockierkörper 54 innerhalb des Führungskörpers 40 selbst zentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 58a, 58b und 58c mit ungefähr gleich großen Kräften auf die Aufnahmen 60a, 60b und 60c, so dass auch die auf den Betätigungskörper 52 wirkenden Reaktionskräfte ungefähr gleich groß sind.

Vorzugsweise sind die Drehblockierkörper 54, als Kugeln, ausgebildet, die somit einerseits an den Betätigungskörper 52 und andererseits auch an den Aufnahmen 60 anliegen.

Somit erfolgt nur eine spielbehaftete drehbare Lagerung des Betätigungskörpers 52 relativ zur Schwenkachse 22, die primär dann relevant ist, wenn der Betätigungskörper 52 die Drehblockierkörper 54 in einer Lösestellung hält, in welcher die Drehblockierkörper 54 in die Rückzugsaufnahmen 62 des Betätigungskörpers 52 eintauchen.

Um den Betätigungskörper 52 zu veranlassen, sich ohne äußere Einwirkung stets in der Drehrichtung 72 so zu bewegen, wobei sich die Drehblockierkörper 54 in Richtung der Drehblockierstellung bewegen, ist der Betätigungskörper 52 durch eine Drehfeder 114 beaufschlagt (Fig. 6), die einerseits auf den Betätigungskörper 52 wirkt und andererseits radial außenliegend an dem Führungskörper 40 abgestützt ist.

Die Drehfeder 114 bewirkt auch, dass der Betätigungskörper 52 die Drehblockierkörper 54 kraftbeaufschlagt in die Aufnahmen 60 drückt und somit wird der Schwenklagerkörper 14 spielfrei fixiert, wobei die Spielfreiheit auch bei sich aufgrund der Belastungen im Betrieb verändernden Geometrie der Aufnahmen 60 durch ein Weiterdrehen des Betätigungskörpers 52 in der Drehrichtung 72 aufrechterhalten wird.

Die beispielsweise drei Führungsaufnahmen 56 und die in diesen angeordneten Drehblockierkörper 54, sowie die diesen Drehblockierkörpern 54 jeweils zugeordneten Rückzugsaufnahmen 62 mit den sich an diese anschließenden Druckflächen 66 im Betätigungskörper 52 bilden jeweils drei Drehblockiereinheiten 80 und diese sind um die Schwenkachse 22 herum in ungleichen Winkelabständen Wab, Wbc, Wca (bezogen auf die jeweiligen Mittelachse Ma, Mb, Mc) relativ zueinander angeordnet, wodurch, bezogen auf die Schwenkachse 22 als Drehachse, eine Drehblockierkonfiguration der Drehblockiereinheiten 80 nur bei einer Drehung der Drehblockierkonfiguration um 360° zu einer deckungsgleichen Anordnung der Drehblockiereinheiten 80 führt.

Beispielsweise beträgt der Winkelabstand Wab = 120°, der Winkelabstand Wbc = 137° und der Winkelabstand Wca = 103°, das heißt, dass die Abweichung von gleichen Winkelabständen 17° beträgt.

Es sind bei beispielsweise drei Drehblockiereinheiten insbesondere aber auch Abweichungen von gleichen Winkelabständen bis zu 30° oder mehr möglich, so dass beispielsweise Winkelabstände von Wab = 120°, Wbc = 150° und Wca = 90° möglich sind.

Desgleichen sind die Aufnahmen 60 relativ zueinander bezogen auf die Schwenkachse 22 in einer Aufnahmenkonfiguration mit denselben Winkelabständen relativ zueinander angeordnet, die bezogen auf die Schwenkachse 22 ebenfalls nur bei einer Drehung um 360° zu einer deckungsgleichen Anordnung der jeweiligen Aufnahmenkonfiguration führen, so dass diese in der Arbeitsstellung deckungsgleich zu der Drehblockierkonfiguration ist, so dass in der Arbeitsstellung A, jeweils ein Drehblockierkörper 54 einer der Drehblockiereinheiten 80 einer der Aufnahmen 60 gegenübersteht und in der Drehblockierstellung mit dieser in Eingriff kommen kann, wie in Fig. 7 dargestellt, wodurch der Schwenklagerkörper 14 drehfest relativ zur Schwenklagereinheit 20 fixiert ist (Fig. 7).

Wird jedoch der Betätigungskörper 52 in der Arbeitsstellung A gegen die Kraftwirkung der Drehfeder 114 in die Lösestellung bewegt, wie nachfolgend beschrieben, so hat jeder der Drehblockierkörper 54 der jeweiligen Drehblockiereinheit 80 die Möglichkeit in die dieser zugeordneten Rückzugsaufnahme 62 einzutauchen, und die jeweilige Aufnahme 60 zu verlassen, so dass der Schwenklagerkörper 14 um die Schwenkachse 22 aus der Arbeitsstellung heraus schwenkbar ist (Fig. 8).

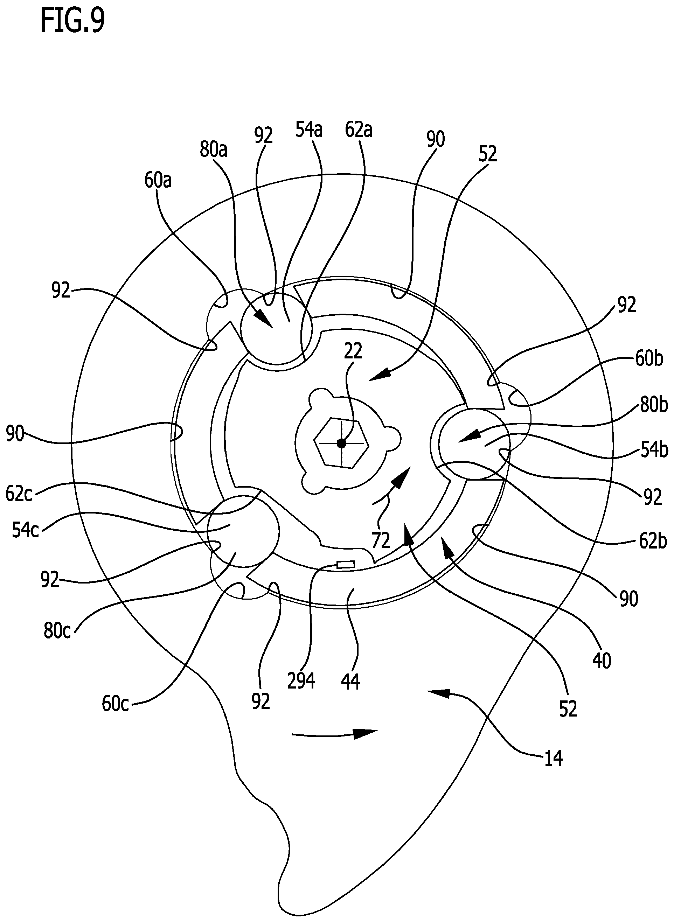

Sobald der Schwenklagerkörper 14 die Arbeitsstellung A verlassen hat (Fig. 9), hat die zur Schwenkachse 22 in der Drehblockierkonfiguration angeordnete Gesamtheit der Drehblockiereinheiten 80 nicht mehr die Möglichkeit mit der in der Aufnahmenkonfiguration angeordneten Gesamtheit der Aufnahmen 60 in Eingriff zu kommen, so dass, dann wenn eine Beaufschlagung des Betätigungskörpers 52 in der Drehrichtung 72 erfolgt, die Gesamtheit der in den Rückzugsaufnahmen 62 sitzenden Drehblockierkörper 54 nicht mehr in die Gesamtheit der Aufnahmen 60 eingreifen kann, da die Drehblockierkörper 54 zwar durch den durch die Drehfeder 114 in der Drehrichtung 72 beaufschlagten Betätigungskörper 52, insbesondere durch die schräg zur Führungsrichtung 58 verlaufenden gewölbten Grundflächen der Rückzugsaufnahmen 62, in Richtung des Schwenklagerkörpers 14 beaufschlagt werden können, jedoch in jeder der außerhalb der Arbeitsstellung A liegenden Drehstellungen des Schwenklagerkörpers 14 niemals die Gesamtheit der Drehblockierkörper 54 jeweils einer Aufnahme 60 aus der Gesamtheit der Aufnahmen 60 gegenübersteht und somit stets mindestens einer der Drehblockierkörper 54 durch eine der zwischen den Aufnahmen 60 verlaufenden, im einfachsten Fall durch die zylindrische Innenfläche 48 des Schwenklagerkörpers 14 gebildeten, Blockierflächen 90 blockiert ist und dadurch eine durch die Drehfeder 114 bewirkte Drehung des Betätigungskörpers 52 in der Drehrichtung 72 verhindert, so dass der Betätigungskörper 52 dadurch auch bei Einwirkung der Drehfeder 114 in der Drehrichtung 72 in allen Schwenkstellungen des Schwenklagerkörpers 14 außerhalb der Arbeitsstellung A in der Lösestellung gehalten wird und folglich erst wieder bei Erreichen der Arbeitsstellung A in die Drehblockierstellung übergehen kann.

Vorzugsweise ist die Abweichung der Drehblockierkonfiguration der Drehblockiereinheit 80 und die Aufnahmekonfiguration der Aufnahmen 60 von einer symmetrischen Ausbildung so groß, dass dann wenn eine der Drehblockiereinheiten 80 einer der Aufnahmen 60 gegenübersteht, so dass der Drehblockierkörper 54 mit dieser Aufnahme 60 in Eingriff kommen könnte, mindestens eine, noch besser mindestens zwei, Drehblockiereinheiten 80 relativ zu der nächstliegenden Aufnahme 60 soweit in Drehrichtung versetzt sind, dass ein Berührpunkt des dieser Drehblockiereinheit 80 zugeordneten Drehblockierkörpers 54 bereits auf einer der Blockierflächen 90 liegt und nicht im Bereich einer der Aufnahmen 60 zu liegen kommen kann, so dass eine zuverlässige Blockierung des Betätigungskörpers 52, insbesondere dann, wenn der Betätigungskörper 52 durch die Drehfeder 114 in der Drehrichtung 72 beaufschlagt ist, durch die in der Lösestellung wirksamen Blockierflächen 90 gewährleistet ist.

Wenn auf den Betätigungskörper 52 mit einer Drehrichtung 64 entgegengesetzt zur Wirkung der Drehfeder 114 eingewirkt und dieser maximal verdreht wird, so liegen die Drehblockierkörper 54 in allen Schwenkstellungen des Schwenklagerkörpers 14 mit Spiel zwischen der jeweiligen Blockierfläche 90 und den Rückzugsaufnahmen 62 wie in Fig. 9 dargestellt.

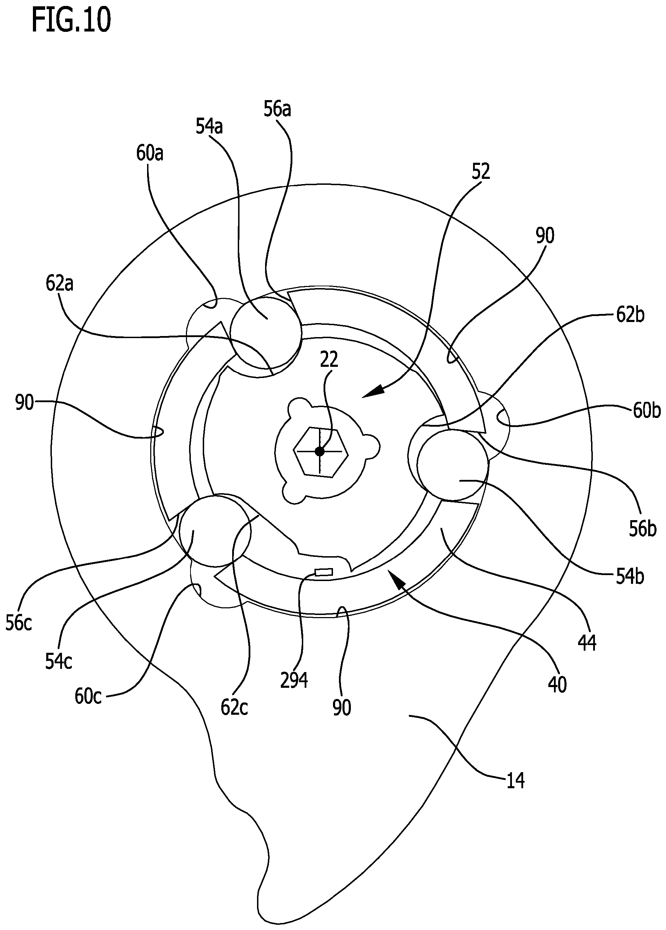

Wenn jedoch die Wirkung der Drehfeder 114 in der Drehrichtung 72 dominiert, so liegen auch beim Verschwenken von der Arbeitsstellung A in die Ruhestellung R in den jeweiligen Schwenkstellungen des Schwenklagerkörpers 14 Verhältnisse vor, wie sie in Fig. 10 bis 14 dargestellt sind.

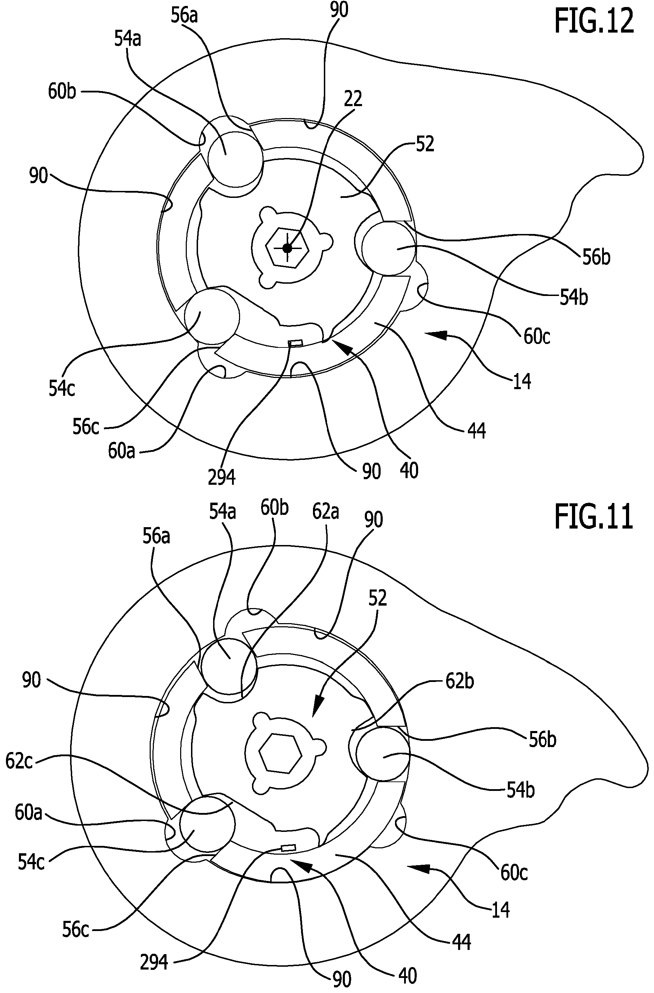

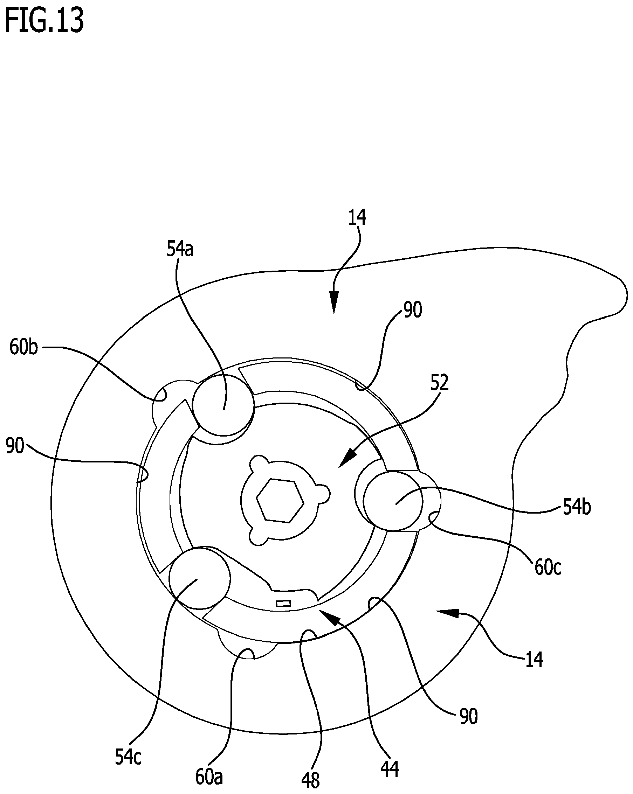

Die Fig. 9 bis 14 zeigen alle, dass der Betätigungskörper 52 in jeder der Schwenkstellungen des Schwenklagerkörpers 14 durch mindestens zwei Drehblockierkörper 54, die an einer der Blockierflächen 90 anliegen, in der Lösestellung gehalten wird, und verhindern, dass einer der Drehblockierkörper 54, beispielsweise der Drehblockierkörper 54c in Fig. 11, der Drehblockierkörper 54a in Fig. 12 und der Drehblockierkörper 54b in Fig. 13, in die jeweils mit diesen fluchtenden Aufnahme 60 eingreifen können.

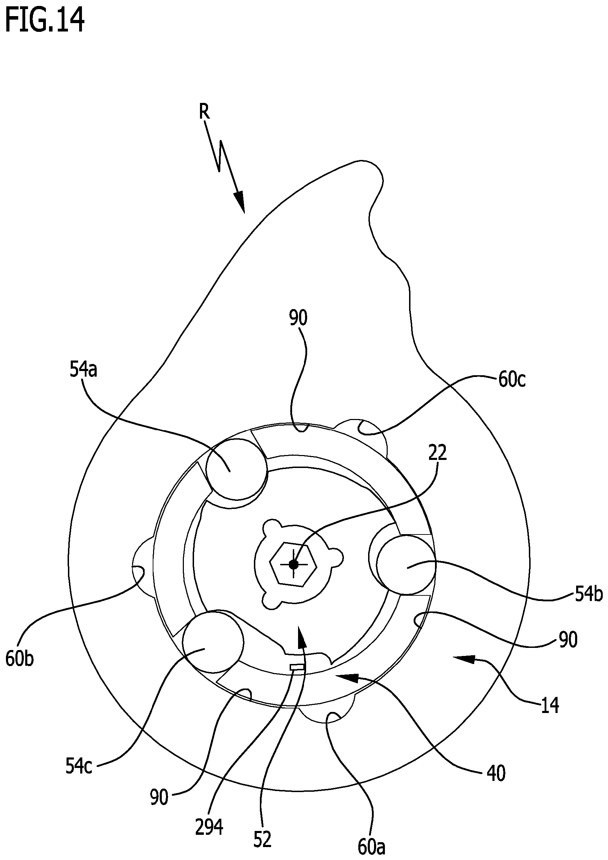

In jedem Fall liegen die Verhältnisse gemäß Fig. 9 bis 14 beim Verschwenken von der Ruhestellung R (Fig. 14) in die Arbeitsstellung A vor, wobei durch das Anliegen der Drehblockierkörper 54 an den Blockierflächen 90 gemäß Fig. 9 beim Zurückschwenken von der Ruhestellung R in die Arbeitsstellung A in der Reihenfolge gemäß Fig. 14 bis Fig. 9 die Drehblockierkörper 54 bei geringer Geräuschentwicklung von den Blockierflächen 90 über sich unmittelbar und insbesondere stufenlos an diese anschließende Öffnungsränder 92 der Aufnahmen 60 in die Aufnahmen 60 gleiten und in die Drehblockierstellung gemäß Fig. 7 übergehen.

Die Führungshülse 44 erstreckt sich vorzugsweise mit einem eine Aufnahme 102 für den Betätigungskörper 52 bildenden Abschnitt zwischen dem Flansch 42 und einem die Führungshülse 44 abschließenden sich radial zur Schwenkachse 22 erstreckenden Flansch 104, welcher vorzugsweise einstückig an die Führungshülse 44 angeformt ist und die Aufnahme 102 für den Betätigungskörper 52 begrenzt, so dass der Betätigungskörper 52 radial zur Schwenkachse 22 durch die Aufnahme 102 der Führungshülse 44 geführt ist und axial in Richtung der Schwenkachse 22 durch Anlage an einer Innenseite 108 des Flansches 104 geführt ist.

Der Flansch 104 weist ferner noch eine zur Schwenkachse 22 koaxiale Aufnahme 106 auf, in welcher ein von einer Schwenkantriebswelle 100 durchsetzter Einsatz 110 eingesetzt, insbesondere eingeschraubt, ist, der in der Aufnahme 106 sitzt.

Auf einer dem Flansch 104 gegenüberliegenden Seite der Aufnahme 102 für den Betätigungskörper 52 bildet die Führungshülse 44, beispielsweise mit einem den Flansch 42 durchsetzenden Abschnitt, eine Drehfederaufnahme 112, in welcher im Anschluss an den Betätigungskörper 52 die Drehfeder 114 angeordnet ist, die einerseits mit einem äußeren Ende in der Drehfederaufnahme 112 fixiert ist und mit einem inneren Ende mit einer Antriebshülse 122 verbunden ist, welche drehfest mit dem Betätigungskörper 52 gekoppelt ist.

Hierzu ist die Antriebshülse 122, wie in den Fig. 6, 7 und 16 dargestellt, beispielsweise mit Fortsätzen 124 versehen, die zur Herstellung einer Formschlussverbindung in entsprechende Ausnehmungen 126 in den Betätigungskörper 52 eingreifen.

Dadurch, dass die Drehfeder 114 auf die Antriebshülse 122 wirkt, die drehfest mit dem Betätigungskörper 52 gekoppelt ist, erfolgt durch das Einwirken der Drehfeder 114 auf die Antriebshülse 122 ein Antrieb des Betätigungskörpers 52 in der Drehrichtung 72, so dass der Betätigungskörper 52 bei ungehinderter Einwirkung der Drehfeder 114 auf die Antriebshülse 122 stets in der Drehrichtung 72 beaufschlagt ist, so dass dieser die Tendenz hat, die Drehblockierkörper 54 kraftbeaufschlagt in der Führungsrichtung 58 radial von der Schwenkachse 22 weg nach außen zu bewegen, wobei diese Bewegung durch die Blockierflächen 90 in allen vorgesehenen Schwenkstellungen des Schwenklagerkörpers 14, mit Ausnahme der Arbeitsstellung A, verhindert wird und folglich nur in der Arbeitsstellung A die Drehblockierkörper 54 in die Aufnahmen 60 gedrückt werden und somit der Schwenklagerkörper 14 relativ zur Führungshülse 44 drehfest und insbesondere spielfrei fixiert wird.

Um die Drehblockierkörper 54 in die Lösestellung bewegen zu können, ist eine Einwirkung auf den Betätigungskörper 52 entgegengesetzt zur Drehrichtung 72 und auch somit entgegengesetzt zur Wirkung der Drehfeder 114 erforderlich.

Hierzu ist die Antriebshülse 122 mittels eines als Ganzes mit 130 bezeichneten Planetengetriebes 130 antreibbar (Fig. 6), welches in einer Getriebeaufnahme 132 der Führungshülse 44, insbesondere koaxial zur Schwenkachse 22, angeordnet ist, welche beispielsweise teilweise innerhalb des Durchbruchs 27 der Trägerplatte 26 angeordnet ist und vorzugsweise sich auf einer dem Flansch 42 gegenüberliegenden Seite von dem Durchbruch 27 der Trägerplatte 26 weg erstreckt.

Das Planetengetriebe 130 (Fig. 15) umfasst seinerseits ein Hohlrad 142, welches in der Getriebeaufnahme 132 geführt ist und mit einer Innenverzahnung 144 versehen ist, mit welcher Planetenräder 146 mit ihrer Außenverzahnung 148 in Eingriff stehen.

Dabei sind die Planetenräder 146 drehbar an einem Planetenradträger 152 gehalten, der seinerseits drehfest mit der Schwenkantriebswelle 100 verbunden ist, so dass der Planetenradträger 152 einen Abtrieb des Planetengetriebes 130 zum Ausführen des Verschwenkens des Kugelhalses 10 bildet.

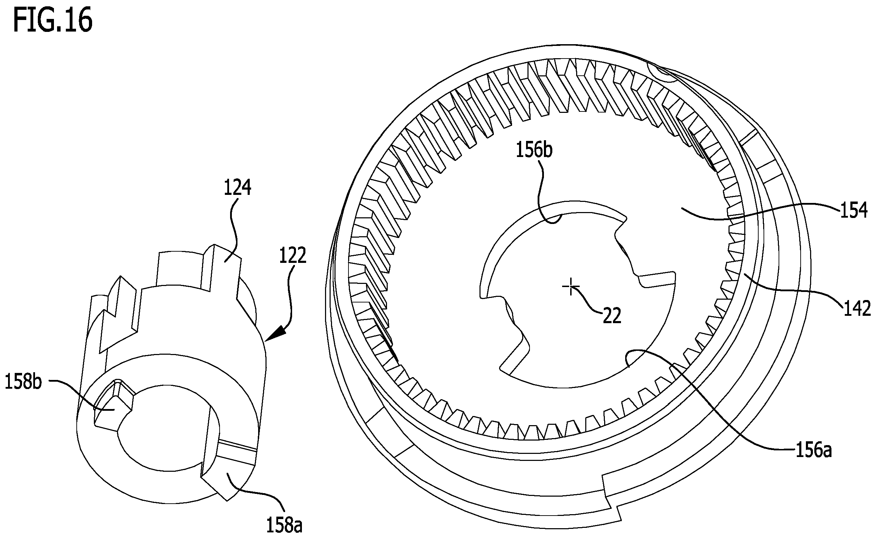

Ferner umfasst - wie in Fig. 16 dargestellt - das Hohlrad 142 einen zwischen dem Planetenradträger 152 und der Drehfeder 114 liegenden Flanschkörper 154, welcher sich ebenfalls in Richtung der Schwenkantriebswelle 100 erstreckt, diese umschließt, jedoch relativ zu dieser drehbar ist und einen Abtrieb des Planetengetriebes 130 zum Betätigen der Drehblockiereinrichtung 50 darstellt.

Wie in Fig. 16 dargestellt, weist der Flanschkörper 154 um die Schwenkachse 22 umlaufend angeordnete kreisbogenförmige Antriebsschlitze 156a, 156b auf, welche mit in diese eingreifenden Antriebsfingern 158a, 158b der Antriebshülse 122 zusammenwirken, und welche allerdings so gestaltet sind, dass durch die Differenz zwischen dem Winkelbereich um die Schwenkachse 22, über welchen sich die Antriebsschlitze 156 erstrecken, und dem Winkelbereich um die Schwenkachse 22, über welchen sich die Antriebsfinger 158 erstrecken, ein Freigang der Antriebshülse 122 relativ zum Hohlrad 142 möglich ist, der nachfolgend noch im Einzelnen erläutert wird.

Die Planetenräder 146 sind ferner mit ihrer Außenverzahnung 148 in Eingriff mit einer Außenverzahnung 164 eines Sonnenrades 162 des Planetengetriebes 130, das auf einer als Ganzes mit 166 bezeichneten Antriebswelle sitzt, die koaxial zur Schwenkachse 22 angeordnet ist und beispielsweise mittels eines endseitigen Wellenstummels 168, der in eine stirnseitige Bohrung 172 der Schwenkantriebswelle 100 eingreift, relativ zur Schwenkantriebswelle 100 frei drehbar, jedoch koaxial zu dieser gelagert ist.

Die Antriebswelle 166 trägt im Abstand von dem Planetengetriebe 130 ein Antriebszahnrad 174, beispielsweise ein Kegelzahnrad, welches von einem Abtriebszahnrad einer motorischen Antriebseinheit 182 angetrieben ist, die beispielsweise einerseits einen Antriebsmotor, vorzugsweise einen Elektromotor, und andererseits ein Untersetzungsgetriebe zum Antreiben des Antriebszahnrads umfasst.

Die Antriebseinheit 182 ist beispielsweise an einem Abdeckkörper 184 gehalten, welcher ausgehend von der Trägerplatte 26 die Antriebswelle 166 mit dem Antriebszahnrad 174 sowie das mit diesem kämmende Abtriebszahnrad übergreift und außerdem noch die Antriebswelle 166 auf einer dem Wellenstummel 168 abgewandten Seite lagert.

Somit bilden das Planetengetriebe 130 und die Antriebseinheit 182 beispielsweise unter anderem eine Betätigungseinrichtung 180 für die Drehblockiereinrichtung 50.

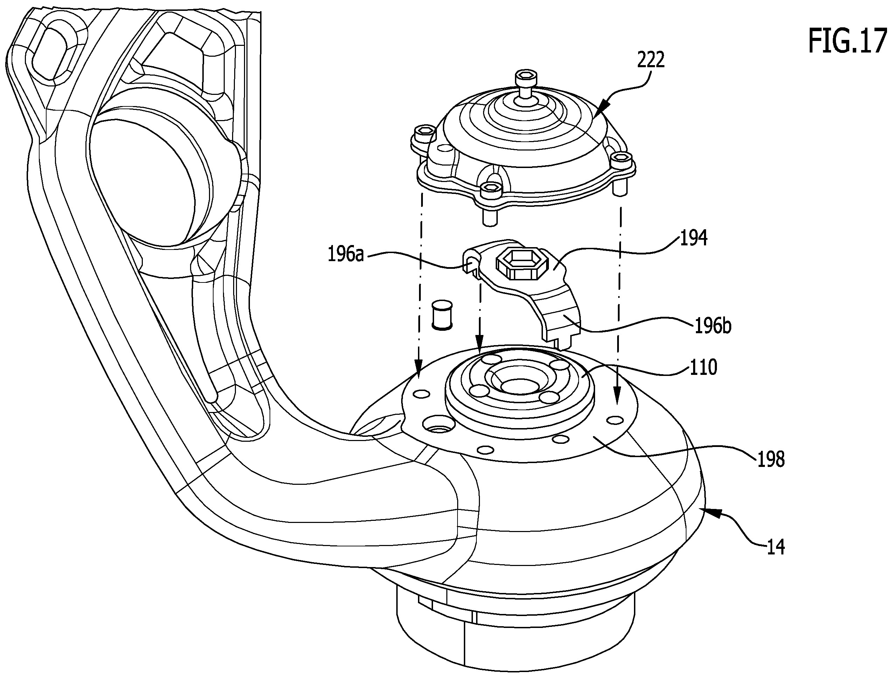

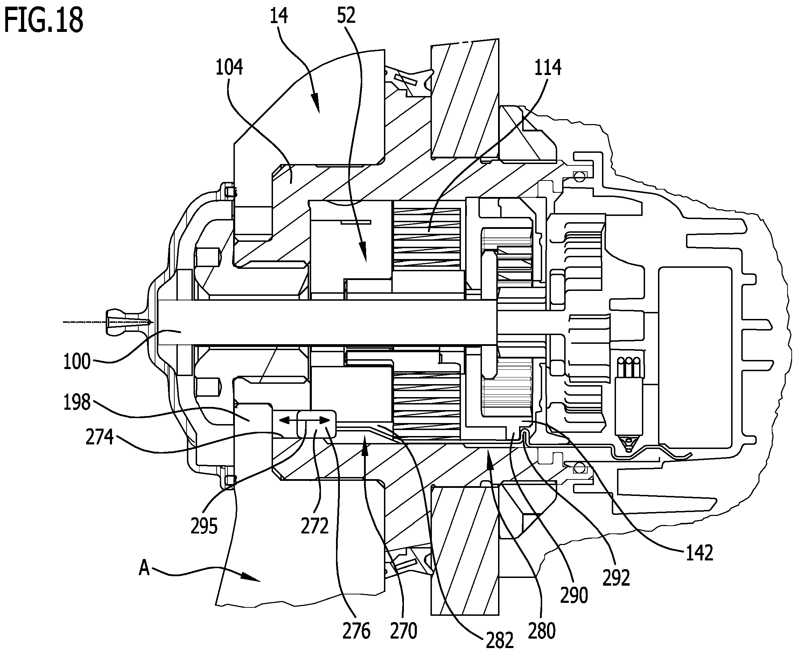

Die mit dem Planetenradträger 152 drehfest gekoppelte Schwenkantriebswelle 100 durchsetzt - wie bereits beschrieben - den Flansch 104 des Führungskörpers 40 und ist an einem über den Einsatz 110 überstehenden Ende 192 drehfest mit einem Antriebskörper 194 gekoppelt (Fig. 17 und 18), welcher zwei Antriebsarme 196a und 196b aufweist, die sich in Richtung eines Endflansches 198 des Schwenklagerkörpers 14 erstrecken, welcher einen außenliegenden Bereich 200 des Flansches 104 des Führungskörpers 40 übergreift, und dabei formschlüssig in Ausnehmungen desselben eingreifen, um zwischen dem Antriebskörper 194 und dem Schwenklagerkörper 14 eine drehfeste Verbindung herzustellen.

Der Endflansch 198 übergreift dabei den Flansch 104 des Führungskörpers 40 in dem außenliegenden Bereich 200 und erstreckt sich bis zu einem Führungsansatz 202 des Flansches 104, wobei der Endflansch 198 beispielsweise mit einer radial innen liegenden Zylinderfläche 204 eine äußere Zylinderfläche 206 des Führungsansatzes 202 umgreift und beispielsweise an dieser anliegt und dadurch ebenfalls noch zusätzlich am Führungsansatz 202 koaxial zur Schwenkachse 22 geführt ist.

Darüber hinaus erstreckt sich in der Aufnahme 106 des Führungsansatzes 202 ein Gewinde 212, in welchem der Einsatz 110 fixiert, insbesondere eingeschraubt, ist, der mit einem Außenflansch 214 den Endflansch 198 partiell in einem radial innenliegenden Bereich übergreift, so dass der Endflansch 198 des Schwenklagerkörpers 14 axial unverschiebbar zwischen dem Flansch 104 und dem Außenflansch 214 des Einsatzes 110 und somit relativ zum Führungskörper 40 axial unverschiebbar geführt ist.

Auf dem Endflansch 198 ist ferner eine Abdeckung 222 drehfest montiert, welche den Antriebskörper 194 mit den Antriebsarmen 196 übergreift und eine Lageraufnahme 224 für das Ende 192 der Führungswelle 100 bildet, so dass die Abdeckung 222 mit dem Schwenklagerkörper 14 eine Einheit bildet, die um die Schwenkachse 22 drehbar ist (Fig. 17).

Die Abdeckung 222 sitzt dabei auf dem Endflansch 198 auf, und ist auf diesem drehfest fixiert.

Bei der vorstehend beschriebenen Lösung ist nur ein Satz von Aufnahmen 60 für die drehfeste Festlegung des Schwenklagerkörpers 14 in der Arbeitsstellung A vorgesehen, während in der Ruhestellung R eine Festlegung des Schwenklagerkörpers 14 durch die Drehblockiereinrichtung 50 nicht vorgesehen ist.

Zum sicheren Betrieb der erfindungsgemäßen Anhängekupplung ist eine als Ganzes mit 270 bezeichnete Mehrfachblockiereinrichtung vorgesehen, welche einen Blockierkörper 272 umfasst, der seinerseits in einer Führung 274, beispielsweise ausgebildet als Bohrung, in oder an dem Flansch 104 der Führungshülse 44 des Führungskörpers 40, welcher zwischen dem Betätigungskörper 52 und dem Endflansch 198 des Schwenklagerkörpers 14 liegt, in einer Verschieberichtung 295 beispielsweise in Richtung parallel zur Schwenkachse 22 geführt ist.

Wie in Fig. 18 dargestellt ist der Blockierkörper 272, so positionierbar, dass er in einer Sicherungsstellung mit einem dem Betätigungskörper 52 zugewandten ersten Ende 276 in der Lage ist, ausgehend von der Führung 274 in eine Aufnahme 282 des Betätigungskörpers 52 einzugreifen, wenn dieser in der Drehblockierstellung steht und somit den Schwenklagerkörper 14 mit dem Kugelhals 10 in der Arbeitsstellung fixiert.

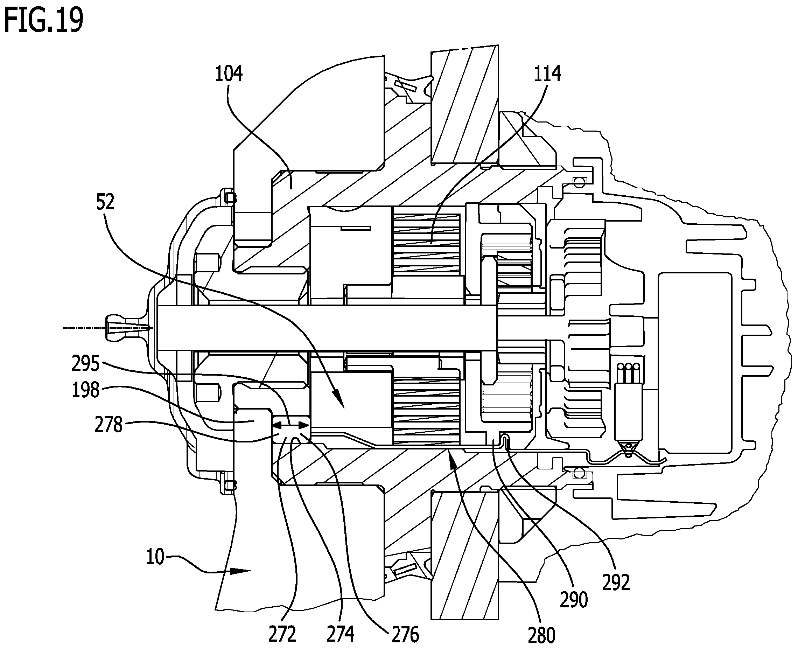

Ferner ist der Blockierkörper 272, wie in Fig. 19 dargestellt, in eine Zwischenstellung bewegbar, in welcher dieser mit dem ersten Ende 276 nicht mehr in die Ausnehmung 282 des Betätigungskörpers 52 eingreift, sondern vorzugsweise innerhalb der Ausdehnung Flansches 104 in der Verschieberichtung 295 positioniert ist.

Ferner verbleibt der Blockierkörper 272 in der Zwischenstellung mit einem zweiten, dem ersten Ende 276 gegenüberliegenden Ende 278 ohne Blockierwirkung, und ist dabei vorzugsweise ebenfalls innerhalb der Ausdehnung des Flansches 104 in der Verschieberichtung 295 positioniert (Fig. 19).

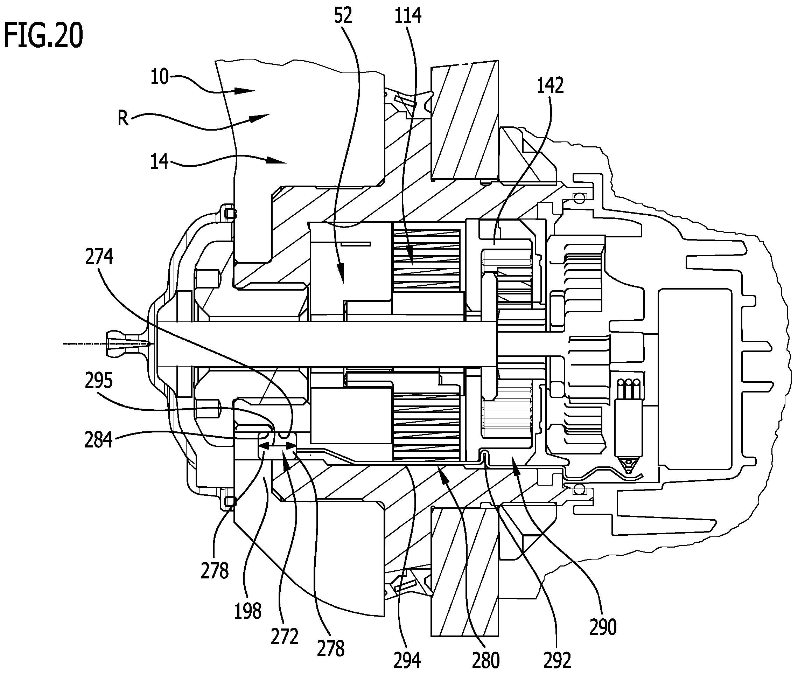

Der Blockierkörper 272 kann außerdem relativ zu der Führung 274 in der Verschieberichtung 295 so verschoben werden kann, dass dieser mit dem zweiten Ende 278 in eine Aufnahme 284 des Endflansches 198 des Schwenklagerkörpers 14 eingreift, und zwar nur dann, wenn der Schwenklagerkörper 14 und somit auch der Kugelhals 10 in der Ruhestellung stehen (Fig. 20), so dass der Blockierkörper 272 dann in einer Ruhestellungsblockierstellung steht.

Somit besteht mit der Mehrfachblockiereinrichtung 270 die Möglichkeit, durch Bewegen des Blockierkörpers 272 in seiner Verschieberichtung 295 in der Sicherungsstellung mittels des Blockierkörpers 272 den Betätigungskörper 52 in seiner Drehblockierstellung zu sichern und somit eine zusätzliche Sicherung für den in der Drehblockierstellung bereits federbeaufschlagten Betätigungskörper 52 zu ermöglichen, andererseits die Möglichkeit, in der Zwischenstellung keinerlei Blockierfunktion auszuüben und in der Ruhestellungsblockierstellung den Schwenklagerkörper 14 und somit auch den Kugelhals 10 in der Ruhestellung zu blockieren.

Diese Bewegung des Blockierkörpers 272 erfolgt mittels einer Blockierbetätigungseinrichtung 280, welche mit der Betätigungseinheit 180 für die Drehblockiereinrichtung 50 gekoppelt ist.

Die Blockierbetätigungseinrichtung 280 umfasst eine als Ganzes mit 290 bezeichnete Kulissenführung, wobei die Kulissenführung 290 auf einen Kulissenfolger 292 wirkt, der seinerseits auf ein mit dem Blockierkörper 272 gekoppeltes und ebenfalls in der Verschieberichtung 295 bewegbares Übertragungselement 294 der Blockierbetätigungseinrichtung 280 einwirkt, so dass durch die Blockierbetätigungseinrichtung 280 der Blockierkörper 272 in die Sicherungsstellung, die Zwischenstellung und die Ruhestellungsblockierstellung bewegbar ist.

Vorzugsweise ist dabei die Kulissenführung 290 umfangsseitig des Hohlrades 142 der Betätigungseinheit 180 angeordnet, welches Teil des Planetengetriebes 130 ist, das einerseits über die Antriebshülse 122 zum Antrieb des Betätigungskörpers 52 der Drehblockiereinrichtung 50 dient und andererseits zum Verschwenken des Schwenklagerkörpers 14 durch Antreiben der Schwenkantriebswelle 100 über den mit dieser gekoppelten Planetenradträger 152.

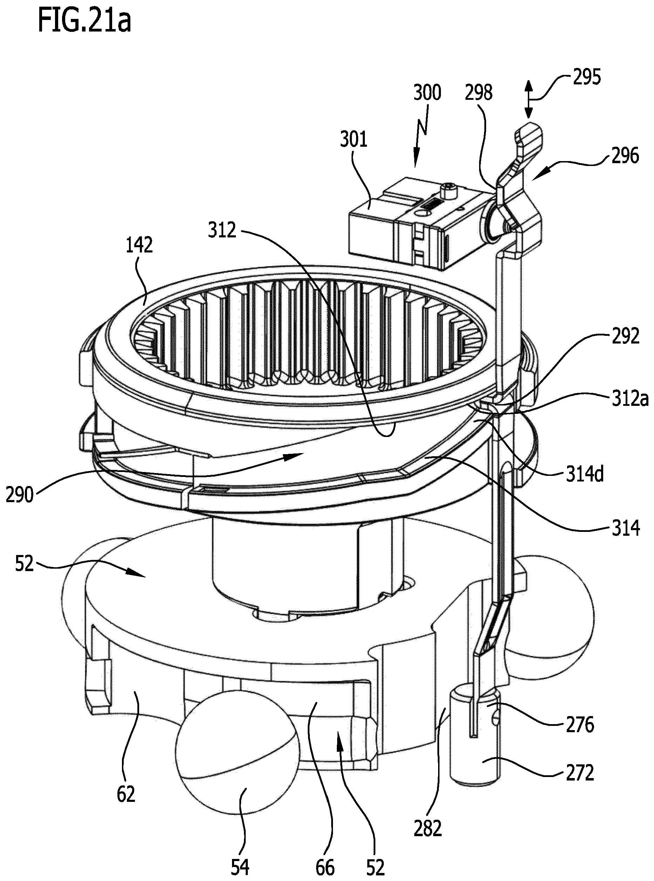

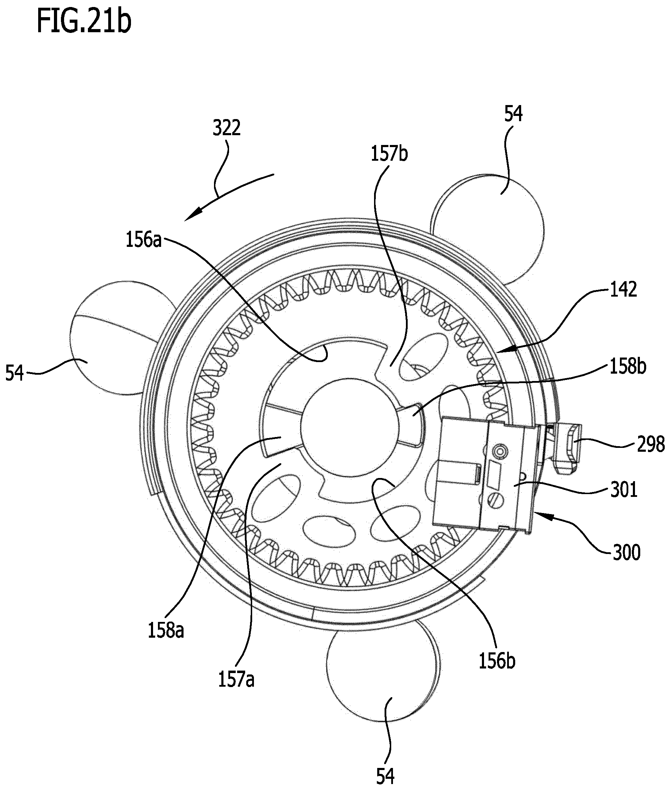

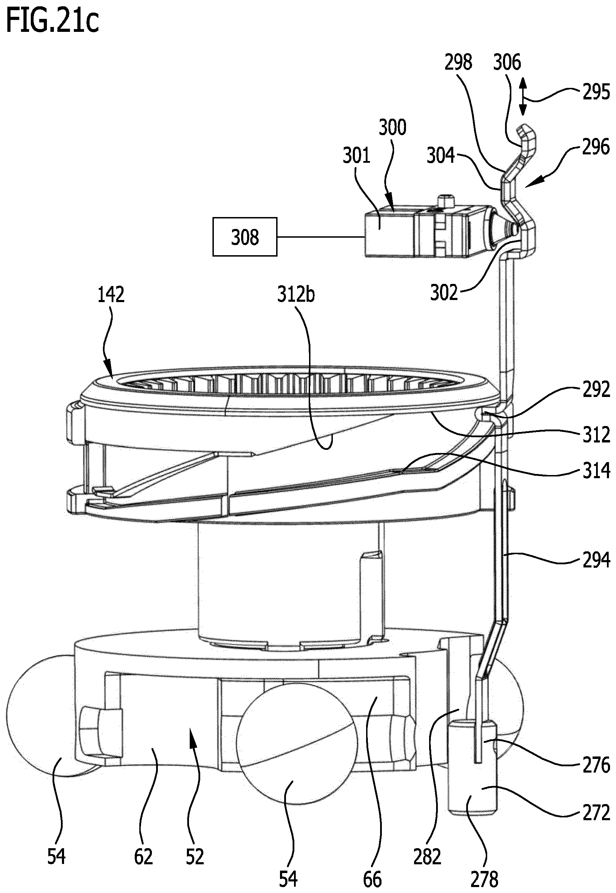

Wie in Fig. 21, insbesondere Fig. 21a, dargestellt, steht der Betätigungskörper 52 in der Drehblockierstellung der Drehblockiereinrichtung 50 so, dass dieser die Drehblockierkörper 54 in radialer Richtung zur Schwenkachse 22 beaufschlagt und in der Führungsrichtung 58 in die vorgesehenen Aufnahmen 60 hineinbewegt, um somit in der Arbeitsstellung A den Schwenklagerkörper 14 drehfest relativ zur Schwenkachse 22 zu fixieren.

Hierzu wirken insbesondere die Druckflächen 66 des Betätigungskörpers 52 auf die Drehblockierkörper 54 wie ebenfalls in Fig. 21a dargestellt.

Hierbei liegt beispielsweise die Ausnehmung 282, in welche der Blockierkörper 272 mit seinem ersten Ende 276 zur Sicherung der Drehstellung des Betätigungskörpers 52 eingreift, neben der Rückzugsaufnahme 62 und einer Druckfläche 66 eines in Umfangsrichtung nächstfolgenden Drehblockierkörpers 54.

Wie ferner in Fig. 21a dargestellt, umfasst die Kulissenführung 290 umfangsseitig des Hohlrades 142 einander zugewandt angeordnete Kulissenbahnen 312 und 314, die zur Positionierung des Kulissenfolgers 292 in der Sicherungsstellung des Blockierkörpers 272 mit Positionierabschnitten 312a und 314e derart relativ zueinander zu verlaufen, dass der Kulissenfolger 292 exakt zwischen diesen Positionsabschnitten 312a und 314e der beiden Kulissenbahnen 312 und 314 in der Sicherungsstellung und somit definiert positioniert ist und keinerlei Möglichkeit hat, sich in seiner Verschieberichtung 295 beispielsweise in Richtung parallel zur Schwenkachse 22 in die Zwischenstellung oder die Ruhestellungsblockierstellung zu bewegen, so dass durch diese exakt definierte Positionierung des Kulissenfolgers 292 das Übertragungselement 294 den Blockierkörper 272 unverschiebbar in der Sicherungsstellung positioniert und somit den Betätigungskörper 52 zusätzlich sichert.

Außerdem erstreckt sich das Übertragungselement 294, wie in Fig. 21c dargestellt, bis zu einem Sensorbetätigungselement 296, welches bei einem ersten Ausführungsbeispiel einer Sensoreinheit 300, umfassend eine Auswerteeinheit 308 und einen Sensor 301, bei der Bewegung des Übertragungselements 294 in der Verschieberichtung 295 mittels eines relativ zum Sensor 301 bewegbaren mechanischen Positionsangabeelements 298 den Sensor 301 betätigt.

Insbesondere weist das Positionsangabeelement 298 im dargestellten Fall eines als Taster ausgebildeten Sensors 301 eine erste Tastfläche 302, eine zweite gegenüber der ersten Tastfläche 302 sich quer zur Verschieberichtung 295' zum Sensor 301 hin erhebende Tastfläche 304 und eine dritte entsprechend der ersten Tastfläche ausgebildete und verlaufende Tastfläche 306 auf, so dass die erste Tastfläche 302 und die dritte Tastfläche 306 im Zusammenwirken mit dem Sensor 301 dasselbe erste Signal erzeugen, während die zweite Tastfläche 304, aufgrund der Tatsache, dass diese relativ zur ersten 302 und dritten Tastfläche 306 erhaben ist, ein sich vom ersten Signal unterscheidendes zweites Signal erzeugt.

Beispielsweise dient die erste Tastfläche 302 zur Erfassung der Sicherungsstellung, die zweite Tastfläche 304 zur Erfassung der Zwischenstellung und die dritte Tastfläche 306 zur Erfassung der Ruhestellungsblockierstellung, wobei im einfachsten Fall die relativ zur Verschieberichtung 295 verlaufende erste Tastfläche 302 und die dritte Tastfläche 306 dasselbe erste Tastsignal des Sensors 301 erzeugen, während die sich relativ zur Verschieberichtung 295 erhebende zweite Tastfläche 304 ein anderes zweites Tastsignal des Sensors 301 erzeugt.

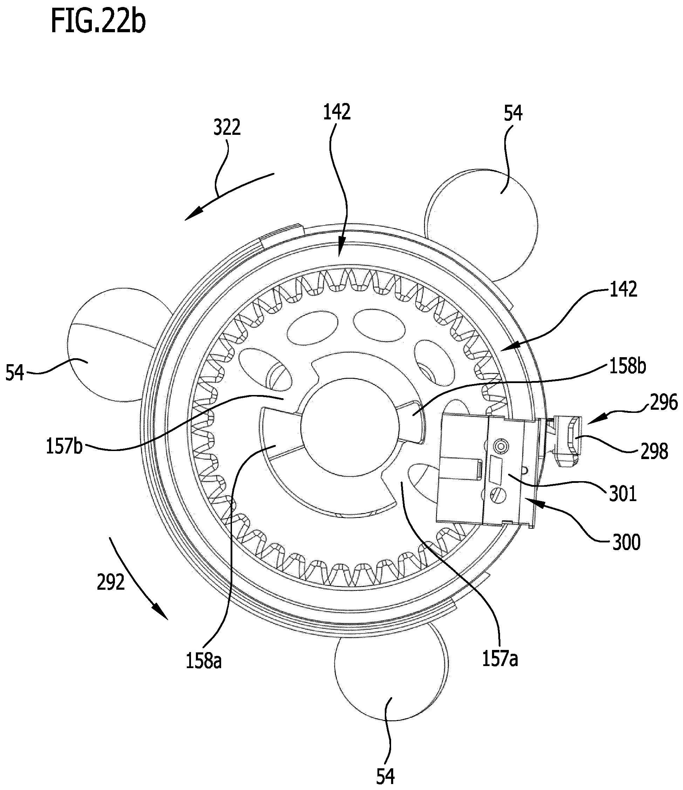

Wie ferner in Fig. 21b dargestellt, liegen in der Ausgangsstellung des Hohlrades 142 des Planetengetriebes 130 die in die Antriebsschlitze 156a und 156b eingreifenden Antriebsfinger 158a und 158b an den die Antriebsschlitze 156a und 156b trennenden Antriebsstegen 157a und 157b derart an, dass ein Antreiben des Hohlrades 142 zunächst keinen Antrieb der Antriebsfinger 158a und 158b bewirkt, da das Hohlrad 142 sich in der Drehrichtung 322 bewegt, in welcher die Antriebsstege 157a und 157b sich von den Antriebsfingern 158a und 158b weg bewegen, wie in Fig 22b erkennbar.

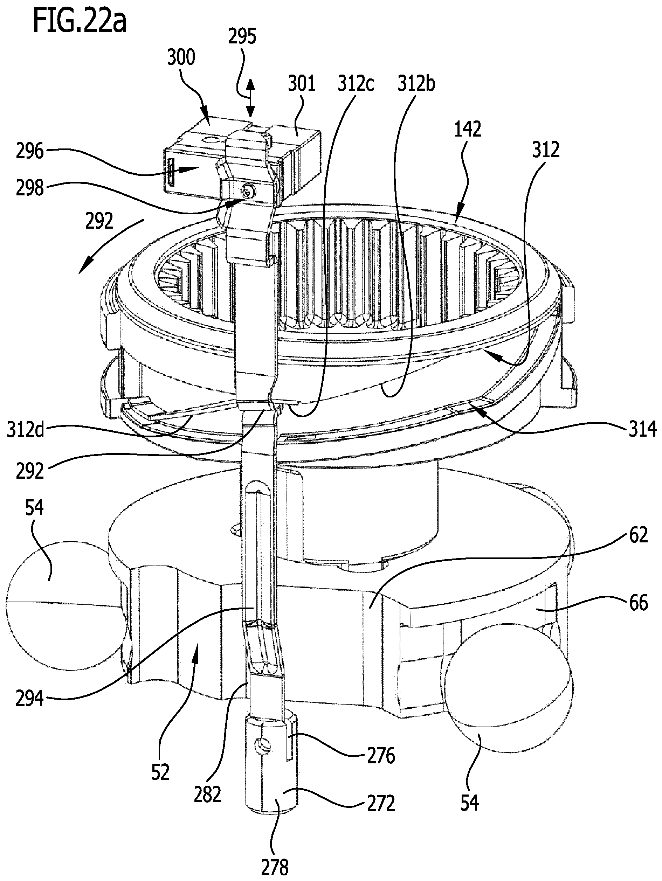

Dies bewirkt, dass sich der Kulissenfolger 292 längs eines Ausschiebeabschnitts 312b der Kulissenbahn 312 bewegt (Fig. 22a), welcher den Kulissenfolger 292 und das Übertragungselement 294 derart verschiebt, dass der Blockierkörper 272 sich aus der Ausnehmung 282 im Betätigungskörper 52 heraus in die Zwischenstellung bewegt, in welcher dieser, wie in Fig. 19 dargestellt, weder mit dem ersten Ende 276 in die Ausnehmung 282 in dem Betätigungskörper 52 eingreift noch mit dem zweiten Ende 278 in die Ausnehmung 284 in den Flansch 198 des Schwenklagerkörpers 14 eingreift.

In dieser Zwischenstellung, vorgegeben durch den Positionierabschnitt 312c erfolgt keine Sicherung des Betätigungskörpers 52 gegen eine weitere Drehung.

Nach Erreichen des Endes des Ausschiebeabschnitts 312a und der damit erreichten Aufhebung der Sicherungsstellung bewirkt eine weitere Drehung des Hohlrades 142, wie in Fig. 22b dargestellt, dass die Antriebsstege 157a und 157b auf die Antriebsfinger 158b bzw. 158a einwirken, und diese in der Drehrichtung 322 weiter drehen können.

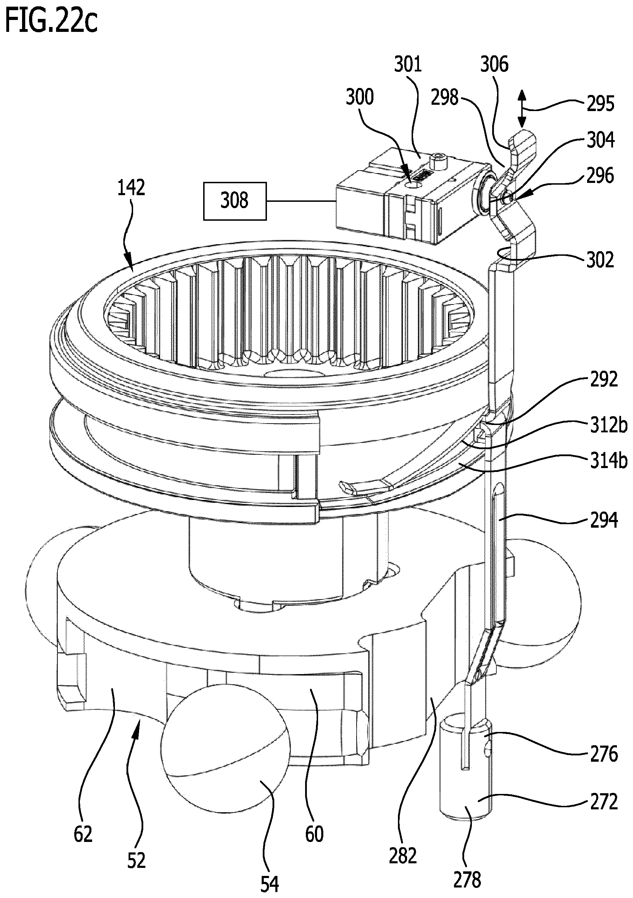

Das Erreichen der Zwischenstellung hat ferner zur Folge, dass durch die Verschiebung des Übertragungselements 294 zur Bewegung des Blockierkörpers 272 gleichzeitig eine Verschiebung des Sensorbetätigungselements 296 erfolgt ist, was zur Folge hat, dass dieses mit der zweiten Tastfläche 304 auf den Sensor 300 einwirkt und dieser somit in der Lage ist, die Zwischenstellung zu erkennen, wie in Fig. 22c dargestellt.

Eine weitere Drehung des Hohlrades 142 in der Drehrichtung 322 hat zur Folge, dass die Antriebsstege 157a und 157b die Antriebsfinger 158a bzw. 158b beaufschlagen, und somit zu einem Aufheben der Drehblockierstellung führen, so dass die Drehblockierkörper 54 in die Rückzugsaufnahmen 62 des Betätigungskörpers 52 eintauchen können und somit nicht mehr durch die Druckflächen 66 in radialer Richtung beaufschlagt sind.

Damit ist die Drehblockierstellung der Drehblockiereinrichtung 50 aufgehoben.

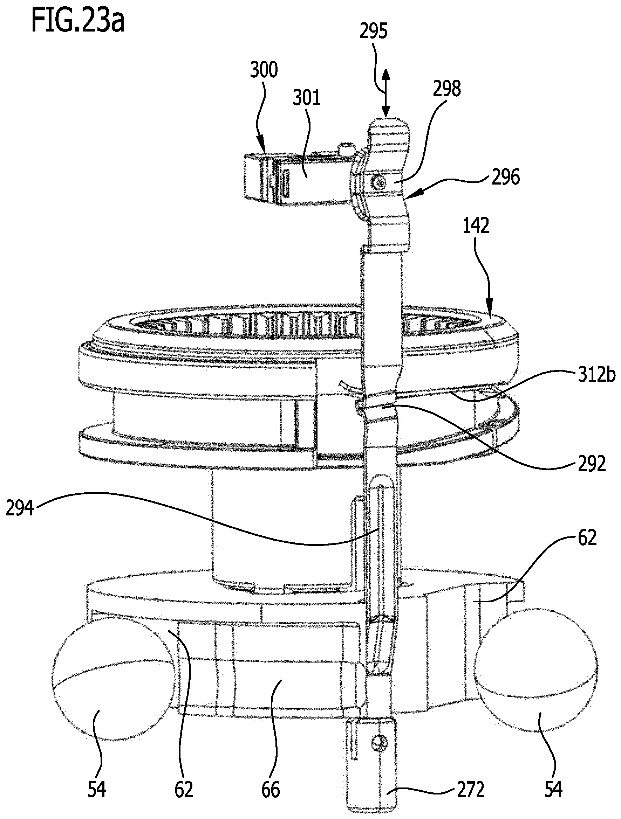

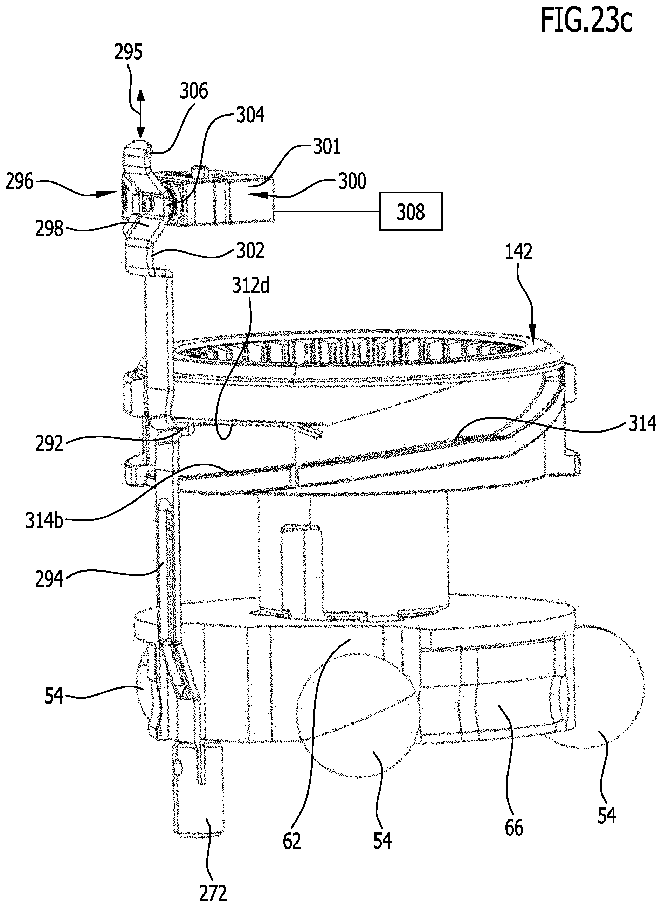

Durch diese weitere Drehung des Hohlrades 142 folgt außerdem der Kulissenfolger 292 einem in Form eines federelastischen Elements, beispielsweise einer Blattfeder ausgebildeten Beaufschlagungsabschnitt 312d der Kulissenbahn 312, der allerdings, wie sich aus dem Vergleich der Fig. 23a mit der Fig. 22a ergibt, zunächst zu einer federelastischen Beaufschlagung des Kulissenfolgers 292 führt, so dass dieser, wie in Fig. 23a und 23c zu erkennen, zunächst zulässt, dass der Blockierkörper 272 aufgrund der Blockierung der Bewegung des Blockierkörpers 272 durch den Endflansch 198 des Schwenklagerkörpers 14m, wie in Fig. 19 dargestellt, in der Zwischenstellung verbleibt.

Die Möglichkeit des Beaufschlagungsabschnitts 312b zunächst den Kulissenfolger 292 mit einer elastisch wirkenden Federkraft zu beaufschlagen, ohne den Blockierkörper 272 zu verschieben ist dadurch erforderlich, dass zwar die Drehblockierstellung der Drehblockiereinrichtung 50 gelöst ist, allerdings noch kein Verdrehen des Schwenklagerkörpers 14 erfolgt ist, und somit der Endflansch 198 die Verschiebung des Blockierkörpers 272 in Ruhestellungsblockierstellung nicht zulässt.

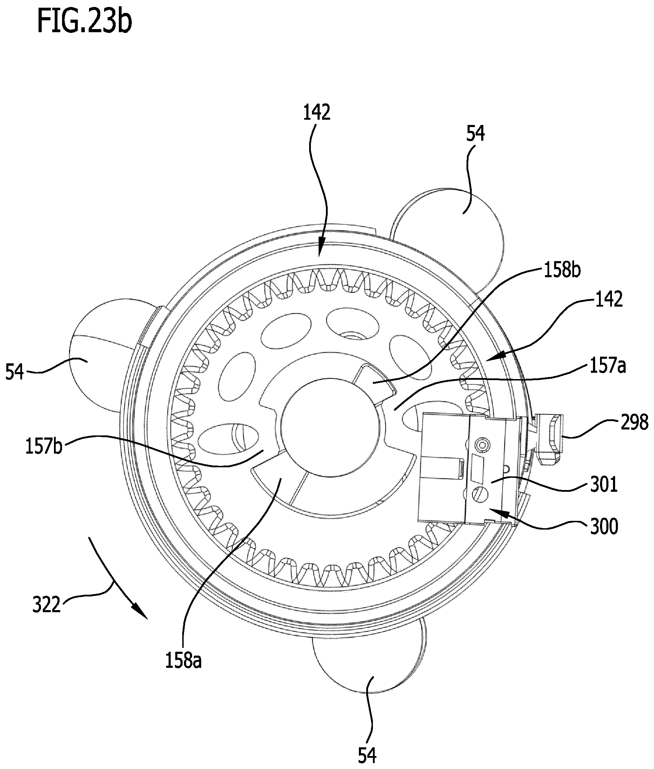

Eine derartige Drehung des Schwenklagerkörpers 14 erfolgt aufgrund der Tatsache, dass durch die in Fig. 23b dargestellte Drehstellung der Betätigungskörpers 52 gegen die Kraft der Drehfeder 114 in seine Lösestellung bewegt ist, allerdings in der Lösestellung verbleibt und somit nicht weiter verdreht werden kann.

Das heißt, dass die Antriebsfinger 158a und 158b eine Weiterdrehung des Hohlrades 142 dadurch ihr Einwirken auf die Antriebsstege 157b bzw. 157a blockieren und somit es ermöglichen, dass aufgrund einer Blockierung der Drehbewegung des Hohlrads 142 in der Drehrichtung 292 bei weiterem Antrieb des Planetengetriebes 130 ein Antrieb des Planetenradträgers 152 erfolgt, der zu einem Schwenken des Schwenklagerkörpers 14 und somit des Kugelhalses 10 führt.

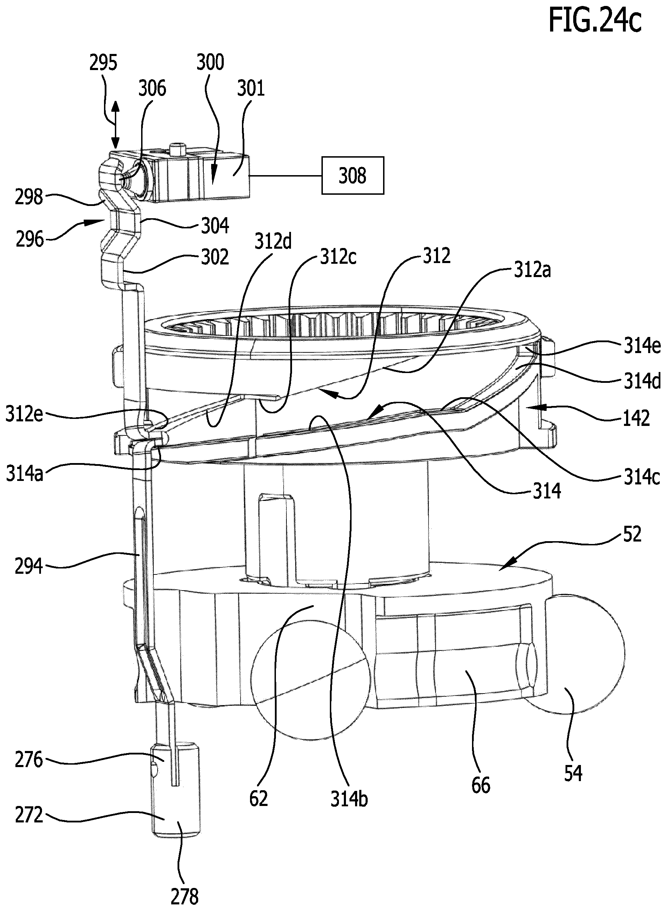

Durch dieses Verschwenken des Schwenklagerkörpers 14 dreht sich dessen Endflansch 198 relativ zum Flansch 104, bis der Kugelhals 10 die Ruhestellung erreicht, in welcher die Aufnahme 284 im Endflansch 198 fluchtend zur Führung 274 angeordnet ist, so dass dann der Blockierkörper 272 mit dem Ende 278 in die Aufnahme 284 eintreten kann, wie in Fig. 20 und Fig. 24c dargestellt ist.

Im Moment des Fluchtens der Aufnahme 284 mit der Führung 274 des Blockierkörpers 272 kann der elastisch wirkende Beaufschlagungsabschnitt 312d der Kulissenbahn 312 den Kulissenfolger 292 in Richtung der Kulissenbahn 314 verschieben und somit mittels des Übertragungselements 294 den Betätigungskörper 272 mit dem zweiten Ende 278 in die Aufnahme 284 einschieben.

In dieser Stellung sind die Drehblockierkörper 54 nach wie vor in ihrer in den Rückzugsaufnahmen 62 liegenden Lösestellung, da diese keine Möglichkeit haben trotz Beaufschlagung mittels der Drehfeder 114 in diesen gegenüberliegende Aufnahmen 60 im Schwenklagerkörper 14 einzutreten, wie sich aus Fig. 14 ergibt.

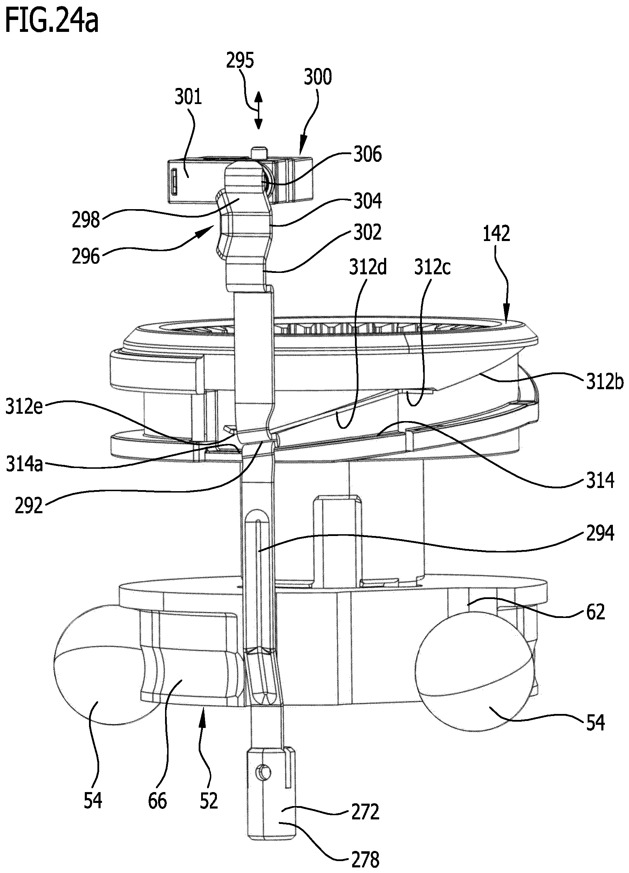

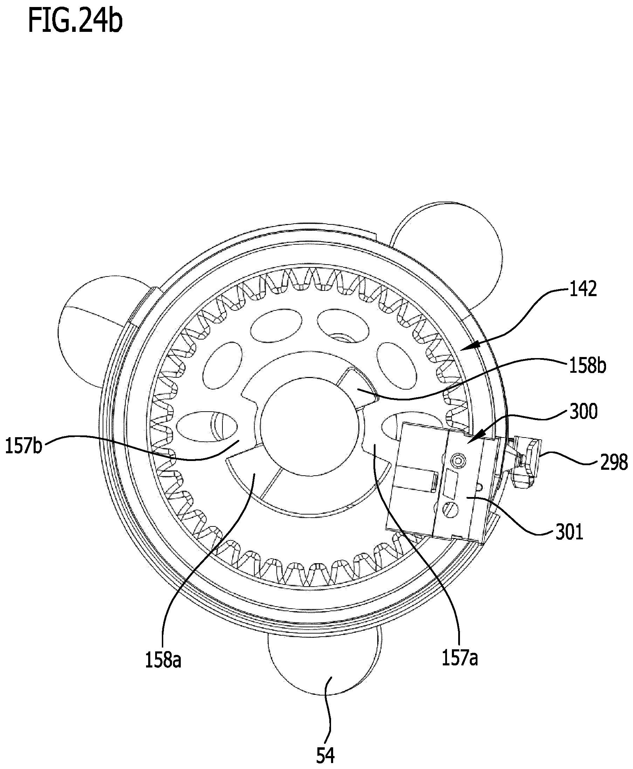

In der nunmehr erreichten Ruhestellungsblockierstellung, dargestellt in Fig. 20 und Fig. 24 drückt der elastische Beaufschlagungsabschnitt 312d mit dem Positionierabschnitt 312e den Kulissenfolger 292 so weit in Richtung der Kulissenbahn 314, dass der Kulissenfolger 292 zwischen einem Positionierabschnitt 314a der Kulissenbahn 314 und dem elastischen Positionierabschnitt 312e definiert positioniert ist und somit die Ruhestellungsblockierstellung definiert aufrecht erhalten wird.

Auch in diesem Fall wird, wie in Fig. 24c dargestellt, mittels des Übertragungselements 294 das Positionsangabeelement 298 relativ zum Sensor 300 so weit verschoben, dass die Tastfläche 306 auf den Sensor wirkt und der Sensor wiederum in der Lage ist, die Ruhestellungsblockierstellung zu erkennen.

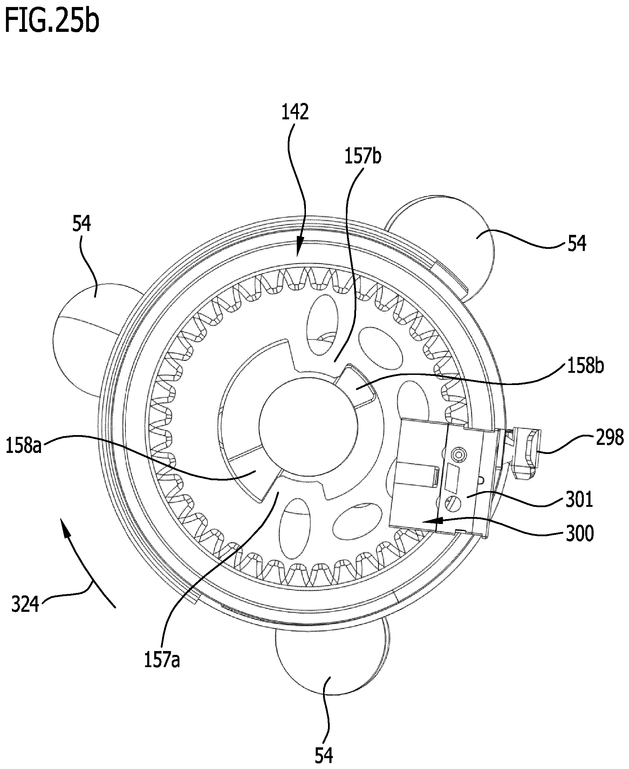

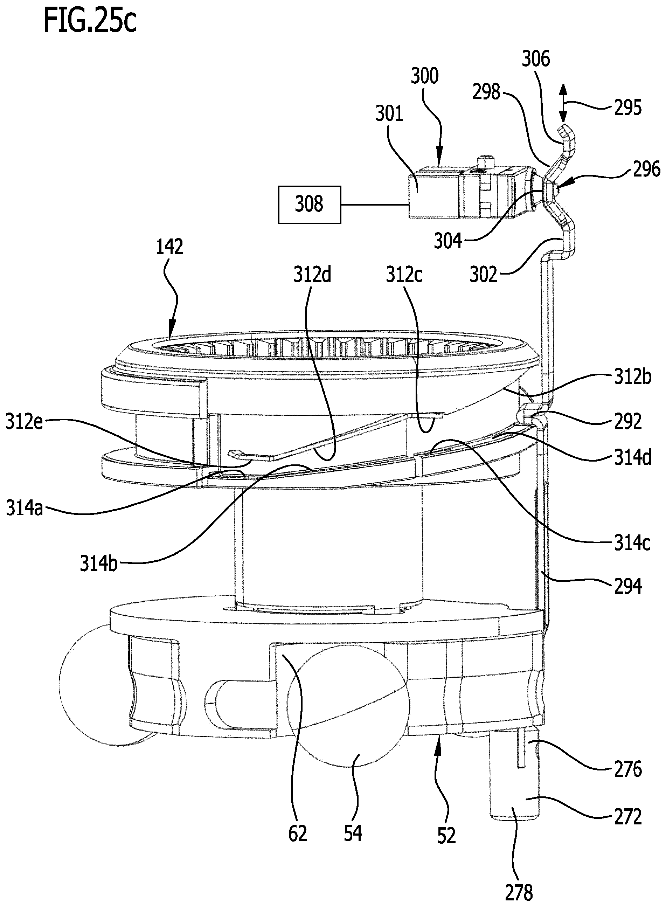

Um den Kugelhals 10 mit dem Schwenklagerelement 14 von der Ruhestellung R in die Arbeitsstellung A zurückschwenken zu können, ist eine Umkehr der Antriebsrichtung erforderlich, so dass, wie in Fig. 25b dargestellt, das Hohlrad 142 nunmehr in umgekehrter Richtung zur Drehrichtung 322, das heißt in Drehrichtung 324 gedreht wird, wodurch zunächst keine Beaufschlagung der Antriebsfinger 158a und 158b erfolgt, sondern die Antriebsstege 157a und 157b unabhängig von den Antriebsfingern 158a und 158b gedreht werden können, bis die Antriebsstege 157a und 157b wiederum an den Antriebsfingern 158a und 158b anliegen, wie in Fig. 25b dargestellt.

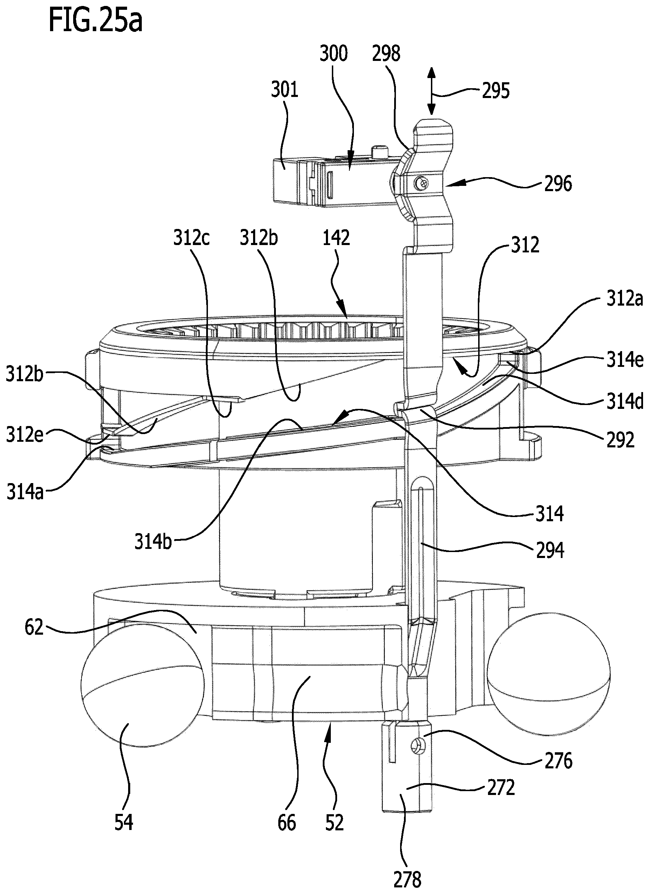

Dies hat zur Folge, wie in Fig. 25a dargestellt, dass nunmehr ausgehend von der Ruhestellungsblockierstellung der Kulissenfolger 292 durch die Kulissenbahn 314, insbesondere den Ausschiebeabschnitt 314b beaufschlagt werden kann und somit der Kulissenfolger 292 sich wiederum in Richtung der Kulissenbahn 312 bewegt, so dass der Blockierkörper 272 ausgehend von der Ruhestellungsblockierstellung wiederum in die Zwischenstellung, dargestellt in Fig. 25a bewegt wird.

Um diese Zwischenstellung zu erreichen, erstreckt sich der Ausschiebeabschnitt 314b bis zu einem Positionierabschnitt 314c so weit in Richtung der Kulissenbahn 312, dass mit dem Kulissenfolger 292 eine Position erreicht wird, die ungefähr dem Positionierabschnitt 312c am Ende des Ausschiebabschnitts 312b entspricht und somit ist die Zwischenstellung des Blockierkörpers 272 identisch mit der Zwischenstellung im Positionierabschnitt 312c nach Durchlaufen des Ausschiebabschnitts 312b.

Bei dieser Drehbewegung des Hohlrads 142 erfolgt keine Drehbewegung des Betätigungskörpers 52, so dass nach wie vor die Drehblockierkörper 54 in den Rückzugsaufnahmen 62 und somit in der Lösestellung verbleiben.

Allerdings erfolgt, wie in Fig. 25b dargestellt, mit der Verschiebung des Kulissenfolgers 292 eine Verschiebung des Positionsangabeelements 298, so dass nunmehr die zweite Tastfläche 304 auf den Sensor 300 wirkt, der somit wiederum die Zwischenstellung erfasst.

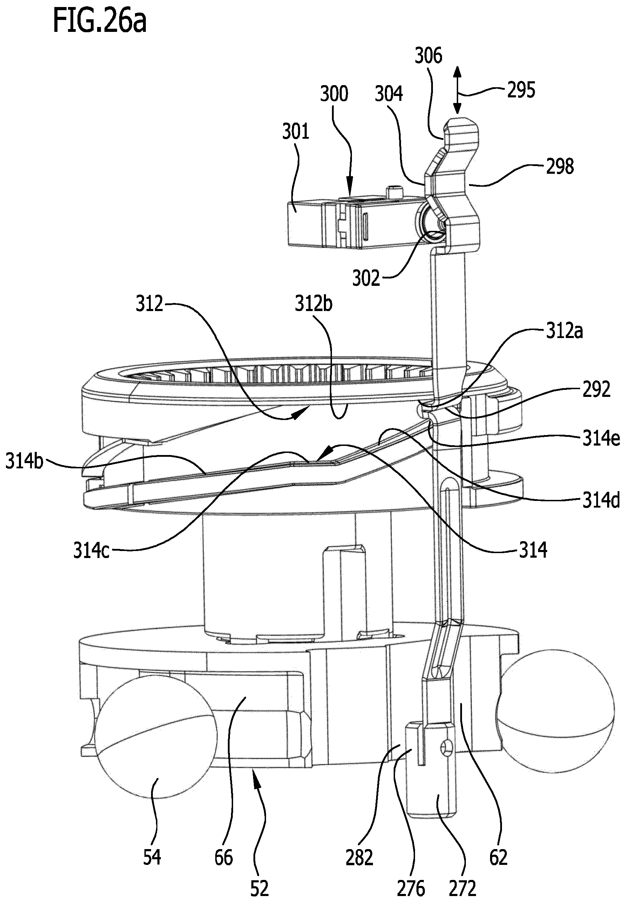

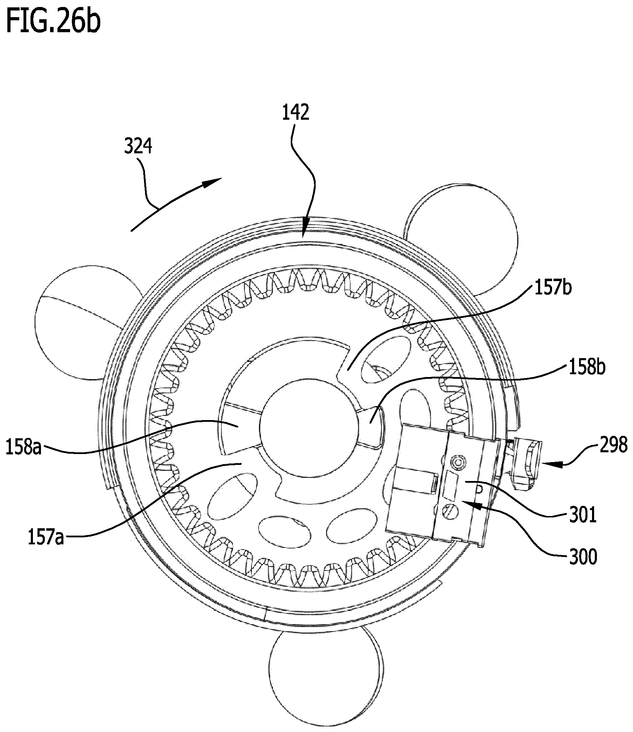

Ein Weiterdrehen des Hohlrades 142 ist in dieser Zwischenstellung nicht möglich, da der Betätigungskörper 52 immer noch in seiner Lösestellung verharrt und somit die Antriebsfinger 156 und 158 ein Weiterdrehen des Hohlrades 142 so lange verhindern, bis der Schwenklagerkörper 14 mit dem Kugelhals 10, angetrieben durch den Planetenradträger 152 die Arbeitsstellung A erreicht haben, in welcher die Drehblockiereinrichtung 50 die Möglichkeit hat, in die Drehblockierstellung überzugehen und somit die Antriebsfinger 158a und 158b wiederum eine Drehung des Hohlrads 142 zulassen, so dass dann, wie in Fig. 26a dargestellt, der Beaufschlagungsabschnitt 314d auf den Kulissenfolger 292 einwirken kann und diesen in die der Sicherungsstellung des Blockierkörpers 272 entsprechenden Stellung vorgegeben durch die Positionierabschnitte 314e und 312a verschieben kann, in welcher der Blockierkörper 272 mit seinem ersten Ende 276 in die Aufnahme 282 eintaucht (Fig. 26a).

Gleichzeitig wird in dieser Sicherungsstellung der Kulissenfolger 292 zwischen den Kulissenbahnen 312 und 314 definiert positioniert.

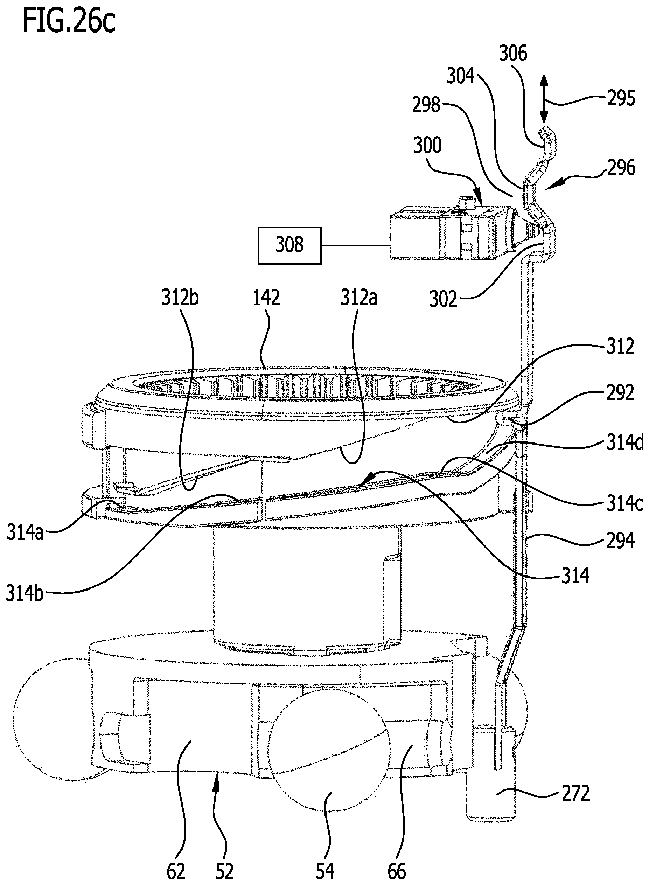

In der Drehblockierstellung werden dann auch wiederum die Drehblockierkörper 54 durch die Druckflächen 56 beaufschlagt, so dass dadurch auch wiederum die Aufnahme 282 fluchtend mit der Führung 274 für den Blockierkörper 272 ausgerichtet ist und auch dadurch ein Verschieben des Blockierkörpers 272 in die Sicherungsstellung ermöglicht wird (Fig. 26c).

Desgleichen wird durch das Übertragungselement 294, das Positionsangabeelement 298 in die der Sicherungsstellung entsprechende Position verschoben, in welcher die erste Tastfläche 302 wiederum auf den Sensor 301 wirkt (Fig. 26c).

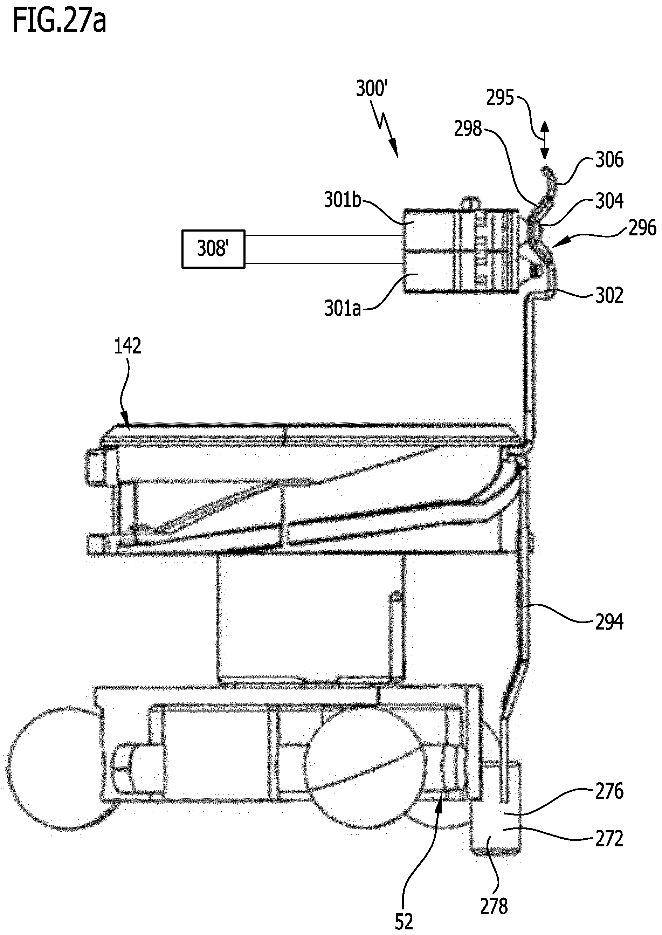

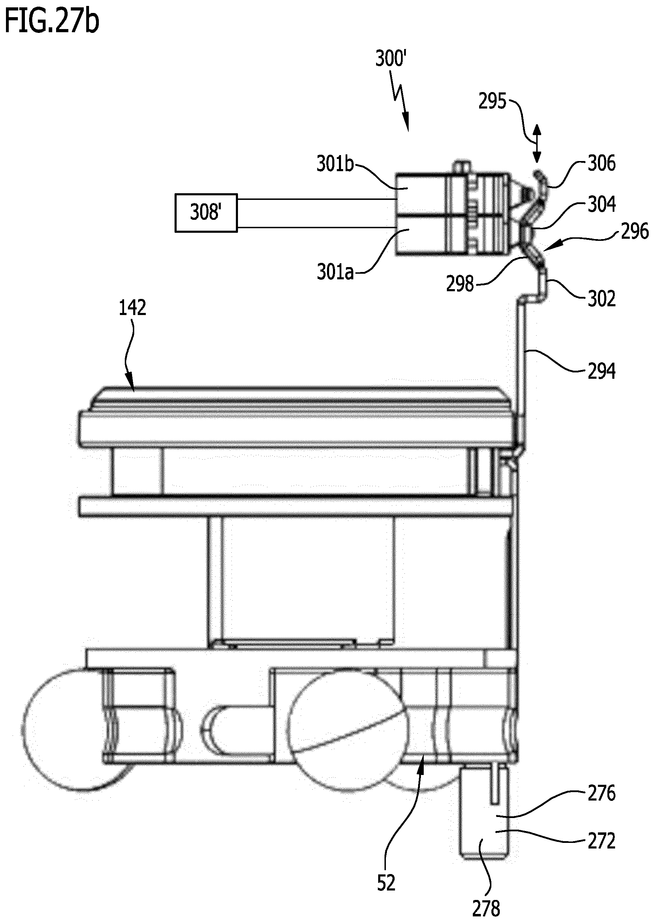

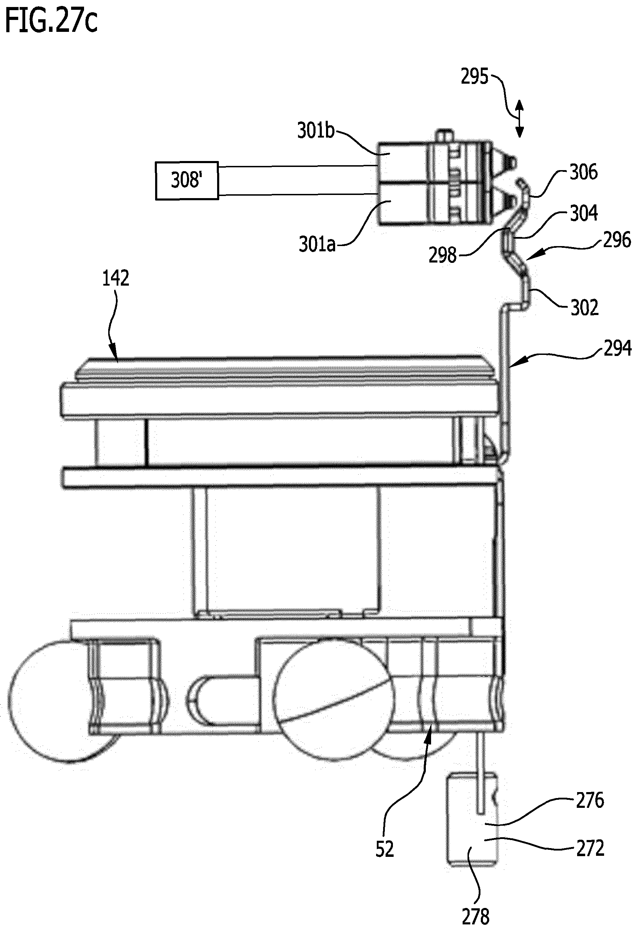

Bei einem zweiten Ausführungsbeispiel einer erfindungsgemäßen Sensoreinheit 300', dargestellt in den Fig.27a, 27b und 27c ist das Positionsangabeelement 298 in gleicher Weise ausgebildet wie im Zusammenhang mit dem ersten Ausführungsbeispiel beschrieben, das heißt, dass die erste Tastfläche 302 und die dritte Tastfläche 306 bei einem als Taster ausgebildeten Sensor 301 dasselbe Signal erzeugen, während die zweite Tastfläche 304 ein sich davon unterscheidendes Signal des als Taster ausgebildeten Sensors erzeugt.

Aus diesem Grund sind beim zweiten Ausführungsbeispiel zwei als Taster ausgebildete Sensoren 301a und 301b vorgesehen, die nebeneinander so angeordnet sind, dass jeder der Sensoren 301a und 301b jeweils eine der Tastflächen 302, 304 und 306 von zwei jeweils nebeneinanderliegenden Tastflächen 302 und 304 oder 304 und 306 abtasten kann.

Wie in Fig. 27a dargestellt, ist in der Sicherungsstellung des Blockierkörpers 272 das Positionsangabeelement 298 durch das Übertragungselement 294 so positioniert, dass der erste Sensor 301a die erste Tastfläche 302 abtastet und der zweite Sensor 301b die zweite Tastfläche 304 abtastet.

Dies hat zur Folge, dass der erste Sensor 301a ein erstes Signal erzeugt, dass einer der Tastflächen 302 oder 306 entspricht, während der zweite Sensor 301b ein zweites Signal erzeugt, das der zweiten Tastfläche 304 entspricht.

Wird der Blockierkörper 272 von der in Fig. 27a dargestellten Sicherungsstellung in die Zwischenstellung, dargestellt in Fig. 27b, bewegt, so verschiebt sich durch das Übertragungselement 294 das Positionsangabeelement 298 so weit, dass der erste Sensor 301a die zweite Tastfläche 304 abtastet und dass dieser entsprechende zweite Signal erzeugt, während der zweite Sensor 301b die dritte Tastfläche 306 abtastet und dabei das erste Signal erzeugt, das sich von dem der zweiten Tastfläche 304 unterscheidet.

Somit erzeugen die Sensoren 301a und 301b in der Zwischenstellung genau die umgekehrten Signale wie in der Sicherungsstellung gemäß Fig. 27a.

Wird der Blockierkörper 272 in die Ruhestellungsblockierstellung bewegt, wie in Fig. 27c dargestellt, so tastet der erste Taster 301a die dritte Tastfläche 306 ab und der zweite Sensor 301b keine Tastfläche und erzeugt somit dasselbe erste Signal wie der erste Sensor, der die dritte Tastfläche 306 abtastet.

Das heißt in diesem Fall erzeugen beide Sensoren 301 und 301b dasselbe erste Signal.

Somit lassen sich die Sicherungsstellung gemäß Fig. 27a, die Zwischenstellung gemäß Fig. 27b und die Ruhestellungsblockierstellung gemäß Fig. 27c bei Auswertung der Tastsignale der Sensoren 301a und 301b in Relation zueinander mittels einer Auswerteeinheit 308' in einfacher Weise eindeutig unterscheiden und anzeigen.

Damit ist jeweils die Sicherungsstellung, die Zwischenstellung und die Ruhestellungsblockierstellung für eine Auswerteeinheit 308' eindeutig identifizierbar und ausgangsseitig kommunizierbar.

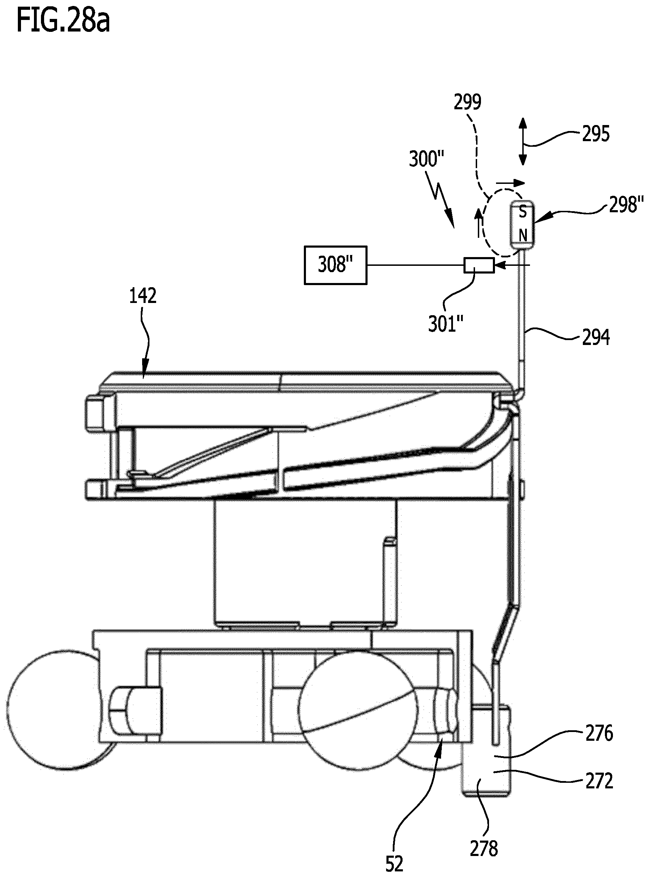

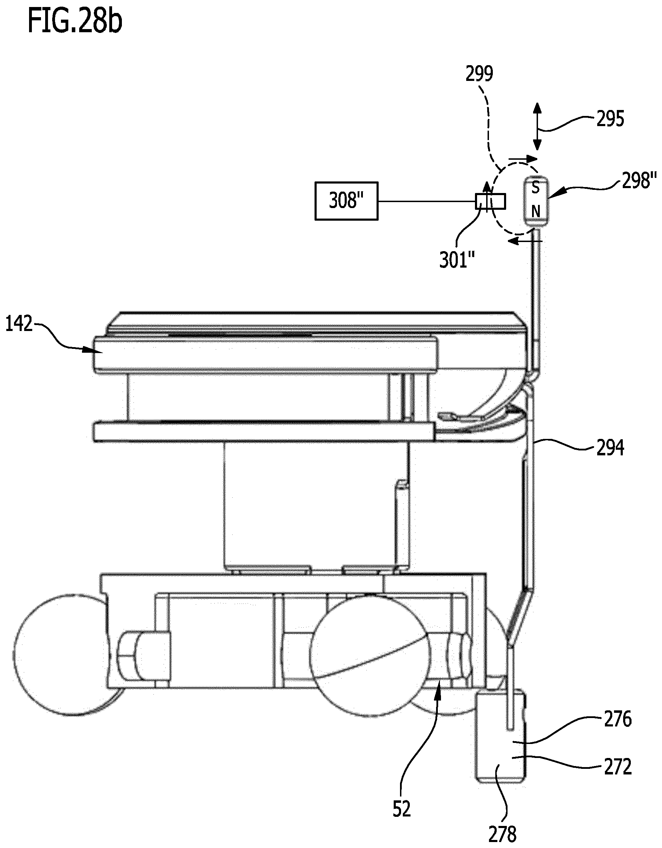

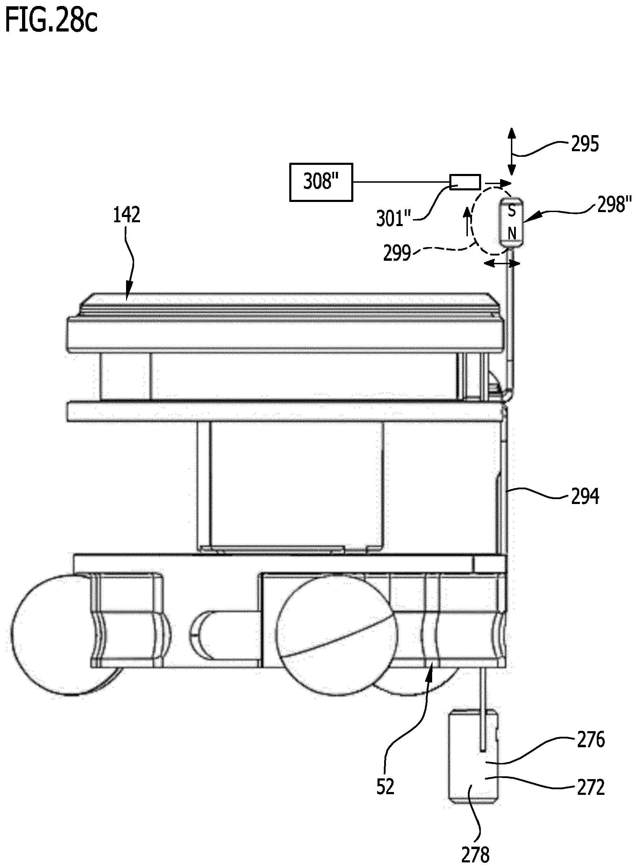

Bei einem dritten Ausführungsbeispiel einer erfindungsgemäßen Sensoreinheit 300", dargestellt in den Fig. 28a, 28b und 28c ist der Sensor 301" als Magnetfeldsensor ausgebildet, der in der Lage ist, unterschiedliche Magnetfeldrichtungen im Raum zu erfassen.

Ferner ist das Positionsangabeelement 298" als Magnet ausgebildet, dessen Nordpol N und Südpol S in der Verschieberichtung 295 des Übertragungselements 294 einen Abstand voneinander aufweisen und ein außen um das als Magnet ausgebildete Positionsangabeelement 298" im Raum verlaufendes Magnetfeld 299 erzeugen, das im Bereich nahe des Nordpols quer in einer ersten, quer zur Verschieberichtung verlaufenden Richtung im Raum verläuft, im Bereich zwischen dem Nordpol und Südpol ungefähr parallel zur Verschieberichtung 295 im Raum verläuft und im Bereich nahe des Südpols in einer zweiten der ersten Richtung entgegengesetzten Richtung im Raum verläuft.

Somit kann der Magnetfeldsensor 301" verschiedene Positionen des als Magnet ausgebildeten Positionsangabeelements 298" erkennen.

Beispielsweise erkennt der Magnetfeldsensor 301" in der Sicherungsstellung des Blockierkörpers 272 den in der ersten Richtung quer zur Verschieberichtung, beispielsweise in Richtung des Magnetfeldsensors 301' im Raum verlaufenden Teilbereich des Magnetfelds 299.

Wird der Blockierkörper 272 in die Zwischenstellung verschoben, wie in Fig. 28b dargestellt, so wird der Magnetfeldsensor 301" von dem parallel zur Verschieberichtung 295 verlaufenden Teilbereich des Magnetfelds zwischen dem Nordpol N und dem Südpol S durchsetzt und erkennt somit eine Richtung des Magnetfelds im Raum, die sich um 90° relativ zur Richtung in der Sicherungsstellung geändert hat.

Wird dagegen der Blockierkörper 272 in die Ruhestellungsblockierstellung verschoben, so erkennt, wie in Fig. 28c dargestellt, der Magnetfeldsensor 301" den nahe des Südpols S im Raum in Richtung des quer zur Verschieberichtung 295, jedoch vom Magnetfeldsensor 301" weg gerichteten Teilbereich des Magnetfeldes 299.

Damit ist eine Auswerteeinheit 308" in der Lage, durch Erkennung der unterschiedlichen Richtungen des Magnetfeldes 299 im Raum mittels des Magnetfeldsensors 301" eindeutig die Sicherungsstellung, die Zwischenstellung und die Ruhestellungsblockierstellung zu unterscheiden und kommunizieren.

## Patentansprüche

1. Anhängekupplung, umfassend einen zwischen einer Arbeitsstellung (A) und einer Ruhestellung (R) bewegbaren Kugelhals (10) der an einem ersten Ende mit einer Schwenklagereinheit (20) verbunden ist und einer an einem zweiten Ende eine Kupplungskugel (18) trägt, wobei mittels der Schwenklagereinheit (20), der Kugelhals (10) bei Ausführung einer Schwenkbewegung um eine Schwenkachse (22) zwischen der Arbeitsstellung (A) und der Ruhestellung (R) verschwenkbar ist, und eine zwischen einem Führungskörper (40) und einem Schwenklagerkörper (14) der Schwenklagereinheit (20) wirkende Drehblockiereinrichtung (50) mit einerseits mindestens zwei Drehblockiereinheiten (80), von denen jede einen Drehblockierkörper (54) aufweist, der mittels einer Führungsaufnahme (56) des Führungskörpers (40) in einer Führungsrichtung (58) bewegbar geführt ist und der in der Führungsrichtung (58) durch eine quer zur Führungsrichtung (58) verlaufende, an einem Betätigungskörper (52) vorgesehene Druckfläche (66) bewegbar ist, und mit andererseits mindestens zwei Aufnahmen (60), wobei durch eine Bewegung des Betätigungskörpers (52) in einer Betätigungsrichtung (72) die Drehblockierkörper (54) aller Drehblockiereinheiten (80) in der Führungsrichtung (58) bewegbar und beaufschlagbar sind und wobei die Drehblockierkörper (54) aller Drehblockiereinheiten (80) in der Arbeitsstellung (A) durch Bewegung in der Führungsrichtung (58) in eine Drehblockierstellung bringbar sind und in dieser jeder Drehblockierkörper (54) mit jeweils einer der Aufnahmen (60) in Eingriff kommen, um eine Schwenkbewegung des Schwenklagerkörpers (14) und des Führungskörpers (40) relativ zueinander um die Schwenkachse (22) zu blockieren, und in eine Lösestellung bringbar sind und in dieser mit der jeweiligen Aufnahme (60) außer Eingriff stehen und die Relativbewegung zwischen Schwenklagerkörper (14) und Führungskörper (40) freigeben,
wobei in allen vorgesehenen relativen Schwenkstellungen zwischen Schwenklagerkörper (14) und Führungskörper (40) einschließlich der Ruhestellung (R) sowie ausgenommen der Arbeitsstellung (A) eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in jeweils eine der Aufnahmen (60) blockiert ist, **dadurch gekennzeichnet, dass** eine Mehrfachblockiereinrichtung (270) vorgesehen ist, welche einen Blockierkörper (272) umfasst, der in eine den Schwenklagerkörper (14) und den Führungskörper (40) in der Ruhestellung (R) relativ zueinander blockierende Ruhestellungsblockierstellung, in eine den Betätigungskörper (52) in der Drehblockierstellung sichernde Sicherungsstellung und in eine zwischen der Ruhestellungsblockierstellung und der Sicherungsstellung liegende Zwischenstellung bewegbar ist.

2. Anhängekupplung nach Anspruch 1, **dadurch gekennzeichnet, dass** der Blockierkörper (272) an dem Führungskörper (40) der Schwenklagereinheit (20) geführt ist.

3. Anhängekupplung nach Anspruch 1 oder 2, **dadurch gekennzeichnet, dass** der Blockierkörper (272) in einer am Führungskörper (40) angeordneten Führung (274) geführt ist, insbesondere dass die Führung (274) für den Blockierkörper (272) in einem an dem Betätigungskörper (52) und dem Schwenklagerkörper (14) angrenzenden Wandbereich (104) des Führungskörpers (40) angeordnet ist, insbesondere dass der Blockierkörper (272) in der Führung (274) in Richtung ungefähr parallel zu der Schwenkachse (22) bewegbar ist.

4. Anhängekupplung nach einem der voranstehenden Ansprüche, **dadurch gekennzeichnet, dass** der Blockierkörper (272) in der Ruhestellungsblockierstellung in eine Aufnahme (284) im Schwenklagerkörper (14) eingreift.

5. Anhängekupplung nach einem der voranstehenden Ansprüche, **dadurch gekennzeichnet, dass** der Blockierkörper (272) in der Sicherungsstellung in eine Aufnahme (282) in dem Betätigungskörper (52) eingreift.

6. Anhängekupplung nach einem der voranstehenden Ansprüche., **dadurch gekennzeichnet, dass** der Blockierkörper (272) in der Zwischenstellung zwischen der Aufnahme (282) in dem Betätigungskörper (52) und der Aufnahme (284) in der Schwenklagereinheit (14) angeordnet ist.

7. Anhängekupplung nach einem der Ansprüche 3 bis 6, **dadurch gekennzeichnet, dass** der Blockierkörper (272) sowohl in der Sicherungsstellung als auch in der Ruhstellungsblockierstellung ausgehend und geführt durch die Führung (274) jeweils mit einem Ende (276, 278) in die jeweilige Aufnahme (282, 284) eingreift.

8. Anhängekupplung nach einem der voranstehenden Ansprüche, **dadurch gekennzeichnet, dass** der Blockierkörper (272) durch eine Blockierbetätigungseinrichtung (280) in der Sicherungsstellung, der Zwischenstellung und der Ruhestellungsblockierstellung festlegbar ist, insbesondere dass die Blockierbetätigungseinrichtung (280) eine Kulissenführung (290) und einen durch diese bewegbaren Kulissenfolger (292) umfasst, der mit dem Blockierkörper (272) gekoppelt ist, insbesondere dass der Kulissenfolger (292) durch die Kulissenführung (290) ungefähr parallel zur Schwenkachse (22) bewegbar ist, insbesondere dass die Kulissenführung (290) quer zur Schwenkachse (22) bewegbar ist, insbesondere dass die Kulissenführung (290) durch die Blockierbetätigungseinrichtung (280) bewegbar ist, insbesondere dass die Blockierbetätigungseinrichtung (280) einen die Kulissenführung (290) tragenden und relativ zum Kulissenfolger (292) drehend bewegbaren Körper (142) umfasst, insbesondere dass die Kulissenführung (290) mindestens eine auf den Kulissenfolger (292) einwirkende Kulissenbahn (312, 314) aufweist.

9. Anhängekupplung nach Anspruch 8, **dadurch gekennzeichnet, dass** die Kulissenführung (290) zwei auf den Kulissenfolger (292) einwirkende und diesen zwischen sich führende Kulissenbahnen (312, 314) aufweist, insbesondere dass beide Kulissenbahnen (312, 314) zusammen den Kulissenfolger (292) in einer die Sicherungsstellung vorgebenden Stellung festlegen, insbesondere dass beide Kulissenbahnen (312, 314) zusammen den Kulissenfolger (292) in einer die Ruhestellungsblockierstellung vorgebenden Stellung festlegen, insbesondere dass eine erste Kulissenbahn (312) einen den Kulissenfolger (292) von der die Sicherungsstellung festlegenden Stellung in eine die Zwischenstellung festlegende Stellung bewegenden Bahnabschnitt (312b) umfasst, insbesondere dass die erste Kulissenbahn (312) einen den Kulissenfolger (292) von der die Zwischenstellung festlegenden Stellung in eine diesen in Richtung einer der Ruhestellungsblockierstellung entsprechenden Stellung beaufschlagenden Bahnabschnitt (312d) umfasst, insbesondere dass der in Richtung der der Ruhestellungsblockierstellung entsprechenden Stellung wirkende Bahnabschnitt (312d) den Kulissenfolger (292) federelastisch in dieser Richtung beaufschlagt, insbesondere dass der Bahnabschnitt (312d) durch einen federelastisch bewegbaren Abschnitt der ersten Kulissenbahn (312) gebildet ist, insbesondere dass in der der Ruhestellungsblockierstellung entsprechenden Stellung der Kulissenfolger (292) zwischen dem federelastisch bewegbaren Bahnabschnitt der ersten Kulissenbahn (312) im Zusammenwirken mit der zweiten Kulissenbahn (314) festgelegt ist, insbesondere dass die zweite Kulissenbahn (314) einen Bahnabschnitt (314b) aufweist, welcher den Kulissenfolger (292) von der der Ruhestellungsblockierstellung entsprechenden Stellung in eine der Zwischenstellung entsprechende Stellung bewegt., insbesondere dass die zweite Kulissenbahn (314) einen Bahnabschnitt (314d) aufweist, welcher den Kulissenfolger (292) von der der Zwischenstellung entsprechenden Stellung, in die der Sicherungsstellung entsprechende Stellung bewegt, insbesondere dass die erste Kulissenbahn (312) durch eine Bewegung der Kulissenführung (290) in einer ersten Drehrichtung (322) wirksam ist und dass die zweite Kulissenbahn (314) durch eine Bewegung der Kulissenführung in einer der ersten Drehrichtung (322) entgegengesetzten Drehrichtung (324) wirksam ist, insbesondere dass die Blockierbetätigungseinrichtung (280) durch eine Betätigungseinrichtung (180) für die Drehblockiereinrichtung (50) antreibbar ist, insbesondere dass die Blockierbetätigungseinrichtung (280) mit der Betätigungseinrichtung (180) gekoppelt ist, insbesondere dass die Kulissenbahn (290) an einem drehbaren Körper (142) eines Planetengetriebes (130) der Betätigungseinrichtung (180) für die Drehblockiereinrichtung (50) angeordnet ist, insbesondere dass die Kulissenbahn (290) an einem Hohlrad (142) eine Planetengetriebes (130) der Betätigungseinrichtung (180) angeordnet ist.

10. Anhängekupplung nach einem der voranstehenden Ansprüche, **dadurch gekennzeichnet, dass** die Mehrfachblockiereinrichtung (270) einen die Stellungen des Blockierkörpers (272) erfassende Sensoreinheit (300) aufweist, insbesondere dass die Sensoreinheit (300) die Sicherungsstellung, die Ruhestellungsblockierstellung und die Zwischenstellung erfasst, insbesondere dass die Sensoreinheit (300) so ausgebildet ist, dass sie mindestens die Zwischenstellung von der Sicherungsstellung und der Ruhestellungsblockierstellung unterscheidet, insbesondere alle diese Stellungen voneinander unterscheidet, insbesondere dass die Sensoreinheit (300, 300') mindestens einen Taster (301), insbesondere zwei Taster (301a, 301b), umfasst, insbesondere dass die Sensoreinheit (300") einen Magnetfeldsensor (301"), insbesondere einen einen Verlauf eines Magnetfeldes (298) im Raum erfassenden Magnetfeldsensor (301"), umfasst.

11. Anhängekupplung nach einem der voranstehenden Ansprüche 8 bis 10, **dadurch gekennzeichnet, dass** der Kulissenfolger (292) mittels eines Übertragungselements (294) mit dem Blockierkörper (272) gekoppelt ist, insbesondere dass das Übertragungselement (294) mit einem Sensorbetätigungselement (296) gekoppelt ist.

12. Anhängekupplung nach einem der voranstehenden Ansprüche, **dadurch gekennzeichnet, dass** zwischen den Aufnahmen (60) Blockierflächen (90) verlaufen, gegen welche die Drehblockierkörper (54) anlegbar sind und von welchen ausgehend sich die Aufnahmen (60) erstrecken, dass die Drehblockiereinheiten (80) und die Aufnahmen (60) um die Schwenkachse (22) herum derart in Winkelabständen (W) voneinander angeordnet sind, dass in allen vorgesehenen relativen Schwenkstellungen zwischen Schwenklagerkörper (14) und Führungskörper (40) einschließlich der Ruhestellung (R) sowie ausgenommen die Arbeitsstellung (A) der Drehblockierkörper (54) mindestens eine der Drehblockiereinheiten (80) einer der Blockierflächen (90) gegenüberliegt und die Blockierfläche (90), insbesondere bei einer Kraftbeaufschlagung des Betätigungskörpers (52), eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in jeweils eine der Aufnahme (60) blockiert.

13. Anhängekupplung nach einem der voranstehenden Ansprüche, **dadurch gekennzeichnet, dass** die Drehblockiereinheiten (80) zur Bildung einer Drehblockierkonfiguration in Winkelabständen (W) um die Schwenkachse (22) herum angeordnet sind, dass die Aufnahmen (60) zur Bildung einer Aufnahmenkonfiguration in denselben Winkelabständen (W) um die Schwenkachse (22) angeordnet sind wie die Drehblockiereinheiten (80), dass die Drehblockierkonfiguration und die Aufnahmenkonfiguration in der Arbeitsstellung (A) deckungsgleich zueinander stehen, so dass die Drehblockierkörper (54) in die Aufnahmen (60) eingreifen können, und dass die Winkelabstände (W) zwischen den Drehblockiereinheiten (80) der Drehblockierkonfiguration und die Winkelabstände zwischen den Aufnahmen (60) der Aufnahmenkonfiguration so gewählt sind, dass die Drehblockierkonfiguration und die Aufnahmenkonfiguration nur in der Arbeitsstellung (A) deckungsgleich zueinander stehen.

14. Anhängekupplung nach einem der voranstehenden Ansprüche 12 oder 13 **dadurch gekennzeichnet, dass** die Winkelabstände (W) mindestens einer der Drehblockiereinheiten (80) zu den in einer Umlaufrichtung um die Schwenkachse (22) sowie zu den entgegengesetzt zu dieser Umlaufrichtung benachbart angeordneten Drehblockiereinheiten (80) ungleich sind und dass in der Arbeitsstellung (A) die Aufnahmen (60) derart angeordnet sind, dass der Drehblockierkörper (54) jeder der Drehblockiereinheiten (80) mit jeweils einer der Aufnahmen (60) in Eingriff bringbar sind und dass in allen für den Betrieb vorgesehenen relativen Schwenkstellungen zwischen Schwenklagenkörpers (14) und Führungskörper (40) einschließlich der Ruhestellung (R), die außerhalb der Arbeitsstellung (A) liegen, der Drehblockierkörper (54) mindestens einer der Drehblockiereinheiten (80) einer zwischen den Aufnahmen (60) verlaufenden Blockierfläche (90) gegenüberliegt und die Blockierfläche (90), insbesondere bei einer Kraftbeaufschlagung des Betätigungskörpers (52), eine Bewegung des Betätigungskörpers (52) von der Lösestellung in die Drehblockierstellung blockiert.

15. Anhängekupplung nach einem der voranstehenden Ansprüche 12 bis 14, **dadurch gekennzeichnet, dass** die Blockierflächen (90) den Drehblockierkörpern (54) der Drehblockiereinheiten (80) zugewandt verlaufen, insbesondere dass die Blockierflächen (90) in einem definierten Radius um die Schwenkachse (22) verlaufen.

16. Anhängekupplung nach einem der voranstehenden Ansprüche 12 bis 15, **dadurch gekennzeichnet, dass** die Blockierflächen (90) bis zu Öffnungsrändern (92) der Aufnahmen (60) verlaufen und in diese übergehen, insbesondere dass die Öffnungsränder (92) der Aufnahmen (60) in demselben radialen Abstand von der Schwenkachse (22) liegen wie die Blockierflächen (90).

17. Anhängekupplung nach einem der voranstehenden Ansprüche 12 bis 16, **dadurch gekennzeichnet, dass** mindestens einer der Drehblockierkörper (54) der Drehblockiereinheiten (80) bei einer Schwenkbewegung des Schwenklagerkörpers (14) in Richtung der Arbeitsstellung (A) an einer der Blockierflächen (90) anliegt, insbesondere durch Einwirkung des Betätigungskörpers (52) kraftbeaufschlagt anliegt.

18. Anhängekupplung nach einem der voranstehenden Ansprüche 12 bis 17, **dadurch gekennzeichnet, dass** die Drehblockierkörper (54) vor Erreichen der Arbeitsstellung (A) an den Blockierflächen (90) kraftbeaufschlagt anliegen und anschließend an Öffnungsrändern (92) der Aufnahmen (60) kraftbeaufschlagt anliegend in die Aufnahmen (60) eintreten.

19. Anhängekupplung nach einem der voranstehenden Ansprüche 12 bis 18, **dadurch gekennzeichnet, dass** sich die Aufnahmen (60) ausgehend von den Blockierflächen (90) in der Führungsrichtung (58), insbesondere mit mindestens einer Komponente in radialer Richtung zur Schwenkachse (22), erstrecken, insbesondere dass die Aufnahmen (60) und die Blockierflächen (90) dem Führungskörper (40) zugewandt angeordnet sind.

20. Anhängekupplung nach einem der voranstehenden Ansprüche, **dadurch gekennzeichnet, dass** der Führungskörper (40) ein Teil der fahrzeugfest angeordneten Schwenklagereinheit (20) ist, insbesondere dass in dem Führungskörper (40) alle Führungsaufnahmen (56) für die Drehblockierkörper (54) der Drehblockiereinheiten (80) angeordnet sind, und/oder dass insbesondere die Führungsrichtung (58) mit mindestens einer Komponente in radialer Richtung zur Schwenkachse (22) verläuft, und/oder dass insbesondere der Führungskörper (40) eine Führungshülse (44) mit Führungsaufnahmen (56) für die Drehblockierkörper (54) der Drehblockiereinheiten (80) aufweist und dass insbesondere die Drehblockierkörper (54) durch den sich in radialer Richtung an den Schwenklagerkörper (14) anschließenden Führungskörper (40) geführt sind, insbesondere dass zwischen dem Führungskörper (40) und dem Schwenklagerkörper (14) ein Schwenklager vorgesehen ist, insbesondere dass der Betätigungskörper (52) relativ zu dem Führungskörper (40) bewegbar ist , dass insbesondere der Betätigungskörper (52) um die Schwenkachse (22) drehbar angeordnet ist und insbesondere sich über einen Winkelbereich um die Schwenkachse (22) erstreckende und parallel zur Führungsrichtung (58) variierende Keilflächen (66) vorzugsweise kombiniert mit Rückzugsaufnahmen (62) aufweist, insbesondere dass die Aufnahmen (60) und die Blockierflächen (90) an dem Schwenklagerkörper (14) angeordnet sind.

21. Anhängekupplung nach einem der voranstehenden Ansprüche, **dadurch gekennzeichnet, dass** der Betätigungskörper (52) von dem Führungskörper (40) umschlossen ist und dass insbesondere der Schwenklagerkörper (14) den Führungskörper (40) umgreift, dass insbesondere die Drehblockierkörper (54) um den Betätigungskörper (52) herum angeordnet sind, insbesondere dass der Schwenklagerkörper (14) einen die Schwenklagereinheit (20) außenliegend umschließenden Außenkörper bildet, der relativ zu der Schwenklagereinheit (20) in Richtung der Schwenkachse (22) unverschiebbar angeordnet ist, und dass insbesondere der Schwenklagerkörper (14) einen zumindest einen Teilbereich der Drehblockiereinheit (50) außenliegend umschließenden Außenkörper bildet, der relativ zu dem Führungskörper (40) in Richtung der Schwenkachse (22) unverschiebbar angeordnet ist.

22. Anhängekupplung nach einem der voranstehenden Ansprüche, **dadurch gekennzeichnet , dass** der Betätigungskörper (52) durch einen elastischen Kraftspeicher (114) in Richtung seiner Drehblockierstellung beaufschlagt ist, dass insbesondere der Betätigungskörper (52) durch eine Betätigungseinrichtung (180) von der Drehblockierstellung in die Lösestellung bewegbar ist, dass insbesondere der Betätigungskörper (52) durch die Betätigungseinrichtung (180) entgegen der Beaufschlagung durch den Kraftspeicher (114) bewegbar ist, dass insbesondere mit der Betätigungseinrichtung (180) der Betätigungskörper (52) entgegengesetzt zur durch den elastischen Kraftspeicher (114) bewirkten Betätigungsrichtung (72) bewegbar ist.

23. Anhängekupplung nach einem der voranstehenden Ansprüche, **dadurch gekennzeichnet, dass** die Betätigungseinrichtung (180) ein Abtriebselement (142) aufweist, welches mit dem Betätigungskörper (52) gekoppelt ist, dass insbesondere das Abtriebselement (142) und der Betätigungskörper (52) über eine Mitnahmekopplungseinrichtung (156, 158) miteinander gekoppelt sind , dass insbesondere die Mitnahmekopplungseinrichtung (156, 158) einen mitnahmefreien Freigangzustand und einen Mitnahmezustand aufweist, dass insbesondere die Betätigungseinrichtung (180) für die Drehblockiereinrichtung (50) eine motorische Antriebseinheit umfasst, dass insbesondere die motorische Antriebseinheit (182) auch als Schwenkantrieb für das Ausführen der Schwenkbewegung des Schwenklagerkörpers (14) vorgesehen ist, dass insbesondere ein Abtriebselement (142) für ein Antreiben der Drehblockiereinrichtung (50) und das Abtriebselement (152) und für ein Antreiben der Schwenkbewegung des Schwenklagerkörpers (14) durch ein Umlaufgetriebe (130) gekoppelt sind.
